# EUROPEAN PATENT SPECIFICATION

(11) **EP 2 051 016 B1**
(45) Date of publication and mention of the grant of the patent: **27.09.2017**
(21) Application number: 08166422.9
(22) Date of filing: 13.10.2008
(51) Int. Cl.: F24D 11/02, F24D 19/10, F28D 20/00, F24H 9/12, F24D 17/02, F24H 4/04

(54) **Storage type hot water supply system**
Speicherartiges Heißwasserversorgungssystem
Système d'alimentation en eau chaude de type à stockage

(30) Priority: 18.10.2007 JP 2007271136; 18.10.2007 JP 2007271137; 18.10.2007 JP 2007271138
(43) Date of publication of application: 22.04.2009
(73) Proprietor: MITSUBISHI ELECTRIC CORPORATION, Chiyoda-ku Tokyo 100-8310 (JP)
(72) Inventor: Murakami, Hiroki, Tokyo 100-8310 (JP); Hiraoka, Hajime, Tokyo 100-8310 (JP); Nomoto, Sou, Tokyo 100-8310 (JP); Kajiyama, Koji, Tokyo 100-8310 (JP)
(74) Representative: Popp, Eugen

(56) References cited:
- EP-A1- 1 840 481
- CH-A- 288 341
- DE-A1- 3 403 859
- DE-U1- 29 706 808
- JP-A- 2004 101 135
- JP-A- 2006 057 916

## Description

### BACKGROUND OF THE INVENTION

### 1. Field of the Invention

The present invention relates to a storage type hot water supply system in which hot and cold water is boiled with use of a heat pump cycle and the boiled water is stored in the hot water storage tank.

### 2. Description of the Related Art

Conventionally, as a storage type hot water supply system of this type, there is known a storage type hot water supply system in which hot and cold water including low temperature water (5°C, for example) is taken out from the lower side of a hot water storage tank, high temperature water (90°C, for example) obtained by boiling hot and cold water with use of a heat pump cycle is returned to the hot water storage tank through the upper side portion of the hot water storage tank, and intermediate temperature water generated through temperature diffusion of the hot and cold water in the hot water storage tank is taken out to the exterior with use of a water intake tube provided while vertically extended in the hot water storage tank so as to be used for the hot water supply (refer to JP 2006-57916 A).

In the hot water supply system of this type, the water intake tube has a double tube structure in which an outer cylinder or an inner cylinder is rotatable, water intake holes capable of communicating with each other at predetermined rotating positions are provided at different heights in a circumference of each of the outer cylinder and the inner cylinder, and an outer cylinder or an inner cylinder is rotated so that the intermediate temperature water stored to the predetermined height in the hot water storage tank is taken out.

In the storage type hot water supply system as described above, however, the intermediate temperature water can be taken out only from a single portion at a predetermined height.

Thus, when the temperature of the intermediate temperature water in the hot water storage tank becomes lower than the required hot water supply temperature (50°C, for example), the intermediate temperature water cannot be used as water for hot water supply even though being taken out from the hot water storage tank, and is left as it is in the sealed hot water storage tank. Therefore, the proportion of the intermediate temperature water of the temperature lower than the required hot water supply temperature is large in the hot water storage tank. Accordingly, the proportion of the high temperature water is decreased, and hence there arises a problem of lacking high temperature water.

Further, in order to heat the intermediate temperature water to approximately 90°C with use of the heat pump for the purpose of overcoming the lack of high temperature water, there is involved a problem in that a coefficient of performance (COP) obtained by heating amount/power consumption amount is low because the temperature difference is small when compared with the case of heating the low temperature water.

JP 2004 101135 is considered to be the closest prior art and discusses a water supply system of the preamble of claim 1.

### SUMMARY OF THE INVENTION

It is therefore an object of the present invention to provide, for solving the above-mentioned problems, a storage type hot water supply system having high COP and capable of overcoming the lack of high temperature water while intermediate temperature water generated in the hot water storage tank and to be used as water for hot water supply is taken out to the exterior without being stored in the hot water storage tank even when the intermediate temperature water is of a temperature lower than the required hot water supply temperature.

Bearing the above object in mind, according to the present invention, there is provided a storage type hot water supply system according to claim 1.

According to the storage type hot water supply system of the present invention, even when the temperature of the intermediate temperature water in the hot water storage tank becomes lower than the required hot water supply temperature, the intermediate temperature water can be taken out from the hot water storage tank so as to be used as water for hot water supply. Therefore, the proportion of the intermediate temperature water occupying the hot water storage tank can be substantially reduced, whereby it is possible to overcome the lack of high temperature water in the hot water storage tank and to secure high COP.

### BRIEF DESCRIPTION OF THE DRAWINGS

FIG. 1 is a structural diagram of a storage type hot water supply system according to Embodiment 1 of the present invention.
FIG. 2 is an overall perspective view of the water intake tube in FIG.1.
FIG. 3 is a graph showing a temporal change of the temperature of hot and cold water in the case where the inventors of the present invention take out the hot and cold water in the hot water storage tank from the water intake tube in the storage type hot water supply system described in FIG. 1.
FIG. 4 is an overall perspective view of the transformation example of the water intake tube in FIG 1.
FIG. 5 is another overall perspective view of the transformation example of the water intake tube in FIG 1.
FIG. 6 is another overall perspective view of the transformation example of the water intake tube in FIG 1.
FIG. 7 is another overall perspective view of the transformation example of the water intake tube in FIG 1.
FIG. 8 is a structural diagram of the transformation example of a storage type hot water supply system in FIG. 1.
FIG. 9 is an overall perspective view of the water intake tube in FIG.8.
FIG. 10 is a structural diagram of a storage type hot water supply system according to Embodiment 2 of the present invention.
FIG. 11 is an overall perspective view of the water intake tube in FIG.10.
FIG.12 is a main cross section in FIG. 10.
FIG.13 is a structural diagram of the transformation example of a storage type hot water supply system in FIG.10.
FIG. 14 is another overall perspective view of the transformation example of the water intake tube in FIG 13.
FIG. 15 is another overall perspective view of the transformation example of the water intake tube in FIG 13.
FIG. 16 is a structural diagram of the transformation example of a storage type hot water supply system in FIG. 13.
FIG. 17 is a structural diagram of a storage type hot water supply system according to Embodiment 3 of the present invention.
FIG. 18 is an overall perspective view of the water intake tube in FIG.17.
FIG. 19 is a main cross section in FIG. 19.
FIG. 20 a structural diagram of the transformation example of a storage type hot water supply system in FIG. 17.
FIG. 21 is an overall perspective view of the transformation example of the water intake tube in FIG 20.
FIG. 22 is a structural diagram of a storage type hot water supply system according to Embodiment 4 of the present invention.
FIG. 23 is an overall perspective view of the water intake tube in FIG.22.
FIG. 24 is an overall perspective view of the transformation example of the water intake tube in FIG 22.
FIG. 25 is an overall perspective view of the transformation example of the water intake tube in FIG 17.
FIG. 26 is a structural diagram of a storage type hot water supply system according to Embodiment 5 of the present invention.
FIG. 27 is an overall perspective view of a water intake tube of a storage type hot water supply system according to Embodiment 5 of the present invention.
FIG. 28 is an overall perspective view of an outer cylinder of a water intake tube of a storage type hot water supply system according to Embodiment 5 of the present invention.
FIG. 29 is an overall perspective view of an inner cylinder of a water intake tube of a storage type hot water supply system according to Embodiment 5 of the present invention.
FIG. 30 is a cross section of a water intake tube of a storage type hot water supply system according to Embodiment 5 of the present invention.
FIG. 31 is an overall perspective view of the transformation example of a water intake tube of a storage type hot water supply system according to Embodiment 5 of the present invention.
FIG. 32 is another overall perspective view of the transformation example of a water intake tube of a storage type hot water supply system according to Embodiment 5 of the present invention.
FIG. 33 is another overall perspective view of the transformation example of a water intake tube of a storage type hot water supply system according to Embodiment 5 of the present invention.
FIG. 34 is a cross section of a water intake tube of a storage type hot water supply system according to Embodiment 6 of the present invention.
FIG. 35 is an overall perspective view of an outer cylinder of a water intake tube of a storage type hot water supply system according to Embodiment 6 of the present invention.
FIG. 36 is an overall perspective view of an inner cylinder of a water intake tube of a storage type hot water supply system according to Embodiment 6 of the present invention.
FIG. 37 is a graph showing a temporal change of the temperature of hot and cold water, which is detected with use of the hot water temperature sensor of the storage type hot water supply system according to Embodiment 6 of the present invention.
FIG. 38 is an overall perspective view of the transformation example of a water intake tube of a storage type hot water supply system according to Embodiment 6 of the present invention.
FIG. 39 is an overall perspective view of the transformation example of an outer cylinder of a water intake tube of a storage type hot water supply system according to Embodiment 6 of the present invention.
FIG. 40 is an overall perspective view of the transformation example of an inner cylinder of a water intake tube of a storage type hot water supply system according to Embodiment 6 of the present invention.
FIG. 41 is an overall perspective view of a water intake tube of a storage type hot water supply system according to Embodiment 7 of the present invention.
FIG. 42 is an overall perspective view of an outer cylinder of a water intake tube of a storage type hot water supply system according to Embodiment 7 of the present invention.
FIG. 43 is an overall perspective view of an inner cylinder of a water intake tube of a storage type hot water supply system according to Embodiment 7 of the present invention.
FIG. 44 is an overall perspective view of the transformation example of a water intake tube of a storage type hot water supply system according to Embodiment 7 of the present invention.
FIG. 45 is an overall perspective view of the transformation example of an inner cylinder of a water intake tube of a storage type hot water supply system according to Embodiment 7 of the present invention.
FIG. 46 is an overall perspective view of a water intake tube of a storage type hot water supply system according to Embodiment 8 of the present invention.
FIG. 47 is an overall perspective view of an outer cylinder of a water intake tube of a storage type hot water supply system according to Embodiment 8 of the present invention.
FIG. 48 is an overall perspective view of an inner cylinder of a water intake tube of a storage type hot water supply system according to Embodiment 8 of the present invention.
FIG. 49 is an overall perspective view of the transformation example of a water intake tube of a storage type hot water supply system according to Embodiment 8 of the present invention.
FIG. 50 is an overall perspective view of the transformation example of an inner cylinder of a water intake tube of a storage type hot water supply system according to Embodiment 8 of the present invention.
FIG. 51 is a structural diagram of a storage type hot water supply system according to Embodiment 9 of the present invention.
FIG. 52 is an overall perspective view of a water intake tube of a storage type hot water supply system according to Embodiment 9 of the present invention.
FIG. 53 is an overall perspective view of an outer cylinder of a water intake tube of a storage type hot water supply system according to Embodiment 9 of the present invention.
FIG. 54 is an overall perspective view of an inner cylinder of a water intake tube of a storage type hot water supply system according to Embodiment 9 of the present invention.
FIG. 55 is a perspective view illustrating a case where the inner cylinder is moved downward in the vertical direction in a water intake tube of a storage type hot water supply system according to Embodiment 9 of the present invention.
FIG. 56 is a perspective view illustrating a case where the inner cylinder is moved upward in the vertical direction in a water intake tube of a storage type hot water supply system according to Embodiment 9 of the present invention.
FIG. 57 is a structural diagram of a storage type hot water supply system according to Embodiment 10 of the present invention.
FIG. 58 is a perspective view of an outer cylinder of the intermediate temperature water passing pipe of a storage type hot water supply system according to Embodiment 10 of the present invention.
FIG. 59 is a perspective view of an inner cylinder of the intermediate temperature water passing pipe of a storage type hot water supply system according to Embodiment 10 of the present invention.
FIG. 60 is a perspective view illustrating the intermediate temperature water passing pipe of a storage type hot water supply system according to Embodiment 10 of the present invention.
FIG. 61 is a cross section illustrating the intermediate temperature water passing pipe of a storage type hot water supply system according to Embodiment 10 of the present invention.
FIG. 62 is an operational view illustrating a case where the storage type hot water supply system according to Embodiment 10 of the present invention performs only the hot water supply operation.
FIG. 63 is an operational view illustrating an application example of the case where the storage type hot water supply system according to Embodiment 10 of the present invention performs only the hot water supply operation.
FIG. 64 is a perspective view illustrating mode of operation of the intermediate temperature water passing pipe of a storage type hot water supply system according to Embodiment 10 of the present invention.
FIG. 65 is an operational view illustrating another application example of the case where the storage type hot water supply system according to Embodiment 10 of the present invention performs only the hot water supply operation.
FIG. 66 is a perspective view illustrating the transformation example of the intermediate temperature water passing pipe of a storage type hot water supply system according to Embodiment 10 of the present invention.
FIG. 67 is an operational view illustrating another application example of the case where the storage type hot water supply system according to Embodiment 10 of the present invention performs only the hot water supply operation.
FIG. 68 is a perspective view illustrating another transformation example of the intermediate temperature water passing pipe of a storage type hot water supply system according to Embodiment 10 of the present invention.
FIG. 69 is an operational view illustrating another application example of the case where the storage type hot water supply system according to Embodiment 10 of the present invention performs only the hot water supply operation.
FIG. 70 is an operational view illustrating an application example of the case where the storage type hot water supply system according to Embodiment 10 of the present invention performs only the boiling-up operation.
FIG.71 is an operational view illustrating the case where the storage type hot water supply system according to Embodiment 10 of the present invention performs only the heating operation.
FIG. 72 is an operational view illustrating the case where the storage type hot water supply system according to Embodiment 10 of the present invention performs a hot water supply operation with higher priority and an additional boiling-up operation.
FIG. 73 is an operational view illustrating the case where the storage type hot water supply system according to Embodiment 10 of the present invention performs a hot water supply operation with higher priority and an additional heating operation.
FIG. 74 is an operational view illustrating the case where the storage type hot water supply system according to Embodiment 10 of the present invention performs a boiling-up operation with higher priority and an additional hot water supply operation.
FIG. 75 is an operational view illustrating the case where the storage type hot water supply system according to Embodiment 10 of the present invention performs a boiling-up operation with higher priority and an additional heating operation.
FIG. 76 is an operational view illustrating the case where the storage type hot water supply system according to Embodiment 10 of the present invention performs a heating operation with higher priority and an additional hot water supply operation.
FIG. 77 is an operational view illustrating the case where the storage type hot water supply system according to Embodiment 10 of the present invention performs a heating operation with higher priority and an additional a boiling-up operation.
FIG. 78 is an operational view illustrating the case where the storage type hot water supply system according to Embodiment 10 of the present invention performs with priority on both a hot water supply operation and a boiling-up operation.
FIG. 79 is an operational view illustrating the case where the storage type hot water supply system according to Embodiment 10 of the present invention performs with priority on both a hot water supply operation and a heating operation.
FIG. 80 is an operational view illustrating the case where the storage type hot water supply system according to Embodiment 10 of the present invention performs with priority on both a boiling-up operation and a heating operation.
FIG. 81 is an operational view illustrating the case where the storage type hot water supply system according to Embodiment 10 of the present invention performs a hot water supply operation with higher priority and an additional a boiling-up operation.
FIG. 82 is an operational view illustrating the case where the storage type hot water supply system according to Embodiment 10 of the present invention performs a boiling-up operation with higher priority and an additional hot water supply operation and an heating operation.
FIG. 83 is an operational view illustrating the case where the storage type hot water supply system according to Embodiment 10 of the present invention performs a heating operation with higher priority and an additional hot water supply operation and a boiling-up operation.
FIG. 84 is an operational view illustrating the case where the storage type hot water supply system according to Embodiment 10 of the present invention performs both a hot water supply operation and a boiling-up operation with higher priority and an additional heating operation.
FIG. 85 is an operational view illustrating the case where the storage type hot water supply system according to Embodiment 10 of the present invention performs both a hot water supply operation and a heating operation with higher priority and an additional boiling-up operation.
FIG. 86 is an operational view illustrating the case where the storage type hot water supply system according to Embodiment 10 of the present invention performs both a boiling-up operation and a heating operation with higher priority and an additional hot water supply operation.
FIG. 87 is an operational view illustrating the case where the storage type hot water supply system according to Embodiment 10 of the present invention performs with priority on all a hot water supply operation, a boiling-up operation, and a heating operation.
FIG. 88 is an operational view illustrating the case where connections for performing boiling -up operation and heating operation of the storage type hot water supply system according to Embodiment 10 are upside down.
FIG. 89 is an operational view illustrating the case where both connections for performing boiling -up operation and heating operation of the storage type hot water supply system according to Embodiment 10 are on lower side.
FIG. 90 is an operational view illustrating an application example of the storage type hot water supply system according to Embodiment 10 of the present invention.
FIG. 91 is an operational view illustrating an application example of the storage type hot water supply system according to Embodiment 10 of the present invention.
FIG. 92 is a perspective view illustrating a transformation example of an outer cylinder of the intermediate temperature water passing pipe of a storage type hot water supply system according to Embodiment 10 of the present invention.
FIG. 93 is a perspective view illustrating a transformation example of an inner cylinder of the intermediate temperature water passing pipe of a storage type hot water supply system according to Embodiment 10 of the present invention.
FIG. 94 is a perspective view illustrating a transformation example of the intermediate temperature water passing pipe of a storage type hot water supply system according to Embodiment 10 of the present invention.
FIG. 95 is a structural diagram of a storage type hot water supply system according to Embodiment 11 of the present invention.
FIG. 96 is a structural diagram of a storage type hot water supply system according to Embodiment 12 of the present invention.
FIG. 97 is a perspective view illustrating a pipe body of a storage type hot water supply system according to Embodiment 12 of the present invention.
FIG. 98 is an operational view illustrating an application example of the storage type hot water supply system according to Embodiment 10 of the present invention.
FIG. 99 is an operational view illustrating another application example of the storage type hot water supply system according to Embodiment 10 of the present invention.
FIG. 100 is a perspective view illustrating another transformation example of the intermediate temperature water passing pipe of a storage type hot water supply system according to Embodiment 10 of the present invention.
FIG. 101 is a perspective view illustrating another transformation example of the intermediate temperature water passing pipe of a storage type hot water supply system according to Embodiment 10 of the present invention.
FIG. 102 is a perspective view illustrating another transformation example of the intermediate temperature water passing pipe of a storage type hot water supply system according to Embodiment 10 of the present invention.

### DESCRIPTION OF THE PREFERED EMBODIMENTS

In the following, embodiments of the present invention are described with reference to the drawings. In the drawings, the same or corresponding components and portions are described while being denoted by the same reference symbols.

### Embodiment 1

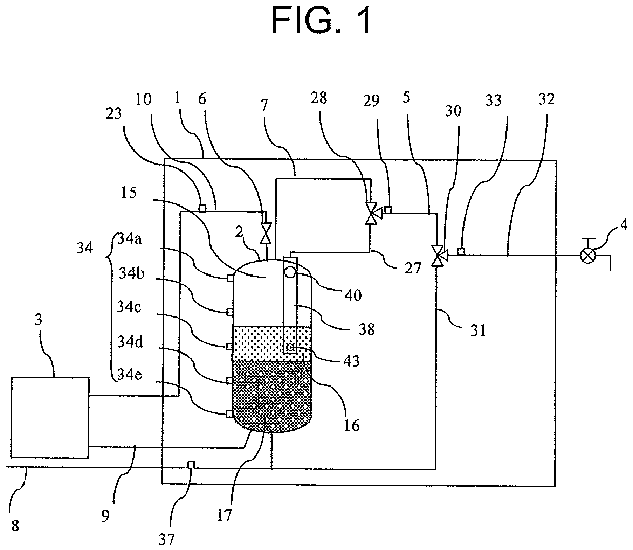

FIG. 1 is a structural diagram of a storage type hot water supply system according to Embodiment 1 of the present invention.

The storage type hot water supply system includes a hot water storage tank unit 1 having a hot water storage tank 2 for storing hot and cold water, a heat pump unit 3 as a heater for heating the hot and cold water in the hot water storage tank 2, and a hot water tap 4 used in the kitchen, the restroom, and the like.

A heat pump refrigerant circuit of the heat pump unit 3 includes a compressor, a refrigerant-water heat exchanger as a condenser, an electronic expansion valve, and an evaporator of forced air-cooled type.

An operation of one cycle is performed in which carbon dioxide as a natural refrigerant compressed in the compressor is subjected to heat radiation in the refrigerant-water heat exchanger so as to be liquidized, subjected to decompressive expansion in the electronic expansion valve, vaporized in the evaporator owing to atmospheric heat, and then flows into the compressor again.

A low temperature water take-out pipe 9 connects the bottom of the hot water storage tank 2 and the heat pump unit 3 to each other. Further, a high temperature water returning pipe 10 connects the top of the hot water storage tank 2 and the heat pump unit 3 to each other. The high temperature water returning pipe 10 is provided with a temperature sensor 23 and a high temperature water inflow valve 6.

In the operation of one cycle, low temperature water (5°C, for example) is heated to obtain high temperature water (90°C, for example) through an intermediation of the refrigerant-water heat exchanger in the heat pump refrigerant circuit.

In the hot water storage tank 2, there is provided a cylindrical water intake tube 38 which is extended in the upper and lower direction (vertical direction) and has a sealed bottom portion. On the outer peripheral surface of the hot water storage tank 2, there is provided a hot water temperature sensor 34 for detecting the temperature in the upper and lower direction of the hot and cold water in the hot water storage tank 2. In this embodiment, five hot water temperature sensors 34a, 34b, 34c, 34d, and 34e are attached at predetermined intervals in the upper and lower direction.

Further, one end portion of a water flow pipe 27 is connected to the upper end portion of the water intake tube 38 as a water intake tube body. The other end portion of the water flow pipe 27 is connected to the first valve portion of a high temperature water mixing three-way valve 28. The second valve portion of the high temperature water mixing three-way valve 28 is connected to one end portion of a hot water outlet pipe 7. The other end portion of the hot water outlet pipe 7 is connected to the upper portion of the hot water storage tank 2, and the high temperature water in the hot water storage tank 2 flows out to the exterior through the hot water outlet pipe 7. The third valve portion of the high temperature water mixing three-way valve 28 is connected to one end portion of a first downstream valve pipe 5. A hot and cold water temperature sensor 29 for detecting a temperature of hot and cold water which flows through the first downstream valve pipe 5 is attached to the first downstream valve pipe 5.

The other end portion of the first downstream valve pipe 5 is connected to the first valve portion of a low temperature water mixing three-way valve 30. The second valve portion of the low temperature water mixing three-way valve 30 is connected to a second downstream valve pipe 32. The hot water supply temperature sensor 33 is attached near the low temperature water mixing three-way valve 30 of the second downstream valve pipe 32, and the hot water tap 4 is attached downstream of the second downstream valve pipe 32. The third valve portion of the low temperature water mixing three-way valve 30 is connected to the hot water supply pipe 31.

The hot water supply pipe 31 is connected to a water supply pipe 8. A pressure pump (not shown) is mounted to the water supply pipe 8, and low temperature water is pumped into the hot water storage tank 2 and also flows through the hot water supply pipe 31 with the driving of the pressure pump. The temperature of the low temperature water is detected with use of a supplied water temperature sensor 37 attached to the water supply pipe 8.

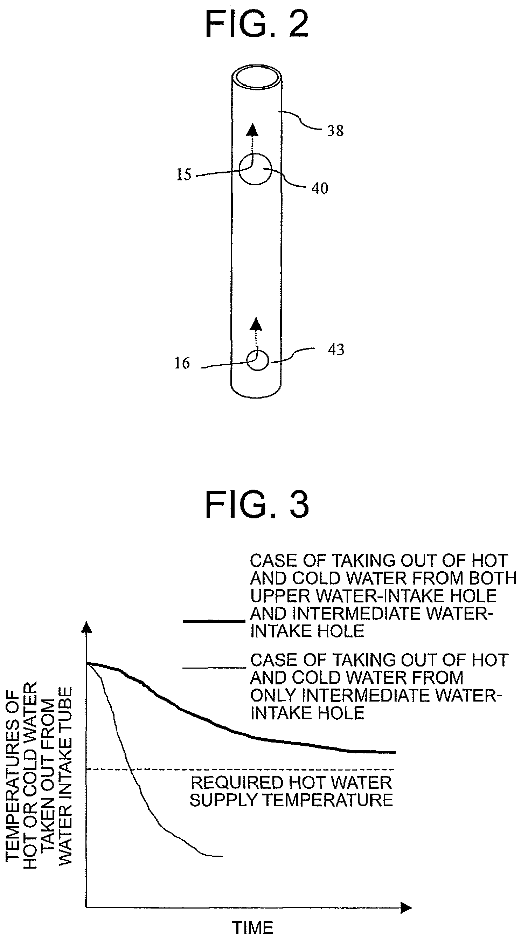

FIG. 2 is an overall perspective view of the water intake tube 38 as a water intake tube body illustrated in FIG. 1.

The water intake tube 38 as a water intake tube body is provided with an upper water-intake hole 40 near the top of the hot water storage tank 2 storing high temperature water 15, and with an intermediate water-intake hole 43 formed lower than the upper water-intake hole 40. The intermediate water-intake hole 43 is provided at a height at which intermediate temperature water 16 is easily stored in the hot water storage tank 2. Further, the opening area of the upper water-intake hole 40 is larger than the opening area of the intermediate water-intake hole 43.

Next, an operation of the storage type hot water supply system having the above-mentioned structure is described.

Hot and cold water is filled in the hot water storage tank 2, and the high temperature water 15, the intermediate temperature water 16, and low temperature water 17 are stored in the stated order from the top.

In this embodiment, for example, the temperature of the high temperature water 15 is approximately 90°C which is obtained through heating in the heat pump unit 3, the temperature of the low temperature water 17 is approximately 5°C which is obtained from the hot and cold water flowing through the water supply pipe 8. The intermediate temperature water 16 is stored with a temperature gradient due to thermal diffusion from the high temperature water 15.

In this case, the temperature difference between the intermediate temperature water 16 and the high temperature water to be obtained is small when compared with the case of heating the low temperature water 17. Accordingly, the COP of the heat pump unit 3 is lower when compared with the case of heating the hot and cold water. Therefore, in order to secure high COP, it is necessary to feed the intermediate temperature water 16 to the heat pump unit 3 so as to be used as water for hot water supply instead of being heated therein.

When a user of supplied hot water sets the temperature of the water to the required hot water supply temperature, for example, to 50°C, a determination is made as to whether intermediate temperature water exists at the position of the intermediate water-intake hole 43 with use of the hot water temperature sensors 34a to 34e provided on the side surface of the hot water storage tank 2 in the height direction thereof. In this case, it is assumed that the intermediate water-intake hole 43 and the hot water temperature sensor 34c are equal in height to each other.

For example, when the hot water temperature sensors 34b, 34c, and 34d detect 90°C, 40°C, and 5°C, respectively, it can be determined that the intermediate temperature water exists near the height of the hot water temperature sensor 34c because the temperature detected by the hot water temperature sensor 34c is higher than 5°C and lower than 90°C. Further, when the multiple hot water temperature sensors 34 detect the temperature higher than 5°C and lower than 90°C, it may be determined that the intermediate temperature water exists at the position of one of the hot water temperature sensors 34, which indicates a temperature approximate to the required hot water supply temperature. Still further, when the hot water temperature sensors 34c and 34d detect 90°C and 5°C, respectively, and when none of the other hot water temperature sensors 34 detects the temperature higher than 5°C and lower than 90°C, it may be determined that the intermediate temperature water exists at a midpoint of the hot water temperature sensors 34c and 34d between which the temperature difference is largest.

When it is determined that the intermediate temperature water 16 of 40°C exists at the height of the hot water temperature sensor 34c, the intermediate temperature water 16 is taken out from the intermediate water-intake hole 43 with use of the water intake tube 38. In this case, the upper water-intake hole 40 is provided on the upper side of the tank, and hence the high temperature water 15 is taken out from the upper water-intake hole 40 simultaneously therewith.

FIG. 3 is a graph showing a temporal change of the temperature of hot and cold water in the case where the inventors of the present invention take out the hot and cold water in the hot water storage tank 2 with use of the water intake tube 38.

The abscissa axis indicates the time elapsed from the start of taking-out of hot and cold water through the water intake tube 38, and the ordinate axis indicates the temperature change of hot and cold water taken out through the water intake tube 38. The thick line in the graph indicates the correlation between the elapsed time and the temperature change in the case of this embodiment where hot and cold water is taken out from the upper water-intake hole 40 and the intermediate water-intake hole 43, and the thin line in the graph indicates the correlation therebetween in the case where hot and cold water is taken out from only the intermediate water-intake hole 43.

The temperature distribution in the height direction of the intermediate temperature water 16 widely ranges from approximately 5C° to 90C°. Further, in some operating methods for the storage type hot water supply system, the amount of the intermediate temperature water 16 may be small with respect to the total amount of hot and cold water stored in the tank. In this context, as shown in FIG. 3, when hot and cold water is taken out from only the intermediate water-intake hole 43, the low temperature water 17 is resupplied through the water supply pipe 8 by an amount of hot and cold water having flown out from the hot water storage tank 2. Then, the low temperature water 17 reaches the water level of the intermediate water-intake hole 43, and hence the temperature of the hot and cold water is abruptly decreased in accordance with the passage of time. As a matter of course, the temperature of the hot and cold water thus taken out immediately becomes lower than 50°C set as a required hot water supply temperature.

Meanwhile, the temperature of the high temperature water 15 is substantially fixed at 90°C set as a temperature obtained by heating. When the hot and cold water is taken out from the upper water-intake hole 40 and the intermediate water-intake hole 43, the intermediate temperature water 16 involving wide range of temperature change and the high temperature water 15 fixed at a substantially constant temperature are simultaneously taken out. As a result, the temperature decrease of the hot and cold water becomes general, and hence the time required for reaching the required hot water supply temperature is shortened.

Note that, whether or not the temperature of the hot and cold water thus taken out becomes lower than the required hot water supply temperature depends on the temperatures of the high temperature water 15 and the intermediate temperature water 16 and the flow rate ratio therebetween and on the required hot water supply temperature. However, through adjustment of the opening area ratio between the upper water-intake hole 40 and the intermediate water-intake hole 43, the temperature of the hot and cold water to be taken out can be also set to be equal to or higher than the required hot water supply temperature.

In this embodiment, the temperature of the hot and cold water taken out through the water intake tube 38 is gradually decreased to the required hot water supply temperature. When the temperature of the hot and cold water is higher than 50°C as a required hot water supply temperature, the low temperature water mixing three-way valve 30 is activated in response to the signal from the hot water supply temperature sensor 33. As a result, the hot and cold water taken out through the water intake tube 38 and the low temperature water supplied from the hot water supply pipe 31 are mixed with each other, whereby hot and cold water at the required hot water supply temperature is supplied within a short period of time as water for hot water supply via the second downstream valve pipe 32 and the hot water tap 4.

Meanwhile, when it is determined that the low temperature water exists instead of the intermediate temperature water 16 at the position of the hot water temperature sensor 34c arranged at the same height as that of the intermediate water-intake hole 43, that is, the position of the intermediate water-intake hole 43 of the water intake tube 38, the high temperature water mixing three-way valve 28 is activated so that the high temperature water 15 is taken out through the hot water outlet pipe 7 instead of the water intake tube 38. The high temperature water 15 and the low temperature water supplied from the hot water supply pipe 31 are mixed with each other in the low temperature water mixing three-way valve 30 so as to be supplied as water for hot water supply via the second downstream valve pipe 32 and the hot water tap 4.

The control of the temperature of hot water to be supplied is conducted through the adjustment of the opening areas of the first valve portion and the third valve portion of the low temperature water mixing three-way valve 30 conducted in response to the signal from the hot water supply temperature sensor 33.

Note that, when the high temperature water 15 is determined to exist at the position of the intermediate water-intake hole 43 of the water intake tube 38 from the hot water temperature sensor 34c, the high temperature water 15 is taken out through the water intake tube 38 instead of the hot water outlet pipe 7,

Into the hot water storage tank 2, the low temperature water 17 is supplied from the lower side of the hot water storage tank 2 through the water supply pipe 8, the amount of which corresponds to an amount of the hot and cold water taken out from the hot water storage tank 2.

Further, when the amount of the high temperature water 15 in the hot water storage tank 2 is decreased, the low temperature water 17 is taken out via the low temperature water intake pipe 9 from the lower side of the hot water storage tank 2. The high temperature water heated in the heat pump unit 3 is returned from the upper side of the hot water storage tank 2 via the high temperature water returning pipe 10 and the high temperature water inflow valve 6.

In this case, carbon dioxide as a natural refrigerant is used in the heat pump unit 3. Through an intermediation of the refrigerant-water heat exchanger provided in the heat pump refrigerant circuit, low temperature water can be heated to obtain high temperature water of approximately 90°C. With use of supercritical carbon dioxide in the heat pump cycle, the low temperature water can be heated to obtain the high temperature water with high energy efficiency.

As described above, by providing in the hot water storage tank 2 the water intake tube 38 having the upper water-intake hole 40 and the intermediate water-intake hole 43, the temperature change of hot and cold water taken out from the hot water storage tank 2 can be reduced in accordance with the passage of time when the high temperature water 15 and the intermediate temperature water 16 are taken out from the hot water storage tank 2. As a result, the temperature control with use of the low temperature water mixing three-way valve 30 for control of the required hot water supply temperature is facilitated.

Further, even when the temperature of the intermediate temperature water 16 is lower than the required hot water supply temperature, the intermediate temperature water 16 is taken out simultaneously with the high temperature water 15 so as to be supplied as water for hot water supply. Thus, even with the increase in proportion of the intermediate temperature water 16 occupying the sealed hot water storage tank, the proportion of the high temperature water is not decreased in accordance therewith, the lack of the high temperature water 15 in the hot water storage tank 2 is overcome, and a high COP is secured in the heat pump unit 3.

Note that, in this embodiment, there is described the case where the temperature of hot and cold water taken out from the hot water storage tank 2 with use of the water intake tube 38 is set to be higher than the required hot water supply temperature. However, it is also possible to obtain water for hot water supply at a temperature higher than the required hot water supply temperature when the high temperature water mixing three-way valve 28 is activated so as to mix, with use of the water intake tube 38 and the hot water outlet pipe 7, the hot and cold water taken out through the water intake tube 38 and the high temperature water taken out through the hot water outlet pipe 7 with each other at the high temperature water mixing three-way valve 28.

In this case, even when being lower than the required hot water supply temperature, the temperature of the hot and cold water taken out through the water intake tube 38 can be risen to a temperature higher than the required hot water supply temperature, owing to the high temperature water mixing three-way valve 28 activated so as to increase the amount of the high temperature water 15 through the hot water outlet pipe 7.

Therefore, almost all the intermediate temperature water 16 in the hot water storage tank 2 can be taken out for being used as water for hot water supply, the lack of the high temperature water 15 in the hot water storage tank 2 is further overcome, and a higher COP is secured in the heat pump unit 3.

Further, the control of each of the flow rate ratios between the hot and cold water taken out from the hot water storage tank 2 and the high temperature water or the low temperature water is described which is conducted with use of the three-way valves including the high temperature water mixing three-way valve 28 or the low temperature water mixing three-way valve 30. However, two valves may be used instead of the three-way valve so as to control the flow rate ratios.

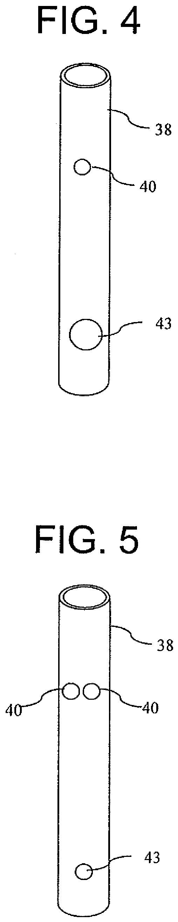

Further, in this embodiment, there is described the case where the opening area of the upper water-intake hole 40 is larger than the opening area of the intermediate water-intake hole 43. However, the opening areas of the upper water-intake hole 40 and the intermediate water-intake hole 43 may be equal to each other. Further, as illustrated in FIG. 4, the opening area of the intermediate water-intake hole 43 may be larger than the opening area of the upper water-intake hole 40.

In this case, the temperature of the hot and cold water taken out from the water intake tube 38 is more likely to become lower than the required hot water supply temperature. However, the temperature change of the hot and cold water taken out through the water intake tube 38 can be reduced when compared with the case of taking out only the intermediate temperature water 16, thereby facilitating the temperature control of water for hot water supply.

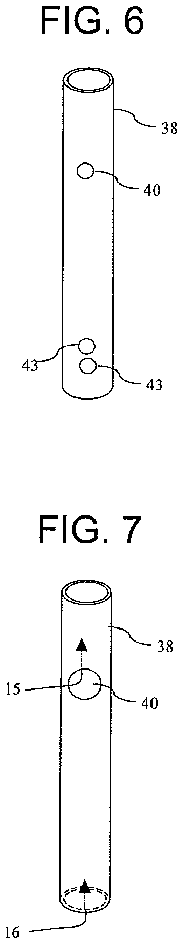

Further, as illustrated in FIGS. 5 and 6, the numbers of the upper water-intake holes 40 and the intermediate water-intake holes 43 may be changed so as to control the proportion of the flow rate between the high temperature water 15 and the intermediate temperature water 16 which are taken out through the water intake tube 38. Further, as illustrated in FIG. 7, the lower end portion of the water intake tube 38 may not be subjected to closing so as to use the lower end surface as the intermediate water-intake hole 43 from which the intermediate temperature water 16 is taken out. In this case, it is possible to omit closing of the lower end surface of the water intake tube and hole drilling for forming the intermediate water-intake hole 43, and to thereby achieve cost reduction.

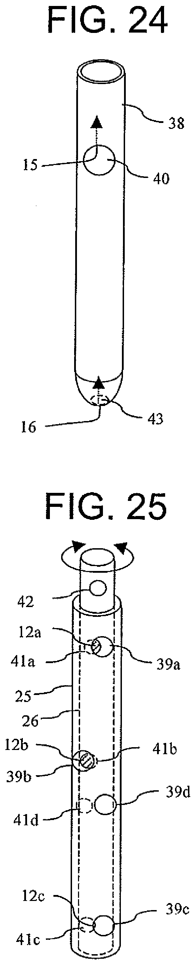

Still further, as illustrated in FIG. 24, with the lower end portion subjected to closing working, the opening area of the intermediate water-intake hole 43 can be easily adjusted.

Further, as illustrated in FIG. 1, the five hot water temperature sensors 34a, 34b, 34c, 34d, and 34e are provided on the circumferential side surface of the hot water storage tank 2. However, with the provision of more hot water temperature sensors 34, the position and temperature of the intermediate temperature water 16 can be more accurately detected. For example, it is effective to mount in the height direction the hot water temperature sensors 34 at intervals each of which is equal to or smaller than 100 mm and which are separated from each other with respect to the position of the center of the intermediate water-intake hole 43, the length of interval being determined with reference to the layer thickness of approximately 100 mm of the main intermediate temperature water.

Further, the hot water temperature sensors 34a, 34b, 34c, 34d, and 34e may be arranged at equal intervals in the height direction, or may be arranged at random in the height direction.

In addition, the detection points of the three hot water temperature sensors 34b, 34c, and 34d are used so as to determine the position of the intermediate temperature water 16. However, with use of more detection points, the position of the intermediate temperature water 16 can be more accurately determined. Further, the position of the intermediate temperature water may be determined with use of a single temperature sensor while involving deterioration in the detection accuracy. In this case, the control for comparing a large number of detection points with each other is omitted, and hence it is possible to achieve simplification of the control and increase in processing speed.

Further, the temperature of the wall surface detected with use of each of the hot water temperature sensors 34 mounted to the outer peripheral surface (side surface) of the hot water storage tank 2 is described as a temperature of hot and cold water in the hot water storage tank 2. However, the hot water temperature sensors 34 may be mounted to the inner peripheral surface (side surface) of the hot water storage tank 2 so as to directly detect the temperature of the hot and cold water in the hot water storage tank 2.

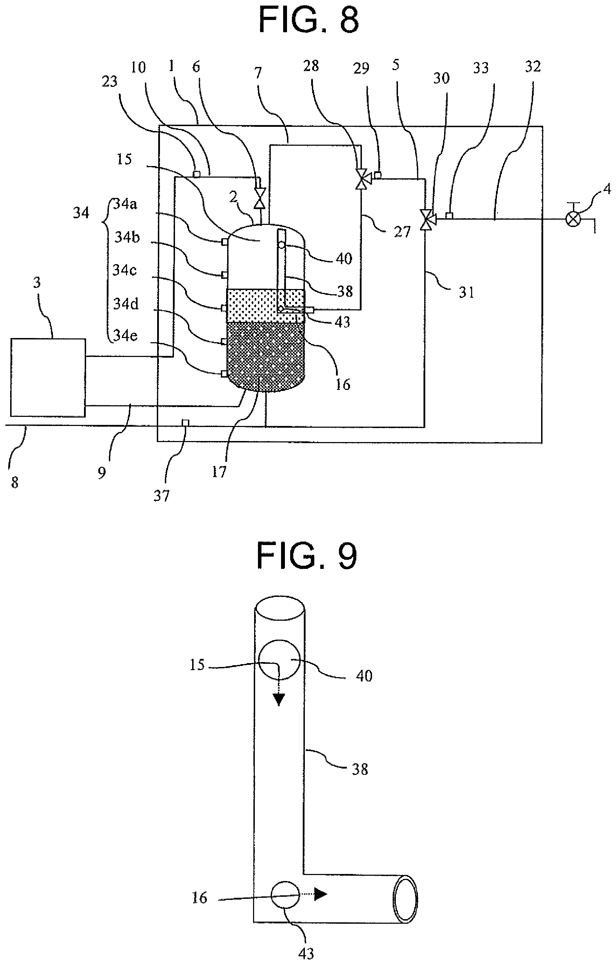

Further, as illustrated in FIGS. 8 and 9, a water intake tube 38 having an L-shape may be used.

The water intake tube 38 protrudes at the leading end portion thereof from the side wall of the hot water storage tank 2, and is provided with the upper water-intake hole 40 formed at the position corresponding to the upper side of the hot water storage tank 2, and with the intermediate water-intake hole 43 formed at the position corresponding to the middle of the hot water storage tank 2. It is passible to take out the water intake tube 38 from the side wall of the hot water storage tank 2 with use of the water intake tube 38, and to thereby increase the degree of design freedom.

### Embodiment 2

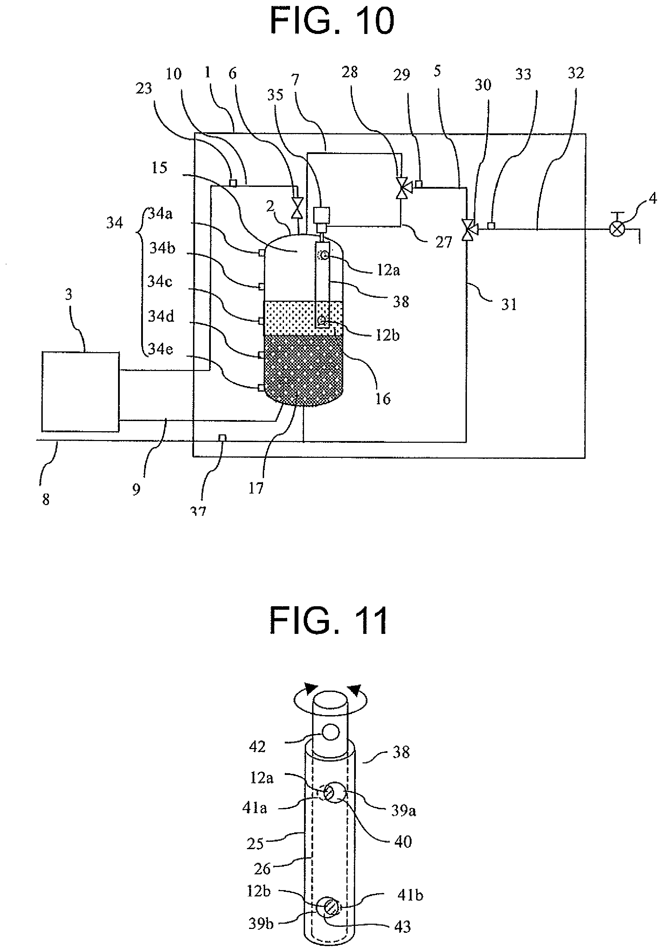

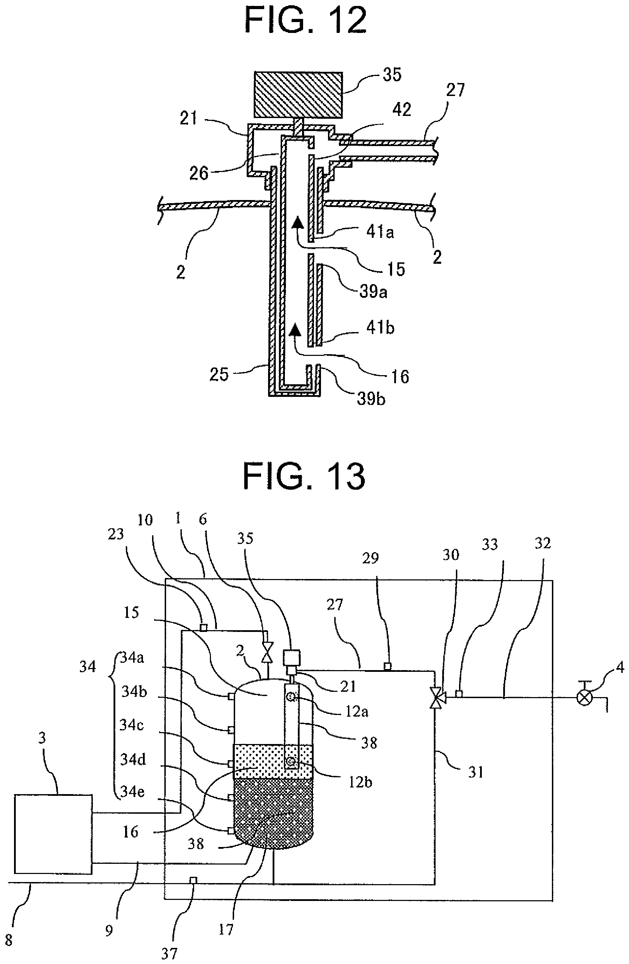

FIG. 10 is a structural diagram of a storage type hot water supply system according to Embodiment 2 of the present invention. In this embodiment, as illustrated in FIGS. 11 and 12, a water intake tube 38 as a water intake tube body formed of the outer cylinder 25 and the inner cylinder 26 which are overlapped with each other.

The water intake tube 38 includes the outer cylinder 25 and the inner cylinder 26 slidably provided inside the outer cylinder 25 in the circumferential direction.

The upper portion of the inner cylinder 26 is provided with an upper communication hole 42, and the upper portion of the inner cylinder 26 is covered with an upper communication portion 21. The leading end portion of the water flow pipe 27 is passed through the side surface of the upper communication portion 21. Further, a drive motor 35 is mounted to the top portion of the inner cylinder 26, and the inner cylinder 26 is rotated in the circumferential direction through driving of the drive motor 35.

In this embodiment, the inner cylinder 26 is rotated through driving of the drive motor 35, and hence it is possible to change the opening areas of the upper water-intake hole 12a and the intermediate water-intake hole 12b of the water intake tube 38, which are formed by overlapping an upper hole portion 39a and an intermediate hole portion 39b provided to the outer cylinder 25 with an upper hole portion 41a and an intermediate hole portion 41b provided to the inner cylinder 26, respectively.

When the intermediate temperature water 16 in the hot water storage tank 2 is determined to exist at the position of the intermediate water-intake hole 12b with use of the hot water temperature sensors 34a, 34b, 34c, 34d, and 34e, the high temperature water 15 and the intermediate temperature water 16 are taken out from the upper water-intake hole 12a and the intermediate water-intake hole 12b, respectively, and hot and cold water is taken out from the hot water storage tank 2 via the upper communication hole 42 and the upper communication portion 21 of the inner cylinder 26.

While detecting the temperature of the hot and cold water taken out from the hot water storage tank 2 with use of the hot and cold water temperature sensor 29, the opening areas of the upper water-intake hole 12a and the intermediate water-intake hole 12b are changed with the drive motor such that the temperature of the hot and cold water does not become lower than a required hot water supply temperature. In this manner, the flow rate ratio between the high temperature water 15 taken out from the upper water-intake hole 12a and the intermediate temperature water 16 taken out from the intermediate water-intake hole 12b is controlled.

The hot and cold water thus taken out reaches the low temperature water mixing three-way valve 30 via the water flow pipe 27 and the high temperature water mixing three-way valve 28. In the low temperature water mixing three-way valve 30, the hot and cold water thus taken out and the low temperature water supplied from the water supply pipe 8 for hot water supply are mixed with each other. The mixed hot and cold water is supplied as water for hot water supply via the second downstream valve pipe 32 and the hot water tap 4.

Note that, the control of the required hot water supply temperature is conducted through changing the mixing ratio between the hot and cold water and the low temperature water with use of the low temperature water mixing three-way valve 30 activated in response to the signal from the hot water supply temperature sensor 33.

In this embodiment, the opening areas of the upper water-intake hole 12a and the intermediate water-intake hole 12b are changed so as to control the flow rate ratio between the high temperature water 15 and the intermediate temperature water 16 which are taken out from the hot water storage tank 2. As a result, the temperature change of the hot water taken out therefrom can be further reduced in accordance with the passage of time, and hence it is possible to further facilitate the temperature control for approximating the temperature to the required hot water supply temperature, the temperature control being performed with use of the low temperature water mixing three-way valve 30.

Further, it is also possible to control the drive motor 35 so as to completely close the intermediate water-intake hole 12b, and to thereby take out the high temperature water 15 only from the upper water-intake hole 12a.

Therefore, as illustrated in FIG. 13, the hot water outlet pipe 7 through which the high temperature water 15 is taken out from the top of the hot water storage tank 2 and the high temperature water mixing three-way valve 28 may be omitted so as to simplify the structure.

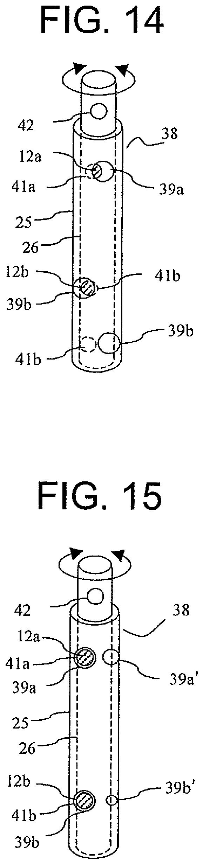

Further, as in the case of a water intake tube 38 illustrated in FIG. 14, the intermediate hole portions 39b provided to the outer cylinder 25 at different heights and the intermediate hole portions 41b provided to the inner cylinder 26 at different heights may be formed in the middle position in the hot water storage tank 2 so as to change, while controlling the drive motor 35 in accordance with the region of the intermediate temperature water 16 in the hot water storage tank 2, the height of the intermediate water-intake hole 12b.

In this case, the intermediate temperature water 16 can be taken out selectively from two positions of the hot water storage tank 2, that is, the intermediate temperature water 16 can efficiently be taken out from the hot water storage tank 2, and hence it is possible to reduce the volume proportion of the intermediate temperature water 16 occupying the hot water storage tank 2. Accordingly, the volume of the high temperature water 15 occupying the hot water storage tank 2 can be increased, and a high COP is secured in the heat pump unit 3.

Note that, there is illustrated an example in which the outer cylinder 25 and the inner cylinder 26 are provided with the two intermediate hole portions at different heights. However, three or more intermediate hole portions may be provided, and the intermediate temperature water can be taken out more accurately in accordance with the increase in the number of the intermediate hole portions.

Further, there is described the case where the opening areas of the upper water-intake hole 12a and the intermediate water-intake hole 12b of the water intake tube 38 are changed in accordance with driving of the drive motor 35. However, without fine adjustment of the opening areas, it suffices that the upper water-intake hole 12a and the intermediate water-intake hole 12b are opened and closed, or it suffices that the height position of the intermediate water-intake hole 12b is changed.

In addition, there is described the case where the inner cylinder 26 is rotated with use of the drive motor 35 so as to move the inner cylinder 26 and the outer cylinder 25 relatively to each other, and hence the opening areas of the upper water-intake hole 12a and the intermediate water-intake hole 12b of the water intake tube 38 are changed. However, it is also possible to rotate the outer cylinder 25 with use of the drive motor 35 so as to move the inner cylinder 26 and the outer cylinder 25 relatively to each other, and to thereby change the opening areas of the upper water-intake hole 12a and the intermediate water-intake hole 12b of the water intake tube 38.

Further, as in the case of a water intake tube 38 illustrated in FIG. 15, the upper hole portions 39a and 39a' and the intermediate hole portions 39b and 39b' having opening areas different from each other may be provided at the same height of the outer cylinder 25.

In this case, through driving of the drive motor 35, it is possible to select whether or not the upper water-intake hole 12a and the intermediate water-intake hole 12b have a different area ratio therebetween, and possible to control the flow rate ratio between the high temperature water 15 flowing through the upper water-intake hole 12a and the intermediate temperature water 16 flowing through the intermediate water-intake hole 12b. In the water intake tube 38, the area ratio between the upper water-intake hole 12a and the intermediate water-intake hole 12b is selected within a predetermined range. However, the flow rate ratio between the high temperature water 15 and the intermediate temperature water 16 can be changed through facilitation of the positional adjustment with use of the drive motor 35.

Note that, in the water intake tube 38 illustrated in each of the cases, the hole portions 39a and 39b of the outer cylinder 25 and the hole portions 41a and 41b of the inner cylinder 26 each have a circular shape. However, the hole shape may be elliptic, triangular, rectangular, or polygonal, and it suffices that the opening area of each of the hole portions 39a and 39b of the outer cylinder 25 and the hole portions 41a and 41b of the inner cylinder 26 is changed so as to change the flow rate of the hot and cold water flowing through the upper water-intake hole 12a and the intermediate water-intake hole 12b.

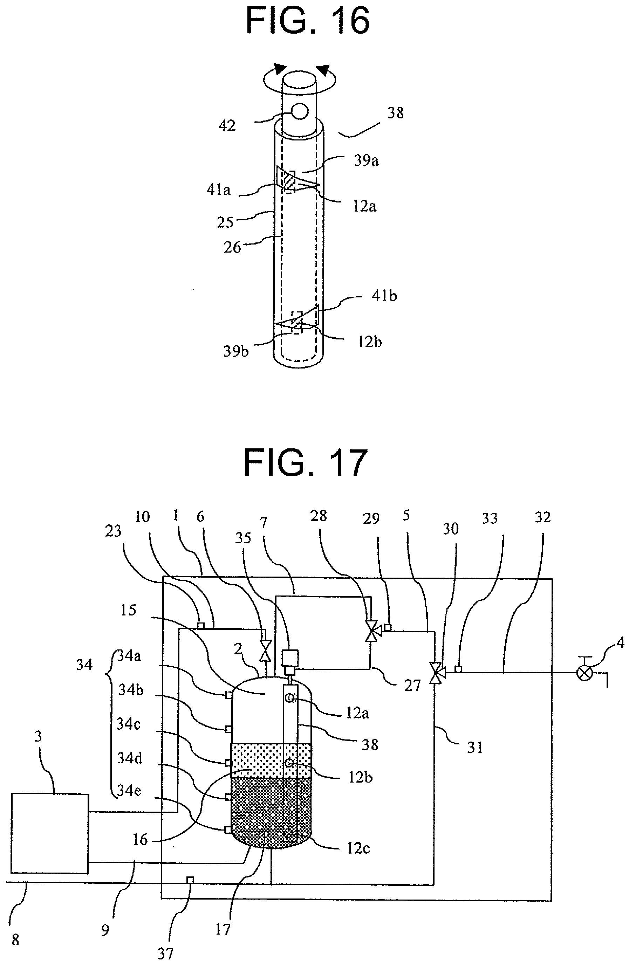

For example, as illustrated in FIG. 16, the opening lengths of the hole portions 41a and 41b of the outer cylinder 25 measured in the height direction thereof are simply increased or simply decreased in the rotational direction, and each of the hole portions 39a and 39b of the inner cylinder 26 is formed in a rectangular shape elongated in the axial direction. With this structure, the opening areas of the upper water-intake hole 12a and the lower water-intake hole 12b can be changed substantially proportionally to the rotational angle.

As a result, it is possible to accurately control the flow rates of the high temperature water 15 and the intermediate temperature water 16 which are taken out through the water intake tube 38 to the exterior of the hot water storage tank 2.

### Embodiment 3

FIG. 17 is a structural diagram of a storage type hot water supply system according to Embodiment 3 of the present invention.

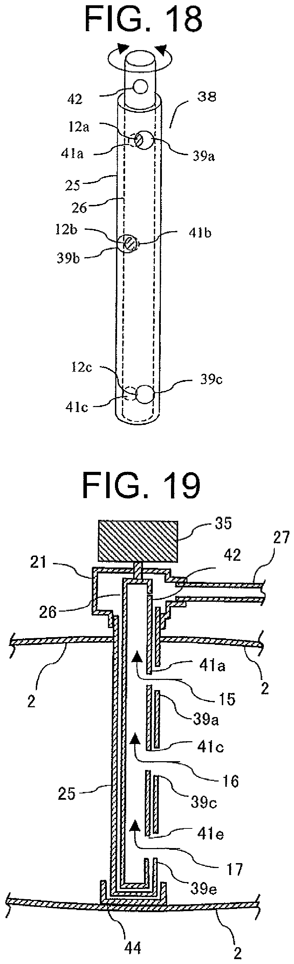

In this embodiment, as illustrated in FIGS. 17 to 19, a water intake tube 38 is extended to the bottom portion of the hot water storage tank 2 so as to be supported by a recessed receiving portion 44.

Note that, the water intake tube 38 may pass through the hot water storage tank 2 so as to be supported outside the hot water storage tank 2.

The inner cylinder 26 is rotated through driving of the drive motor 35, whereby it is possible to change the opening areas of the water-intake holes 12a, 12b, and 12c which are formed by overlapping hole portions 39a, 39b, and 39c provided to the outer cylinder 25 with hole portions 41a, 41b, and 41c provided to the inner cylinder 26, respectively. In this case, the hole portions 39a and 41a are positioned on the upper side of the hot water storage tank 2, the hole portions 39b and 41b are positioned at the middle of the hot water storage tank 2, and the hole portions 39c and 41c are positioned on the lower side of the hot water storage tank 2.

In this embodiment, when the intermediate temperature water 16 in the hot water storage tank 2 is determined to exist at the position of the intermediate hole portion 12b with use of the hot water temperature sensors 34a, 34b, 34c, 34d, and 34e, the high temperature water 15, the intermediate temperature water 16, and the low temperature water 17 are taken out from the upper water-intake hole 12a, the intermediate water-intake hole 12b, and the lower water-intake hole 12c, respectively, and hot and cold water is taken out from the hot water storage tank 2 via the upper communication hole 42 and the upper communication portion 21. While detecting the temperature of the hot and cold water taken out from the hot water storage tank 2 with use of the hot and cold water temperature sensor 29, the opening areas of the water-intake holes 12a, 12b, and 12c are changed with the driving of the drive motor 35 such that the temperature of the hot and cold water does not become lower than a required hot water supply temperature. In this manner, the flow rate ratio between the high temperature water 15 taken out from the upper water-intake hole 12a, the intermediate temperature water 16 taken out from the intermediate water-intake hole 12b, and the low temperature water 17 taken out from the lower water-intake hole 12c is controlled.

The hot and cold water thus taken out reaches the low temperature water mixing three-way valve 30 via the water flow pipe 27 and the high temperature water mixing three-way valve 28. In the low temperature water mixing three-way valve 30, the hot and cold water thus taken out and the low temperature water supplied from the water supply pipe 8 for hot water supply are mixed with each other. The mixed hot and cold water is supplied as water for hot water supply via the second downstream valve pipe 32 and the hot water tap 4.

Note that the control of the required hot water supply temperature is conducted through changing the mixing ratio between the hot and cold water flowing through the first downstream valve pipe 5 and the low temperature water flowing through the hot water supply pipe 31 with use of the low temperature water mixing three-way valve 30 activated in response to the signal from the hot water supply temperature sensor 33.

In the storage type hot water supply system according to this embodiment, the opening areas of the water intake holes 12a, 12b, and 12c are changed so as to control the flow rate ratio between the high temperature water 15, the intermediate temperature water 16, and the low temperature water 17 which are taken out from the hot water storage tank 2. As a result, it is possible to approximate, in accordance with the passage of time, the temperature of the hot water to be taken out to the required hot water supply temperature, and possible to further facilitate the temperature control of the required hot water supply temperature, the temperature control being performed with use of the low temperature water mixing three-way valve 30.

Further, through control of the drive motor 35, it is possible to realize all the combinations of the high temperature water 15 and the intermediate temperature water 16, the high temperature water 15 and the low temperature water 17, the intermediate temperature water 16 and the low temperature water 17, and of the high temperature water 15, the intermediate temperature water 16 and the low temperature water 17.

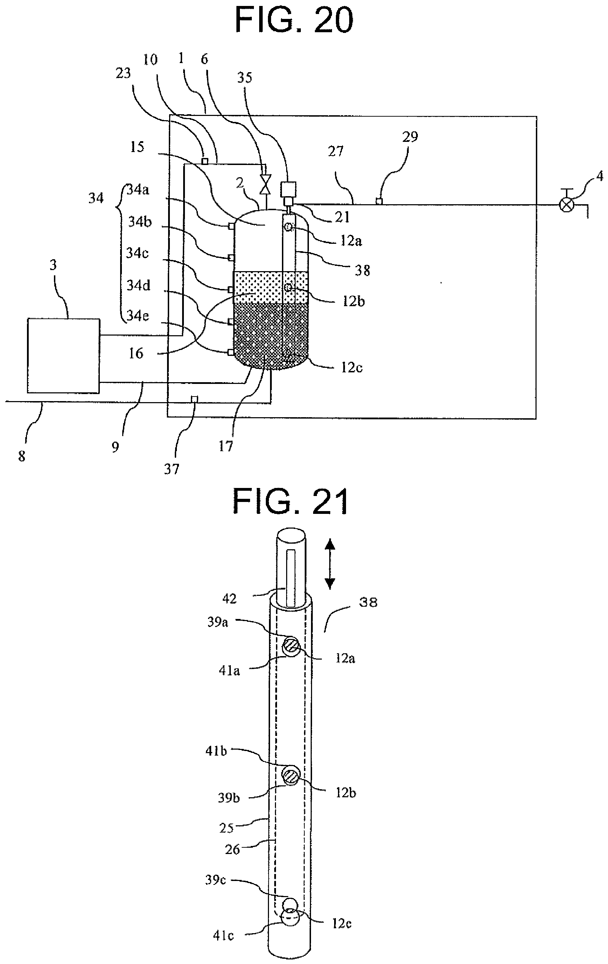

Accordingly, as illustrated in FIG. 20, it is possible to omit the hot water outlet pipe 7 for taking out the high temperature water 15 from the upper side of the hot water storage tank 2, the high temperature water mixing three-way valve 28, the hot and cold water temperature sensor 29, and the low temperature water mixing three-way valve 30 so as to simplify the structure of the storage type hot water supply system.

Further, as in the case of a water intake tube 38 illustrated in FIG. 21, it is also possible to slide the inner cylinder 26 in the upper and lower direction with use of the mechanism capable of sliding the inner cylinder 26 instead of the drive motor 35, and to thereby change the opening areas of the water intake holes 12a, 12b, and 12c obtained by overlapping the hole portions 39a, 39b, and 39c formed in the outer cylinder 25 with the hole portions 41a, 41b, and 41c formed in the inner cylinder 26, respectively.

Still further, the opening areas of the water intake holes 12a, 12b, and 12c may be changed by combination of the sliding and the rotation. In this case, the opening areas of the water intake holes 12a, 12b, and 12c are determined in further various combinations, and hence it is possible to achieve the flow rate control and temperature control of higher accuracy.

Yet further, as in the case of a water intake tube 38 illustrated in FIG. 25, the intermediate hole portions 39b and 39d provided to the outer cylinder 25 at different heights and the intermediate hole portion 41b and 41d provided to the inner cylinder 26 at different heights may be formed in the middle position in the hot water storage tank 2 so as to change, while controlling the drive motor 35 in accordance with the region of the intermediate temperature water 16 in the hot water storage tank 2, the height of the intermediate water-intake hole 12b.

In this case, the intermediate temperature water 16 can be taken out selectively from two positions of the hot water storage tank 2, that is, the intermediate temperature water 16 can efficiently be taken out from the hot water storage tank 2, and hence it is possible to reduce the volume proportion of the intermediate temperature water 16 occupying the hot water storage tank 2. Accordingly, the volume of the high temperature water 15 occupying the hot water storage tank 2 can be increased, and a high COP is secured in the heat pump unit 3.

Note that, there is illustrated an example in which the outer cylinder 25 and the inner cylinder 26 are provided with the two intermediate hole portions at different heights. However, three or more intermediate hole portions may be provided, and the intermediate temperature water can be taken out more accurately in accordance with the increase in the number of the intermediate hole portions.

Further, there is described the case where the opening areas of the upper water-intake hole 12a, the intermediate water-intake hole 12b, and the lower water-intake hole 12c of the water intake tube 38 are changed in accordance with driving of the drive motor 35. However, without fine adjustment of the opening areas, it suffices that the upper water-intake hole 12a, the intermediate water-intake hole 12b, and the lower water-intake hole 12c are opened and closed, or it suffices that the height position of the intermediate water-intake hole 12b is changed.

### Embodiment 4

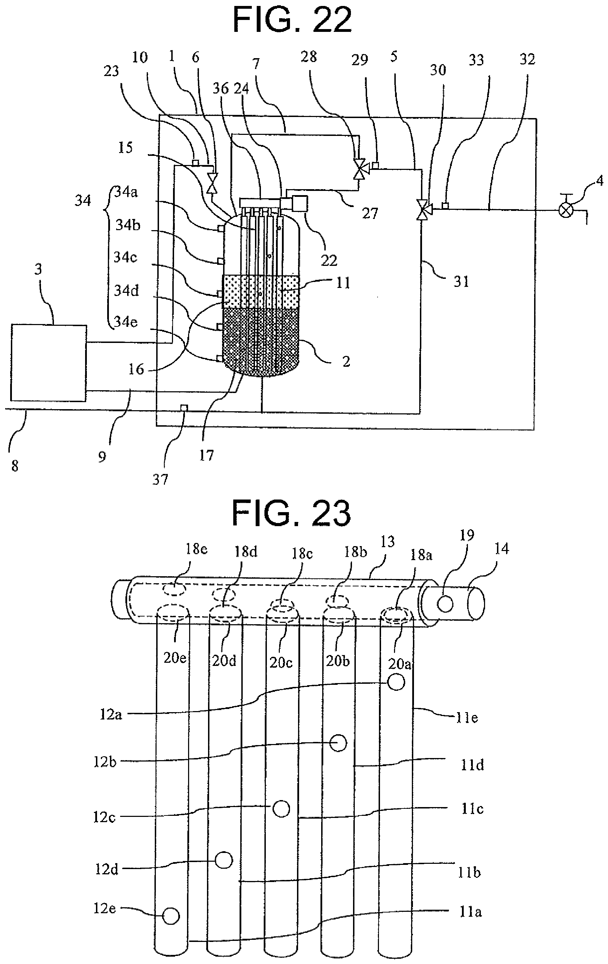

FIG. 22 is a structural diagram of a storage type hot water supply system according to Embodiment 4 of the present invention. In this embodiment, the water intake tube body illustrated in FIG. 23 is provided in the hot water storage tank 2.

This water intake tube body includes five cylinders 11e, 11d, 11c, 11b, and 11a provided in parallel and with water intake holes 12a, 12b, 12c, 12d, and 12e at different heights, respectively. The cylinders 11e, 11d, 11c, 11b, and 11a having communication holes 20a, 20b, 20c, 20d, and 20e at the respective upper end surfaces are coupled to an outer cylinder portion 13 through an intermediation of the portions of the communication holes 20a, 20b, 20c, 20d, and 20e. An inner cylinder portion 14 is slidably provided inside the outer cylinder portion 13. This inner cylinder portion 14 has communication holes 18a, 18b, 18c, 18d, and 18e formed correspondingly to the cylinders 11e, 11d, 11c, 11b, and 11a.

In this embodiment, instead of the water intake tube 38 according to Embodiment 1, there are provided the cylinders 11e, 11d, 11c, 11b, and 11a which have the water intake holes 12a, 12b, 12c, 12d, and 12e formed at different heights, respectively. With this structure, the intermediate temperature water 16 in the hot water storage tank 2 can be selected.

In this embodiment, through driving of a drive motor 22, it is possible to communicate the communication holes 20a, 20b, 20c, 20d, and 20e formed in the outer cylinder portion 13 with the communication holes 18a, 18b, 18c, 18d, and 18e formed in the inner cylinder portion 14 each other at a single portion or multiple portions, respectively.

For example, when the intermediate temperature water 16 in the hot water storage tank 2 is determined to exist at the position of the lower water-intake hole 12c with use of the hot water temperature sensor 34, the drive motor 22 is driven for rotating the inner cylinder portion 14 so as to communicate the communication hole 20c of the outer cylinder portion 13 with the communication hole 18c of the inner cylinder portion 14, and to communicate the communication hole 20a of the outer cylinder portion 13 with the communication hole 18a of the inner cylinder portion 14. As a result, the intermediate temperature water 16 and the high temperature water 15 are taken-in from the water intake hole 12c and the water intake hole 12a, respectively, thereby being taken out from an upper communication hole 19.

With this structure, in accordance with the position of the intermediate temperature water 16 existing in the hot water storage tank 2, it is possible to change the position of the water intake holes in the height direction, and also possible to take out the high temperature water 15 and the low temperature water 17 simultaneously with the intermediate temperature water 16.

Further, the outer cylinder portion 13 and the inner cylinder portion 14 which perform a rotational operation can be shortened when compared with the case of being provided in the height direction of the hot water storage tank 2. As a result, it is possible to reduce the rotational friction, the power consumption of the drive motor 22, and to increase the positional accuracy of the rotational angle.

Note that, while the five cylinders 11a, 11b, 11c, 11d, and 11e are exemplarily illustrated, the number of cylinders to be provided is arbitrary.

Further, while the inner cylinder portion 14 is rotated with respect to the outer cylinder portion 13, the inner cylinder portion 14 may be slid so as to communicate the communication holes 20a, 20b, 20c, 20d, and 20e of the outer cylinder portion 13 with the communication holes 18a, 18b, 18c, 18d, and 18e of the inner cylinder portion 14 each other.

### Embodiment 5

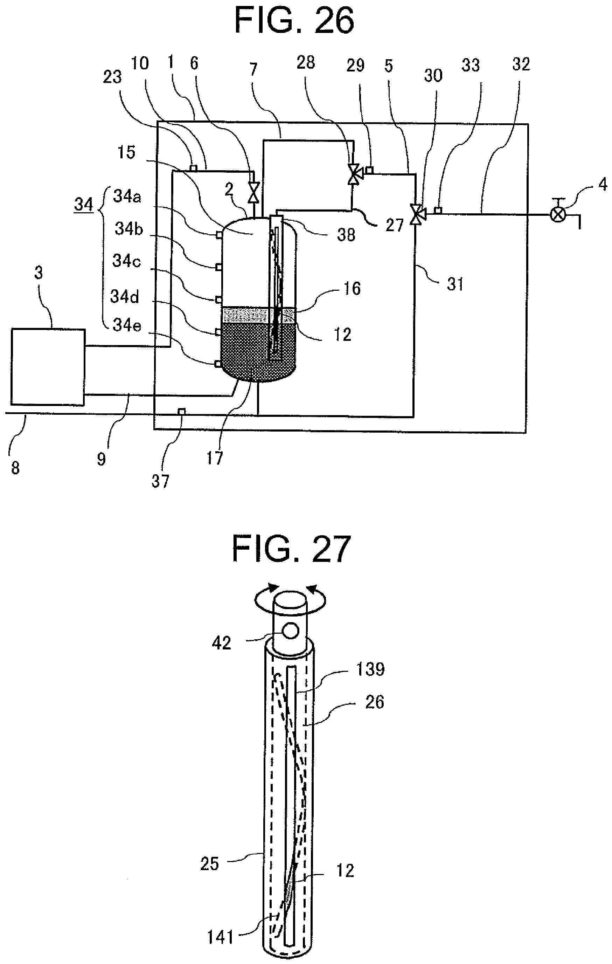

FIG. 26 is a structural diagram of a storage type hot water supply system according to Embodiment 5 of the present invention.

The storage type hot water supply system includes a hot water storage tank unit 1 having a hot water storage tank 2 for storing hot and cold water, a heat pump unit 3 as a heater for heating the hot and cold water in the hot water storage tank 2, and a hot water tap 4 used in the kitchen, the restroom, and the like.

A heat pump refrigerant circuit of the heat pump unit 3 includes a compressor, a refrigerant-water heat exchanger as a condenser, an electronic expansion valve, and an evaporator of forced air-cooled type.

An operation of one cycle is performed in which carbon dioxide as a natural refrigerant compressed in the compressor is subjected to heat radiation in the refrigerant-water heat exchanger, subjected to decompressive expansion in the electronic expansion valve, vaporized in the evaporator owing to atmospheric heat, and then flows into the compressor again.

A low temperature water take-out pipe 9 connects the bottom of the hot water storage tank 2 and the heat pump unit 3 as a heater to each other. Further, a high temperature water returning pipe 10 connects the top of the hot water storage tank 2 and the heat pump unit 3 to each other. The high temperature water returning pipe 10 is provided with a heating temperature sensor 23 and a high temperature water inflow valve 6.

Low temperature water (5°C, for example) is boiled up to obtain high temperature water (90°C, for example) through an intermediation of the refrigerant-water heat exchanger in the heat pump refrigerant circuit.

In the hot water storage tank 2, there is provided a cylindrical water intake tube 38 which is extended in the substantially vertical direction and has a sealed bottom surface. On the outer peripheral surface of the hot water storage tank 2, there is provided multiple hot water temperature sensors 34 for detecting the temperature of the hot and cold water in the hot water storage tank 2 in the height direction (substantially vertical direction) of the hot water storage tank 2. In this embodiment, five hot water temperature sensors 34a, 34b, 34c, 34d, and 34e are attached at predetermined intervals in the height direction of the hot water storage tank 2.

Further, one end portion of a water flow pipe 27 is connected to the upper end portion of the water intake tube 38 as a water intake tube body. The other end portion of the water flow pipe 27 is connected to the first valve portion of a high temperature water mixing three-way valve 28. The second valve portion of the high temperature water mixing three-way valve 28 is connected to one end portion of a hot water outlet pipe 7. The other end portion of the hot water outlet pipe 7 is connected to the upper portion of the hot water storage tank 2, and the high temperature water in the hot water storage tank 2 flows out to the exterior through the hot water outlet pipe 7. The third valve portion of the high temperature water mixing three-way valve 28 is connected to one end portion of a first downstream valve pipe 5. A hot and cold water temperature sensor 29 for detecting a temperature of hot and cold water which flows through the first downstream valve pipe 5 is attached to the first downstream valve pipe 5.

The other end portion of the first downstream valve pipe 5 is connected to the first valve portion of a low temperature water mixing three-way valve 30. The second valve portion of the low temperature water mixing three-way valve 30 is connected to a second downstream valve pipe 32. The hot water supply temperature sensor 33 is attached near the low temperature water mixing three-way valve 30 of the second downstream valve pipe 32, and the hot water tap 4 is attached downstream of the second downstream valve pipe 32. The third valve portion of the low temperature water mixing three-way valve 30 is connected to the hot water supply pipe 31.

The hot water supply pipe 31 is coupled with a water supply pipe 8 which is connected to the bottom portion of the hot water storage tank. A pressure pump (not shown) is mounted to the water supply pipe 8, and low temperature water is pumped into the hot water storage tank 2 and also flows through the hot water supply pipe 31 with the driving of the pressure pump. The temperature of the low temperature water is detected with use of a supplied water temperature sensor 37 attached to the water supply pipe 8.

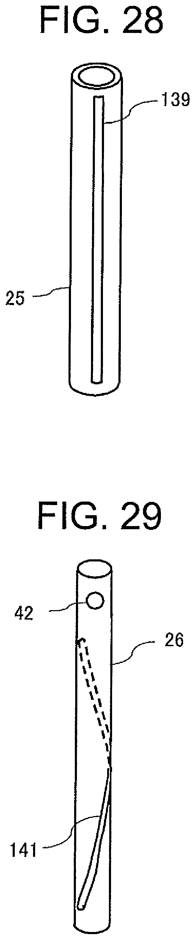

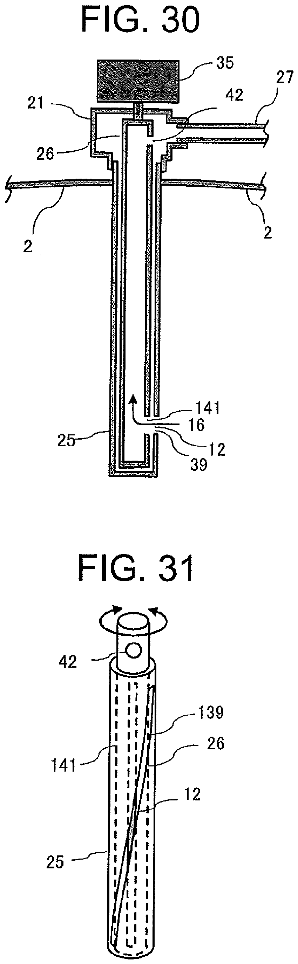

FIG. 27 is a perspective view of a water intake tube of the storage type hot water supply system according to Embodiment 5 of the present invention. Further, FIG. 28 is a perspective view of the outer cylinder of the water intake tube illustrated in FIG. 27, and FIG. 29 is a perspective view of the inner cylinder of the water intake tube illustrated in FIG. 27. Still further, FIG. 30 is a sectional view of the water intake tube illustrated in FIG. 27.

As illustrated in FIGS. 27 to 30, the water intake tube 38 as a water intake tube body includes the cylindrical outer cylinder 25 and the cylindrical inner cylinder 26 provided inside the outer cylinder 25 and coaxially therewith. The inner cylinder 26 has, on the side surface thereof, a spiral inner cylinder communication hole 141 as an opening portion extended in the vertical direction and in the circumferential direction while forming an angle smaller than 360 degrees. The outer cylinder 25 has an outer cylinder communication hole 139 as an opening portion linearly extended in the vertical direction. Owing to the inner cylinder communication hole 141 and the outer cylinder communication hole 139 overlapped with each other, there is formed the water intake hole 12 of the water intake tube 38 is formed through which the hot and cold water is taken-in from the hot water storage tank. The upper portion of the inner cylinder 26 is provided with the upper communication hole 42, and the outer periphery thereof is covered with the upper communication portion 21. The leading end portion of the intermediate temperature water upper pipe 27 is passed through the side surface of the upper communication portion 21. Further, the drive motor 35 is mounted to the top portion of the inner cylinder 26. The inner cylinder 26 is rotated in the circumferential direction through driving of the drive motor 35, and the rotational angle is controlled, whereby the position in the height direction (substantially vertical direction) of the water intake hole 12 can be continuously regulated.

Next, an operation of the storage type hot water supply system having the above-mentioned structure is described.

Hot and cold water is filled in the hot water storage tank 2, and the high temperature water 15, the intermediate temperature water 16, and low temperature water 17 are stored in the stated order from the top. For example, the temperature of the high temperature water 15 is approximately 90°C which is obtained through heating in the heat pump unit 3, the temperature of the low temperature water 17 is approximately 5°C which is obtained from the hot and cold water flowing through the water supply pipe 8. The intermediate temperature water 16 has a temperature gradient of approximately 5°C to 90°C due to thermal diffusion from the high temperature water 15.

In this case, the temperature difference between the intermediate temperature water 16 and the high temperature water to be obtained is small when compared with the case of heating the low temperature water 17 to obtain the high temperature water. Accordingly, the COP of the heat pump unit 3 is lower.

Therefore, in order to secure high COP, it is necessary to feed the intermediate temperature water 16 to the heat pump unit 3 so as to be used as water for hot water supply instead of being heated therein.

When a user of supplied hot water sets the temperature of the water to the required hot water supply temperature, for example, to 40°C, a determination is made as to at what height intermediate temperature water 16 exists with use of the hot water temperature sensors 34a to 34e provided on the side surface of the hot water storage tank 2 in the height direction thereof.

For example, when the hot water temperature sensors 34b, 34c, and 34d detect 90°C, 40°C, and 5°C, respectively, it can be determined that the intermediate temperature water exists near the height of the hot water temperature sensor 34c because the temperature detected by the hot water temperature sensor 34c is higher than 5°C and lower than 90°C. Further, when the multiple hot water temperature sensors 34 detect the temperature higher than 5°C and lower than 90°C, it may be determined that the intermediate temperature water exists at the position of one of the hot water temperature sensors 34, which indicates a temperature approximate to the required hot water supply temperature. Still further, when the hot water temperature sensors 34c and 34d detect 90°C and 5°C, respectively, and when none of the other hot water temperature sensors 34 detects the temperature higher than 5°C and lower than 90°C, it may be determined that the intermediate temperature water exists at a midpoint of the hot water temperature sensors 34c and 34d between which the temperature difference is largest.

After that, the drive motor 35 is driven for rotating the inner cylinder 26 so as to move the water intake hole 12 of the water intake tube 38, which is formed of the outer cylinder communication hole 139 and the inner cylinder communication hole 141 overlapped with each other, to the position at which the intermediate temperature water 16 exists. Then, the intermediate temperature water 16 is immediately taken-in from the water intake hole 12, and the intermediate temperature water is taken out from the hot water storage tank 2 via the upper communication hole 42 of the inner cylinder 26 and the upper communication portion 21.

While detected with use of the hot and cold water temperature sensor 29, the temperature of the hot and cold water taken out from the hot water storage tank 2 is controlled, with use of the drive motor 35 which is driven for rotating the inner cylinder 26 so as to continuously move the position of the water intake hole 12 of the water intake tube 38 in the height direction of the hot water storage tank 2, so as not to become lower than the required hot water supply temperature.

For example, in the hot water storage tank 2, the high temperature water 15, intermediate temperature water 16, and low temperature water 17 are stored in the stated order from the top to the bottom thereof. When the temperature detected with use of the hot and cold water temperature sensor 29 is lower than a required hot water supply temperature, the drive motor 35 is driven for rotating the inner cylinder 26 so as to continuously change the position of the water intake hole 12 of the water intake tube 38 to the upper side in the hot water storage tank, and the temperature detected with use of the hot and cold water temperature sensor 29 is controlled so as to exceed the required hot water supply temperature. In contrast, when the temperature detected with use of the hot and cold water temperature sensor 29 is higher than a required hot water supply temperature, the drive motor 35 is driven for rotating the inner cylinder 26 so as to continuously change the position of the water intake hole 12 of the water intake tube 38 to the lower side in the hot water storage tank, and the temperature detected with use of the hot and cold water temperature sensor 29 is controlled to be approximate to the required hot water supply temperature, and so as not to be lower than the required hot water supply temperature. In this case, the position in the height direction of the water intake hole 12 can be continuously changed, and hence the temperature of the hot and cold water taken out from the water intake tube 38 can be finely controlled.

In the low temperature water mixing three-way valve 30, the hot and cold water passing through the first downstream valve pipe 5 and the low temperature water supplied from the water supply pipe 8 for hot water supply are mixed with each other. The mixed hot and cold water is supplied as water for hot water supply via the second downstream valve pipe 32 and the hot water tap 4.

Note that, the control of the required hot water supply temperature is conducted through changing the mixing ratio between the hot and cold water and the low temperature water with use of the low temperature water mixing three-way valve 30 activated based on the temperature which is detected with use of the hot water supply temperature sensor 33.

Into the hot water storage tank 2, the low temperature water 17 is supplied from the lower side of the hot water storage tank 2 through the water supply pipe 8, to the amount of which corresponds to an amount of the hot and cold water taken out from the hot water storage tank 2.

Further, when the temperature detected with use of the predetermined hot water temperature sensor 34 (hot water temperature sensor 34b, for example) becomes lower than 90°C, and it is determined that the amount of the high temperature water 15 in the hot water storage tank 2 is decreased, the low temperature water 17 is taken out via the low temperature water take-out pipe 9 from the lower side of the hot water storage tank 2. The high temperature water heated in the heat pump unit 3 is returned from the upper side of the hot water storage tank 2 via the high temperature water returning pipe 10 and the high temperature water inflow valve 6.

In this case, carbon dioxide as a natural refrigerant is used in the heat pump unit 3. Through an intermediation of the refrigerant-water heat exchanger provided in the heat pump refrigerant circuit, low temperature water is heated to have high temperature of approximately 90°C. With use of supercritical carbon dioxide in the heat pump cycle, the low temperature water is heated to have the high temperature with high energy efficiency.

As described above, with the provision in the hot water storage tank 2 of the water intake tube 38 capable of continuously changing the position of the water intake hole 12 in the height direction of the hot water storage tank 2, the intermediate temperature water 16 generated in the hot water storage tank 2 can be immediately taken out. As a result, the intermediate temperature water 16 which exists in the hot water storage tank 2 can be decreased within a short period of time, and the proportion of the high temperature water 15 is not reduced despite the increase in proportion of the intermediate temperature water 16, whereby the lack of the high temperature water 15 in the hot water storage tank 2 is reduced. Further, a high COP is secured in the heat pump unit 3.

Note that, in the storage type hot water supply system according to Embodiment 5, the position of the water intake hole 12 of the water intake tube 38 is continuously regulated in the height direction of the hot water storage tank 2 based on the temperature of the hot and cold water in the hot water storage tank 2 detected with use of the hot water temperature sensor 34 and the temperature of the hot and cold water taken out to the exterior of the hot water storage tank 2 detected with use of the hot and cold water temperature sensor 29. However, the position of the water intake hole 12 of the water intake tube 38 may be continuously regulated in the height direction of the hot water storage tank 2 based also on one of the temperature of the hot and cold water in the hot water storage tank 2 detected with use of the hot water temperature sensor 34 and the temperature of the hot and cold water taken out to the exterior of the hot water storage tank 2 detected with use of the hot and cold water temperature sensor 29. Further, in Embodiment 5, the temperature of the wall surface of the hot water storage tank 2 detected with use of the hot water temperature sensor 34 mounted to the outer peripheral surface (side surface) of the hot water storage tank 2 is defined as a temperature of the hot and cold water in the hot water storage tank 2. However, the hot water temperature sensor 34 may be mounted to the inner peripheral surface (side surface) of the hot water storage tank 2 so as to directly detect the temperature of the hot and cold water in the hot water storage tank 2.

Note that, in the storage type hot water supply system according to Embodiment 5, there is described the case where the temperature of hot and cold water taken out from the hot water storage tank 2 with use of the water intake tube 38 is set to be higher than the required hot water supply temperature. However, it is also possible to obtain water for hot water supply at a temperature higher than the required hot water supply temperature when the high temperature water mixing three-way valve 28 is activated so as to mix the hot and cold water taken out through the water intake tube 38 and the high temperature water taken out through the hot water outlet pipe 7 with each other at the high temperature water mixing three-way valve 28. In this case, even when being lower than the required hot water supply temperature, the temperature of the hot and cold water taken out through the water intake tube 38 can be risen to a temperature higher than the required hot water supply temperature, owing to the high temperature water mixing three-way valve 28 activated so as to increase the amount of the high temperature water 15 through the hot water outlet pipe 7. Therefore, almost all the intermediate temperature water 16 in the hot water storage tank 2 can be taken out for being used as water for hot water supply, the lack of the high temperature water 15 in the hot water storage tank 2 is further overcome, and a higher COP is secured in the heat pump unit 3.

Further, the control of each of the flow rate ratios between the hot and cold water taken out from the hot water storage tank 2 and the high temperature water or the low temperature water is described which is conducted with use of the three-way valves including the high temperature water mixing three-way valve 28 or the low temperature water mixing three-way valve 30. However, two valves may be used instead of the three-way valve so as to control the flow rate ratios.

Further, in the water intake tube 38 of the storage type hot water supply system according to Embodiment 5, the inner cylinder 26 is rotated with use of the drive motor 35 so as to relatively move the inner cylinder 26 and the outer cylinder 25 to each other, whereby the position of the water intake hole 12 of the water intake tube 38, which is formed of the inner cylinder communication hole 141 and the outer cylinder communication hole 139 overlapped with each other, is continuously changed in the height direction of the hot water storage tank 2. However, the outer cylinder 25 may be rotated with use of the drive motor 35 so as to relatively move the inner cylinder 26 and the outer cylinder 25 to each other, whereby the position of the water intake hole 12 of the water intake tube 38, which is formed of the inner cylinder communication hole 141 and the outer cylinder communication hole 139 overlapped with each other, is continuously changed in the height direction of the hot water storage tank 2.

Further, in the water intake tube 38 of the storage type hot water supply system according to Embodiment 5, while formed from the upper portion to the lower portion of the hot water storage tank 2, the inner cylinder communication hole 141 and the outer cylinder communication hole 139 may be formed correspondingly to the height at which the intermediate temperature water exists, whereby the position of the water intake hole 12 of the water intake tube 38 is continuously changed in the height direction of the hot water storage tank 2 only within the range over which the intermediate temperature water exists.

FIGS. 31 to 33 are perspective views each illustrating another mode of the water intake tube of the storage type hot water supply system according to Embodiment 5 of the present invention.

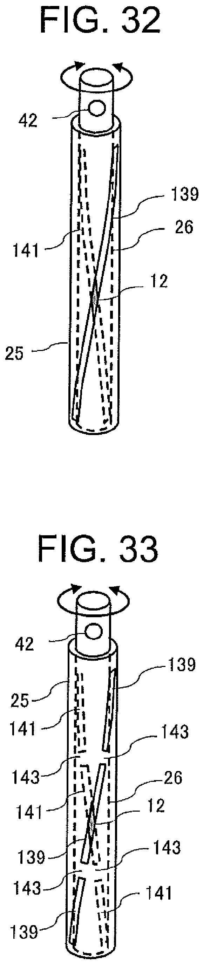

In the water intake tube 38 of the storage type hot water supply system according to Embodiment 5, the spiral inner cylinder communication hole 141 extended in the vertical direction and in the circumferential direction is formed in the side surface of the inner cylinder 26, and the outer cylinder communication hole 139 linearly extended in the vertical direction is formed in the side surface of the outer cylinder 25. However, as illustrated in FIG. 31, it is also possible to form the spiral outer cylinder communication hole 139 extended in the vertical direction and in the circumferential direction in the side surface of the outer cylinder 25, and to form the inner cylinder communication hole 141 linearly extended in the vertical direction in the side surface of the inner cylinder 26. Further, as illustrated in FIG. 32, it is also possible to form the spiral outer cylinder communication hole 139 extended in the vertical direction and in the circumferential direction in the side surface of the outer cylinder 25, and to form the spiral inner cylinder communication hole 141 extended in the vertical direction and in the circumferential direction in the side surface of the inner cylinder 26.

In addition, it is also possible to change the width of the inner cylinder communication hole 141 or the outer cylinder communication hole 139 in the height direction thereof, and to form the inner cylinder communication hole 141 or the outer cylinder communication hole 139 in a polygonal shape such as an elliptic shape or a triangular shape.

Further, as illustrated in FIG. 33, ribs 143 may be provided for partitioning the outer cylinder communication hole 139 or the inner cylinder communication hole 141 in the upper and lower direction. In this case, it suffices that the inner cylinder 26 and the outer cylinder 25 are moved relatively to each other, whereby the position of the water intake hole 12 of the water intake tube 38, which is formed of the inner cylinder communication hole 141 and the outer cylinder communication hole 139 overlapped with each other, is continuously changed in the height direction of the hot water storage tank 2 even over a small distance. The strength of the outer cylinder 25 or the inner cylinder 26 can be enhanced with the provision of the ribs 143 for partitioning the outer cylinder communication hole 139 or the inner cylinder communication hole 141 in the upper and lower direction.

Further, in the storage type hot water supply system illustrated in FIG. 26, the five hot water temperature sensors 34a, 34b, 34c, 34d, and 34e are provided on the side surface of the hot water storage tank 2. However, with the provision of more hot water temperature sensors 34, the position and temperature of the intermediate temperature water 16 can be more accurately detected. For example, with use of the hot water temperature sensors 34 mounted in the height direction at intervals each of which is equal to or smaller than 100 mm determined with reference to the layer thickness of approximately 100 mm of the main intermediate temperature water, the position and temperature of the intermediate temperature water 16 can be more accurately detected. Further, the hot water temperature sensors 34 may be arranged at equal intervals in the height direction, or may be arranged at random in the height direction.

Further, the water intake tube 38 may be extended to the bottom portion of the hot water storage tank 2 so as to be supported at the bottom portion of the hot water storage tank 2. Further, the bottom portion of the hot water storage tank 2 may be passed through so as to support the water intake tube 38 outside the hot water storage tank 2.

### Embodiment 6

A water intake tube of a storage type hot water supply system according to Embodiment 6 is different from the water intake tube according to Embodiment 5 in the point of being provided with multiple water intake holes 12 at different heights. The other structure and functions are the same as those of the storage type hot water supply system and the water intake tube according to Embodiment 5.

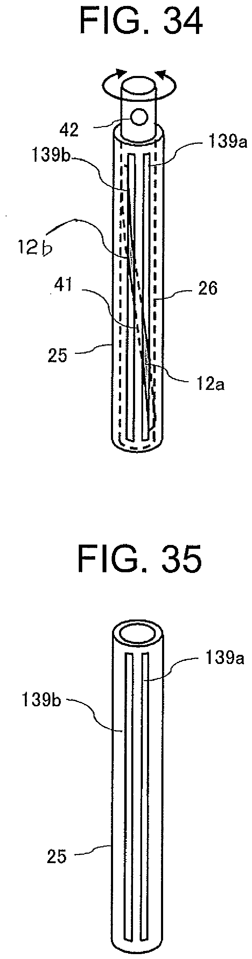

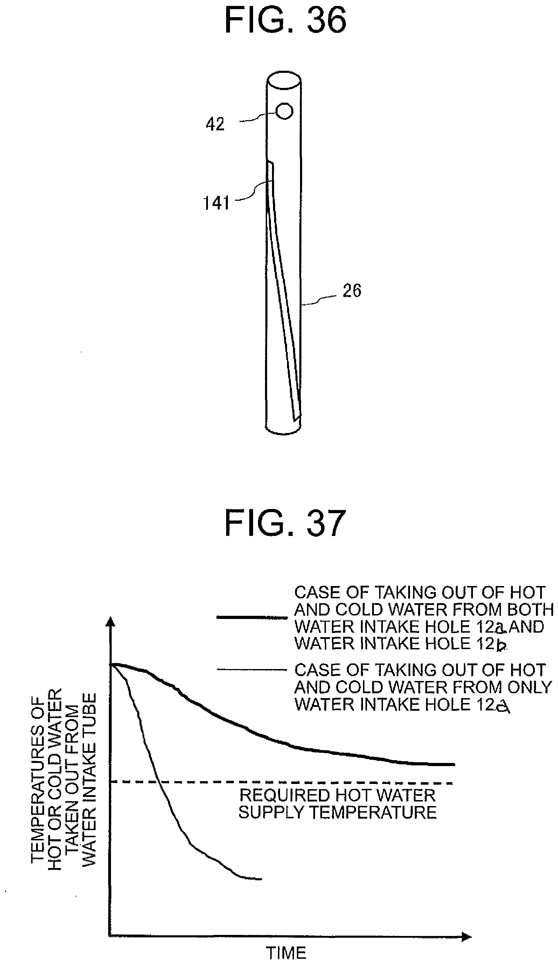

FIG. 34 is a perspective view of the water intake tube of the storage type hot water supply system according to Embodiment 6 of the present invention. Further, FIG. 35 is a perspective view of the outer cylinder of the water intake tube illustrated in FIG. 34, and FIG. 36 is a perspective view of the inner cylinder of the water intake tube illustrated in FIG. 34.

As illustrated in FIGS. 34 to 36, the inner cylinder 26 has, on the side surface thereof, a single spiral inner cylinder communication hole 141 extended in the vertical direction and in the circumferential direction, and the outer cylinder 25 has two outer cylinder communication holes 139a and 139b as opening portions linearly extended in the vertical direction and arranged in the circumferential direction. The inner cylinder 26 is rotated in the circumferential direction through driving of the drive motor 35 so as to continuously change, in the height direction of the hot water storage tank 2, the position of the water intake hole 12a which is formed of the inner cylinder communication hole 141 and the outer cylinder communication hole 139a overlapped with each other, and the position of the water intake hole 12b which is formed of the inner cylinder communication hole 141 and the outer cylinder communication hole 139b overlapped with each other, the water intake holes 12a and 12b being provided to the water intake tube 38. In this case, the water intake hole 12a is positioned lower than the water intake hole 12b.

Next, with reference to FIG. 26, an operation of the storage type hot water supply system is described to which the water intake tube 38 as a water intake tube body having the above-mentioned structure is mounted. When the intermediate temperature water 16 in the hot water storage tank 2 is determined, for example, to exist at the position of the hot water temperature sensor 34d with use of the hot water temperature sensors 34a, 34b, 34c, 34d, and 34e, the drive motor 35 is controlled to move the water intake hole 12a to the position corresponding to the height of the hot water temperature sensor 34d. The intermediate temperature water 16 is taken-in from the water intake hole 12a, and the hot and cold water of a temperature higher than that of the hot and cold water taken-in from the water intake hole 12a is taken-in from the water intake hole 12b positioned higher than the water intake hole 12a. Then, the hot and cold water is taken out from the hot water storage tank 2 via the upper communication hole 42 of the inner cylinder 26 and the upper communication portion 21.

While detecting the temperature of the hot and cold water taken out from the hot water storage tank 2 with use of the hot and cold water temperature sensor 29, the position of the water intake hole 12a and the position of water intake hole 12b are continuously changed in the height direction of the hot water storage tank 2 and controlled with use of the drive motor 35 such that the temperature of the hot and cold water does not become lower than a required hot water supply temperature.

The hot and cold water thus taken out reaches the low temperature water mixing three-way valve 30 via the water flow pipe 27 and the high temperature water mixing three-way valve 28. In the low temperature water mixing three-way valve 30, the hot and cold water thus taken out and the low temperature water supplied from the water supply pipe 8 for hot water supply are mixed with each other. The mixed hot and cold water is supplied as water for hot water supply via the second downstream valve pipe 32 and the hot water tap 4.

Note that, the control of the required hot water supply temperature is conducted through changing the mixing ratio between the hot and cold water and the low temperature water with use of the low temperature water mixing three-way valve 30 activated based on the temperature which is detected with use of the hot water supply temperature sensor 33.

FIG. 37 is a graph showing a temporal change of the temperature of hot and cold water, which is detected with use of the hot water temperature sensor of the storage type hot water supply system according to Embodiment 6 of the present invention.

In the storage type hot water supply system according to Embodiment 6, the intermediate temperature water 16 and the hot and cold water of a temperature higher than that of the intermediate temperature water 16 taken out from the water intake hole 12a are taken out from the water intake hole 12a and the water intake hole 12b, respectively. As a result, as shown in FIG. 37, when compared with the case of taking out the intermediate temperature water only from the water intake hole 12a, the temporal change in the temperature of the hot water taken out with use of the water intake tube 38 can be further reduced. Therefore, it is possible to further facilitate the temperature control for approximating the temperature to the required hot water supply temperature, the temperature control being performed with use of the low temperature water mixing three-way valve 30.

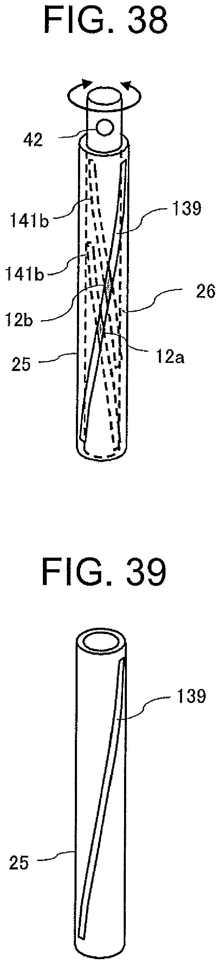

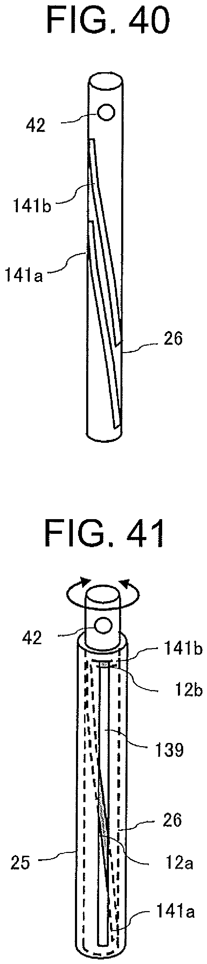

FIG. 38 is a perspective view illustrating another mode of a water intake tube of the storage type hot water supply system according to Embodiment 6 of the present invention. Further, FIG. 39 is a perspective view of the outer cylinder of the water intake tube illustrated in FIG. 38, and FIG. 40 is a perspective view of the inner cylinder of the water intake tube of the storage type hot water supply system illustrated in FIG. 38.

As illustrated in FIGS. 38 to 40, on the side surface of the inner cylinder 26, two spiral inner cylinder communication holes 141a and 141b as opening portions extended in the vertical direction and in the circumferential direction may be formed at different heights, and on the side surface of the outer cylinder 25, a single spiral outer cylinder communication hole 139 extended in the vertical direction and in the circumferential direction may be formed. The inner cylinder 26 is rotated in the circumferential direction through driving of the drive motor 35 so as to continuously change, in the height direction of the hot water storage tank 2, the position of the water intake hole 12a which is formed of the inner cylinder communication hole 141a and the outer cylinder communication hole 139 overlapped with each other, and the position of the water intake hole 12b which is formed of the inner cylinder communication hole 141b and the outer cylinder communication hole 139 overlapped with each other, the water intake holes 12a and 12b being provided to the water intake tube 38.

Further, the number and the configuration are arbitrary of the inner cylinder communication holes 141 as opening portions formed in the inner cylinder 26 and the outer cylinder communication hole 139 as opening portion formed in the outer cylinder 25. It suffices that the inner cylinder 26 and the outer cylinder 25 are moved relatively to each other for overlapping each of the inner cylinder communication holes 141 and the outer cylinder communication hole 139 each other so as to form the multiple water intake holes 12, whereby the positions of the multiple water intake holes 12 can be continuously changed in the height direction of the hot water storage tank 2.

Note that, in the water intake tube 38 of the storage type hot water supply system according to Embodiment 6 of the present invention, the multiple outer cylinder communication holes 139 or the multiple inner cylinder communication holes 141 are provided, whereby the multiple water intake holes are formed at different heights. However, it is possible to set the angle of the spiral outer cylinder communication hole 139 or the spiral inner cylinder communication hole 141 extended in the circumferential direction, to be larger than 360 degrees so as to form the multiple water intake holes at different heights.

### Embodiment 7

A water intake tube of a storage type hot water supply system according to Embodiment 7 is different from the water intake tube according to Embodiment 5 in the point of having a circumferential communication hole extended in the circumferential direction above a spiral outer cylinder communication hole and a spiral inner cylinder communication hole. The other structure and functions are the same as those of the storage type hot water supply system and the water intake tube according to Embodiment 5.

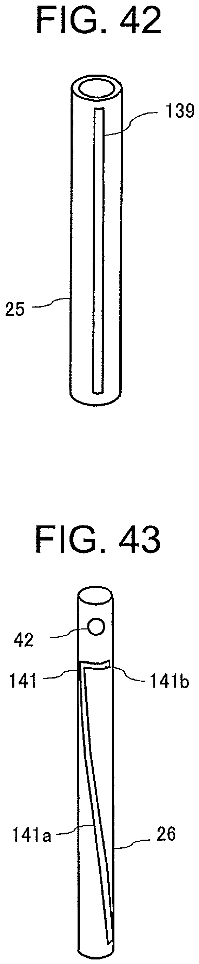

FIG. 41 is a perspective view of the water intake tube of the storage type hot water supply system according to Embodiment 7 of the present invention. Further, FIG. 42 is a perspective view of the outer cylinder of the water intake tube of the storage type hot water supply system according to Embodiment 7 of the present invention, and FIG. 43 is a perspective view of the inner cylinder of the water intake tube of the storage type hot water supply system according to Embodiment 7 of the present invention.

In the water intake tube 38 of the storage type hot water supply system according to Embodiment 7, on the side surface of the inner cylinder 26, a spiral inner cylinder communication hole 141a as an opening portion extended in the vertical direction and in the circumferential direction is formed. Above the inner cylinder communication hole 141a, an inner circumferential cylinder communication hole 141b as an opening portion extended in the circumferential direction is formed to be coupled to the inner cylinder communication hole 141a at the position corresponding to the upper portion of the hot water storage tank 2. Further, on the side surface of the outer cylinder 25, the outer cylinder communication hole 139 as an opening portion linearly extended in the vertical direction is formed. The inner cylinder 26 is rotated in the circumferential direction through driving of the drive motor 35, and the rotational angle is controlled, whereby the position of the water intake hole 12a of the water intake tube 38, which is formed of the spiral inner cylinder communication hole 141a and the outer cylinder communication hole 139 overlapped with each other, can be continuously changed in the height direction of the hot water storage tank 2. In this case, the height of the water intake hole 12b of the water intake tube 38 is fixed, which is formed of the inner circumferential cylinder communication hole 141b and the outer cylinder communication hole 139 overlapped with each other.

Next, with reference to FIG. 26, an operation of the storage type hot water supply system is described to which the water intake tube 38 having the above-mentioned structure is mounted. When the intermediate temperature water 16 in the hot water storage tank 2 is determined, for example, to exist at the position of the hot water temperature sensor 34c with use of the hot water temperature sensors 34a, 34b, 34c, 34d, and 34e, the drive motor 35 is controlled to move the water intake hole 12a to the position corresponding to the height of the hot water temperature sensor 34c. The intermediate temperature water 16 is taken-in from the water intake hole 12a, and the high temperature water 15 is taken-in from the water intake hole 12b positioned at the upper portion of the hot water storage tank 2. Then, the hot and cold water is taken out from the hot water storage tank 2 via the upper communication hole 42 of the inner cylinder 26 and the upper communication portion 21.

While detected with use of the hot and cold water temperature sensor 29, the temperature of the hot and cold water taken out from the hot water storage tank 2 is controlled, with use of the drive motor 35 which is controlled to continuously move the position of the water intake hole 12a in the height direction of the hot water storage tank, so as not to become lower than the required hot water supply temperature.

The hot and cold water thus taken out reaches the low temperature water mixing three-way valve 30 via the water flow pipe 27 and the high temperature water mixing three-way valve 28. In the low temperature water mixing three-way valve 30, the hot and cold water thus taken out and the low temperature water supplied from the water supply pipe 8 for hot water supply are mixed with each other. The mixed hot and cold water is supplied as water for hot water supply via the second downstream valve pipe 32 and the hot water tap 4.

Note that, the control of the required hot water supply temperature is conducted through changing the mixing ratio between the hot and cold water and the low temperature water with use of the low temperature water mixing three-way valve 30 activated based on the temperature which is detected with use of the hot water supply temperature sensor 33.

In the storage type hot water supply system according to Embodiment 7, the intermediate temperature water 16 and the high temperature water 15 are taken out from the water intake hole 12a and the water intake hole 12b, respectively. As a result, the temporal change in the temperature of the hot water taken out with use of the water intake tube 38 can be further reduced. Therefore, it is possible to further facilitate the temperature control for approximating the temperature to the required hot water supply temperature, the temperature control being performed with use of the low temperature water mixing three-way valve 30.

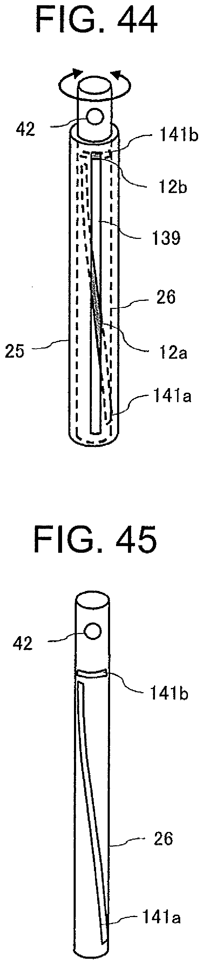

FIG. 44 is a perspective view illustrating another mode of the water intake tube of the storage type hot water supply system according to Embodiment 7 of the present invention, and FIG. 45 is a perspective view illustrating another mode of the inner cylinder of the water intake tube of the storage type hot water supply system according to Embodiment 7 of the present invention.

As illustrated in FIGS. 44 and 45, the spiral inner cylinder communication hole 141a and the inner circumferential cylinder communication hole 141b may be separately formed in the side surface of the inner cylinder 26 instead of being coupled to each other.

Further, the number and the configuration are arbitrary of the inner cylinder communication hole 141a as an opening portion formed on the side surface of the inner cylinder 26 and the outer cylinder communication hole 139 as an opening portion formed in the outer cylinder 25. it suffices that the inner cylinder 26 and the outer cylinder 25 are moved relatively to each other for overlapping the inner cylinder communication hole 141a, the inner circumferential cylinder communication hole 141b, and the outer cylinder communication hole 139 each other so as to form the multiple water intake holes 12 such that the high temperature water can be taken out of at least one of the water intake holes 12, whereby the positions of the multiple water intake holes 12 can be continuously changed in the height direction of the hot water storage tank 2.

Still further, the high temperature water 15 can be taken out from the water intake hole 12b, and hence when the position of the water intake hole 12a can be regulated with use of the drive motor such that the temperature of the hot and cold water detected with use of the hot and cold water temperature sensor 29 becomes equal to or higher than the required hot water supply temperature, it is possible to omit the hot water outlet pipe 7 and the high temperature water mixing three-way valve 28, to thereby achieve simplification of the storage type hot water supply system and cost reduction.

Note that, in the storage type hot water supply system according to Embodiment 7, the spiral inner cylinder communication hole 141a is formed in the side surface of the inner cylinder 26, and the inner circumferential cylinder communication hole 141b extended in the circumferential direction is formed above the spiral inner cylinder communication hole 141a, and the outer cylinder communication hole 139 linear in the vertical direction is formed in the side surface of the outer cylinder 25. However, it is also possible to form the spiral outer cylinder communication hole in the side surface of the outer cylinder 25, to form an outer circumferential cylinder communication hole extended in the circumferential direction above the outer cylinder communication hole, and to form the inner cylinder communication hole linear in the vertical direction in the side surface of the inner cylinder 26.

### Embodiment 8

A water intake tube of a storage type hot water supply system according to Embodiment 8 is different from the water intake tube according to Embodiment 9 in the point of having a circumferential communication hole extended in the circumferential direction below a spiral outer cylinder communication hole and a spiral inner cylinder communication hole. The other structure and functions are the same as those of the storage type hot water supply system and the water intake tube according to Embodiment 9.

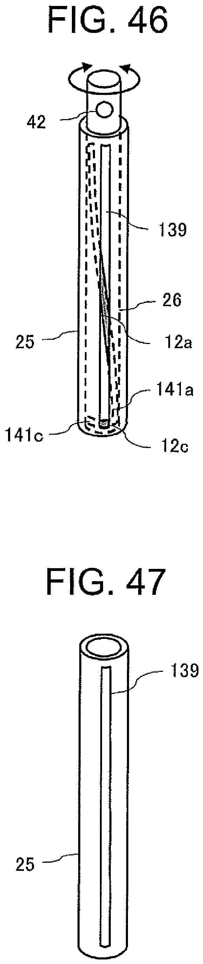

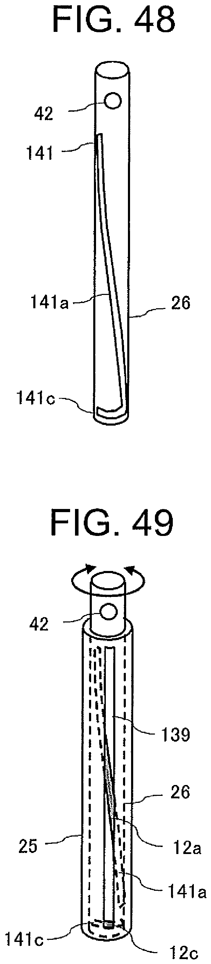

FIG. 46 is a perspective view of the water intake tube of the storage type hot water supply system according to Embodiment 8 of the present invention. Further, FIG. 47 is a perspective view of the outer cylinder of the water intake tube of the storage type hot water supply system according to Embodiment 8 of the present invention, and FIG. 48 is a perspective view of the inner cylinder of the water intake tube of the storage type hot water supply system according to Embodiment 8 of the present invention.

In the water intake tube 38 as a water intake tube body of the storage type hot water supply system according to Embodiment 8, a spiral inner cylinder communication hole 141a as an opening portion extended in the vertical direction and in the circumferential direction is formed on the side surface of the inner cylinder 26. Below the inner cylinder communication hole 141a, an inner circumferential cylinder communication hole 141c as an opening portion extended in the circumferential direction is formed to be coupled to the inner cylinder communication hole 141a at the position corresponding to the lower portion of the hot water storage tank 2. Further, the outer cylinder communication hole 139 as an opening portion linearly extended in the vertical direction is formed on the side surface of the outer cylinder 25. The inner cylinder 26 is rotated in the circumferential direction through driving of the drive motor 35, and the rotational angle is controlled, whereby the position of the water intake hole 12a of the water intake tube 38, which is formed of the spiral inner cylinder communication hole 141a and the outer cylinder communication hole 139 overlapped with each other, can be continuously changed in the height direction of the hot water storage tank 2. In this case, the height of the water intake hole 12c of the water intake tube 38 is fixed, which is formed of the inner circumferential cylinder communication hole 141c and the outer cylinder communication hole 139 overlapped with each other.

Next, with reference to FIG. 26, an operation of the storage type hot water supply system is described to which the water intake tube 38 having the above-mentioned structure is mounted. When the intermediate temperature water 16 in the hot water storage tank 2 is determined, for example, to exist at the position of the hot water temperature sensor 34c with use of the hot water temperature sensors 34a, 34b, 34c, 34d, and 34e, the drive motor 35 is controlled to move the water intake hole 12a to the position corresponding to the height of the hot water temperature sensor 34c. The intermediate temperature water 16 is taken-in from the water intake hole 12a, and the low temperature water 17 is taken-in from the water intake hole 12c positioned at the lower portion of the hot water storage tank 2. Then, the hot and cold water is taken out from the hot water storage tank 2 via the upper communication hole 42 of the inner cylinder 26 and the upper communication portion 21.

While detected with use of the hot and cold water temperature sensor 29, the temperature of the hot and cold water taken out from the hot water storage tank 2 is controlled so as not to become lower than the required hot water supply temperature, with use of the drive motor 35 which is controlled to continuously move the position of the water intake hole 12a in the height direction of the hot water storage tank, by using the high temperature water mixing three-way valve 28 for controlling the amount of the hot and cold water passing the water flow pipe 27 and of the high temperature water passing the hot water outlet pipe 7.

The hot and cold water controlled in the high temperature water mixing three-way valve 28 reaches the low temperature water mixing three-way valve 30 via the first downstream valve pipe 5. In the low temperature water mixing three-way valve 30, the hot and cold water taken out and the low temperature water supplied from the water supply pipe 8 for hot water supply are mixed with each other. The mixed hot and cold water is supplied as water for hot water supply via the second downstream valve pipe 32 and the hot water tap 4.

Note that, the control of the required hot water supply temperature is conducted through changing the mixing ratio between the hot and cold water and the low temperature water with use of the low temperature water mixing three-way valve 30 activated based on the temperature which is detected with use of the hot water supply temperature sensor 33.

In the storage type hot water supply system according to Embodiment 8, the intermediate temperature water 16 and the low temperature water 17 are taken out from the water intake hole 12a and the water intake hole 12c, respectively, so as to be mixed, with use of the high temperature water mixing three-way valve 28, with the high temperature water 15 taken out through the hot water outlet pipe 7. As a resuft, in the high temperature water mixing three-way valve 28, the temperature of the hot and cold water thus mixed is controlled to be approximate to the required hot water supply temperature. Therefore, it is possible to further facilitate the temperature control for approximating the temperature to the required hot water supply temperature, the temperature control being performed with use of the low temperature water mixing three-way valve 30.

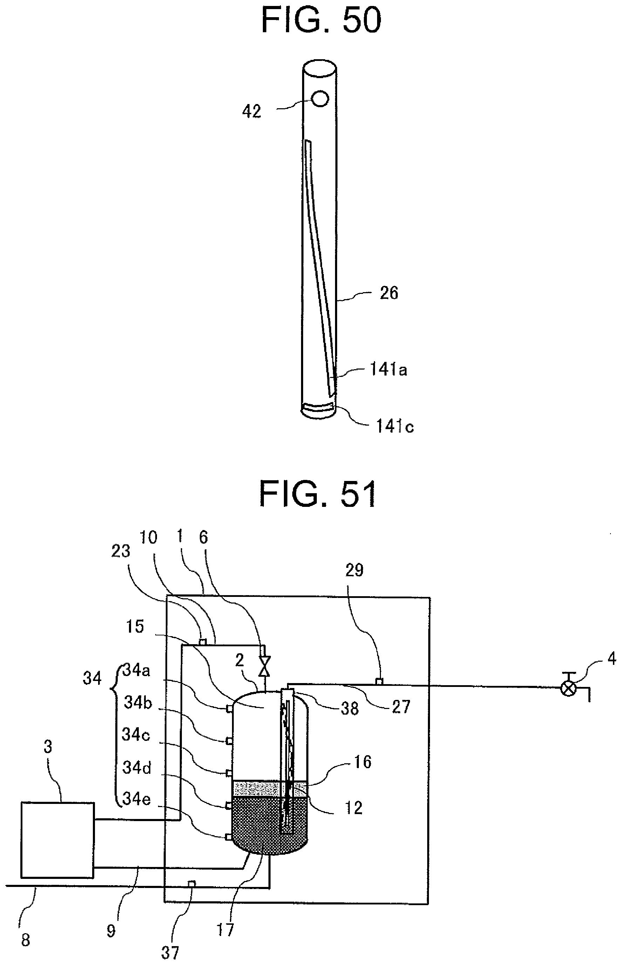

FIG. 49 is a perspective view illustrating another mode of the water intake tube of the storage type hot water supply system according to Embodiment 8 of the present invention, and FIG. 50 is a perspective view illustrating another mode of the inner cylinder of the water intake tube of the storage type hot water supply system according to Embodiment 8 of the present invention.

As illustrated in FIGS. 49 and 50, the spiral inner cylinder communication hole 141a and the inner circumferential cylinder communication hole 141c may be separately formed in the side surface of the inner cylinder 26 instead of being coupled to each other.

Further, the number and the configuration are arbitrary of the inner cylinder communication hole 141 formed in the inner cylinder 26 and the outer cylinder communication hole 139 formed in the outer cylinder 25. It suffices that the inner cylinder 26 and the outer cylinder 25 are moved relatively to each other for overlapping the inner cylinder communication hole 141a, the inner circumferential cylinder communication hole 141c, and the outer cylinder communication hole 139 each other so as to form the multiple water intake holes 12 such that the low temperature water can be taken out of at least one of the water intake holes 12, whereby the positions of the multiple water intake holes 12 can be continuously changed in the height direction of the hot water storage tank 2.

Still further, the low temperature water 17 can be taken out from the water intake hole 12c, and hence when the temperature of the hot and cold water detected with use of the hot and cold water temperature sensor 29 can be controlled to become equal to the required hot water supply temperature, it is possible to omit the water supply pipe 31 for hot water supply and the low temperature water mixing three-way valve 30, to thereby achieve simplification of the storage type hot water supply system and cost reduction.

### Embodiment 9

A water intake tube of a storage type hot water supply system according to Embodiment 9 is different from the water intake tube according to Embodiment 9 in the point that circumferential communication holes extended in the circumferential direction are provided above and below a spiral outer cylinder communication hole or a spiral inner cylinder communication hole, an at least one of the outer cylinder and the inner cylinder is moved in the vertical direction. The other structure and functions are the same as those of the storage type hot water supply system and the water intake tube according to Embodiment 9.

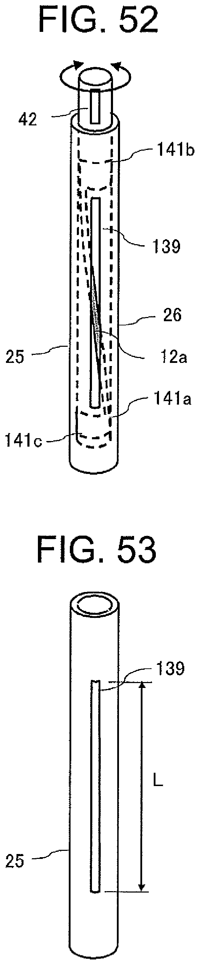

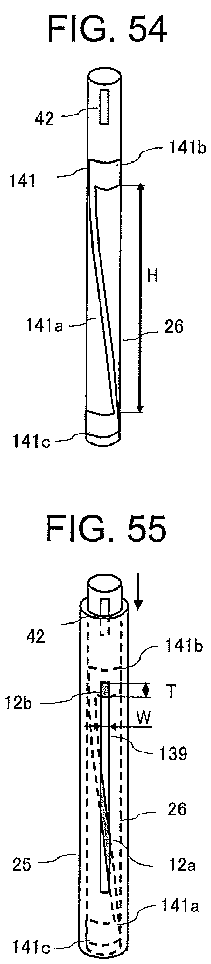

FIG. 51 is a structural diagram of the water intake tube of the storage type hot water supply system according to Embodiment 9 of the present invention, and FIG. 52 is a perspective view of the water intake tube of the storage type hot water supply system according to Embodiment 9 of the present invention. Further, FIG. 53 is a perspective view of the outer cylinder of the water intake tube of the storage type hot water supply system according to Embodiment 9 of the present invention, and FIG. 54 is a perspective view of the inner cylinder of the water intake tube of the storage type hot water supply system according to Embodiment 9 of the present invention.

In the water intake tube 38 of the storage type hot water supply system according to Embodiment 9, a spiral inner cylinder communication hole 141a as an opening portion extended in the vertical direction and in the circumferential direction is formed on the side surface of the inner cylinder 26. Above and below the inner cylinder communication hole 141a, inner circumferential cylinder communication holes 141b and 141c as opening portions extending in the circumferential direction are formed. The inner cylinder communication hole 141a and the inner circumferential cylinder communication hole 141b are coupled to each other, and the inner cylinder communication hole 141a and the inner circumferential cylinder communication hole 141c are coupled to each other. Further, the outer cylinder communication hole 139 as an opening portion linearly extended in the vertical direction is formed on the side surface of the outer cylinder 25, the outer cylinder communication hole 139 having a height L (distance in the vertical direction) smaller than a height H (distance in the vertical direction) measured from the lower end of the inner circumferential cylinder communication hole 141b to the upper end of the inner circumferential cylinder communication hole 141c. In this context, in accordance with the rotation of the inner cylinder 26, it is possible to continuously change the position of the water intake hole 12a of the water intake tube 38, which is formed of the spiral inner cylinder communication hole 141a and the outer cylinder communication hole 139 overlapped with each other, in the height direction of the hot water storage tank 2.

Further, the water intake tube 38 as a water intake tube body has a sliding mechanism capable of moving the inner cylinder 26 in the vertical direction. With use of the inner cylinder 26 moved downward in the vertical direction, it is possible to take out only the intermediate temperature water, the intermediate temperature water and the high temperature water, or the intermediate temperature water and the low temperature water.

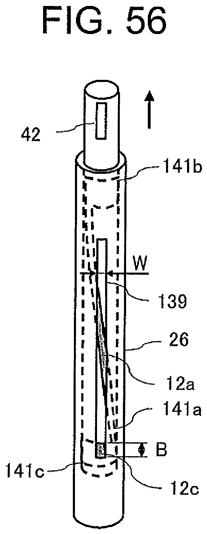

FIG. 55 is a perspective view illustrating a case where the inner cylinder is moved downward in the vertical direction in a water intake tube of a storage type hot water supply system according to Embodiment 9 of the present invention. Further, FIG. 56 is a perspective view illustrating a case where the inner cylinder is moved upward in the vertical direction in a water intake tube of a storage type hot water supply system according to Embodiment 9 of the present invention.

Next, with reference to FIGS. 52, 55, and 56, an operation of the storage type hot water supply system is described to which the water intake tube 38 having the above-mentioned structure is mounted. When the intermediate temperature water 16 in the hot water storage tank 2 is determined, for example, to exist at the position of the hot water temperature sensor 34c with use of the hot water temperature sensors 34a, 34b, 34c, 34d, and 34e, as illustrated in FIG. 52, the drive motor 35 is controlled to move the water intake hole 12a to the position corresponding to the height of the hot water temperature sensor 34c. The intermediate temperature water 16 is taken-in from the water intake hole 12a, and then the hot and cold water is taken out from the hot water storage tank 2 via the upper communication hole 42 of the inner cylinder 26 and the upper communication portion 21.

In this case, when the temperature of the hot and cold water detected with use of the hot and cold water temperature sensor 29 is lower than the required hot water supply temperature, as illustrated in FIG. 55, the inner cylinder 26 is moved downward in the vertical direction with use of the sliding mechanism such that the high temperature water 15 is take out from the water intake hole 12b so as to be mixed with the hot and cold water taken out from the water intake hole 12a. The inner cylinder 26 is regulated in the vertical direction so as to set the temperature of the hot and cold water detected with use of the hot and cold water temperature sensor 29 to be equal to the required hot water supply temperature, to thereby determine the appropriate opening area of the water intake hole 12b.

Meanwhile, when the temperature of the hot and cold water detected with use of the hot and cold water temperature sensor 29 is higher than the required hot water supply temperature, as illustrated in FIG. 56, the inner cylinder 26 is moved upward in the vertical direction with use of the sliding mechanism such that the low temperature water 17 is taken out from the water intake hole 12c so as to be mixed with the hot and cold water taken out from the water intake hole 12a. The inner cylinder 26 is regulated in the vertical direction so as to set the temperature of the hot and cold water detected with use of the hot and cold water temperature sensor 29 to be equal to the required hot water supply temperature, to thereby determine the appropriate opening area of the water intake hole 12c.

The hot and cold water thus taken out flows through the water flow pipe 27 so as to be supplied as water for hot water supply via the hot water tap 4.

In this context, the inner cylinder 26 is moved downward in the vertical direction so as to change the length T over which the inner circumferential cylinder communication hole 141b and the outer cylinder communication hole 139 are overlapped with each other. As a result, it is possible to change the opening area of the water intake hole 12b formed of the inner circumferential cylinder communication hole 141b and the outer cylinder communication hole 139 overlapped with each other. In this case, the opening area of the water intake hole 12b is a product of the length T and a width W of the outer cylinder communication hole.

Meanwhile, the inner cylinder 26 is moved upward in the vertical direction so as to change a length B over which the inner circumferential cylinder communication hole 141c and the outer cylinder communication hole 139 are overlapped with each other. As a result, it is possible to change the opening area of the water intake hole 12c formed of the inner circumferential cylinder communication hole 141c and the outer cylinder communication hole 139 overlapped with each other. In this case, the opening area of the water intake hole 12c is a product of the length B and the width W of the outer cylinder communication hole.

In the water intake tube 38 of the storage type hot water supply system according to Embodiment 9, it is possible to take out the high temperature water 15 from the water intake hole 12b while taking out the intermediate temperature water 16 from the water intake hole 12a. Further, it is also possible to take out the low temperature water 17 from the water intake hole 12c while taking out the intermediate temperature water 16 from the water intake hole 12a. In addition, it is possible to control the flow rate of the high temperature water 15 taken out from the water intake hole 12b, or the flow rate of the low temperature water 17 taken out from the water intake hole 12c. As a result, the hot and cold water of a temperature equal to the required hot water supply temperature can be taken out with use of only the water intake tube 38, whereby the high temperature water mixing three-way valve 28 and the low temperature water mixing three-way valve 30 can be omitted so as to simplify the storage type hot water supply system and to achieve cost reduction.

Note that, in the storage type hot water supply system according to Embodiment 9, the spiral inner cylinder communication hole 141a is formed in the side surface of the inner cylinder 26, and the inner circumferential cylinder communication holes 141b and 141c extended in the circumferential direction are formed above and below the inner cylinder communication hole 141a, and the outer cylinder communication hole 139 linear in the vertical direction is formed in the side surface of the outer cylinder 25. However, it is also possible to form the spiral outer cylinder communication hole in the side surface of the outer cylinder 25, to form outer circumferential cylinder communication holes extended in the circumferential direction above and below the outer cylinder communication hole, and to form the inner cylinder communication hole linear in the vertical direction in the side surface of the inner cylinder 26.

### Embodiment 10

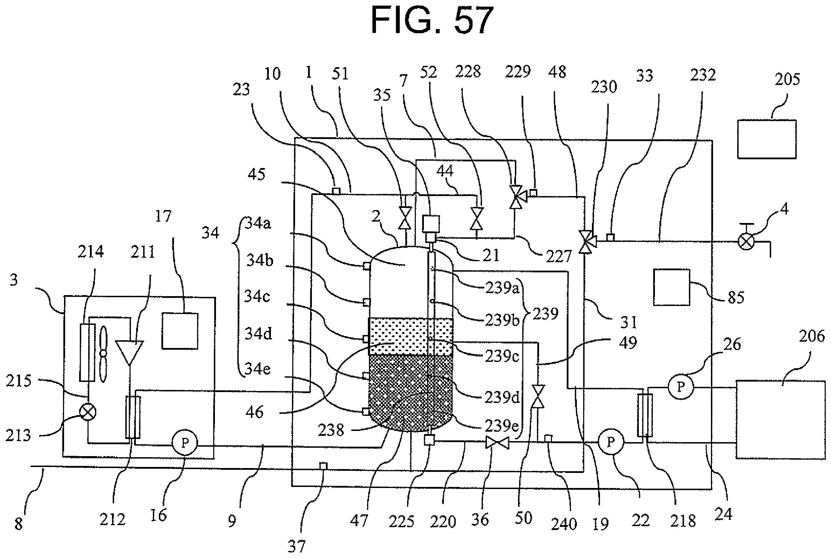

FIG. 57 is a structural diagram of a storage type hot water supply system according to Embodiment 10 of the present invention.

The storage type hot water supply system includes a hot water storage tank unit 1 having a hot water storage tank 2, a heat pump unit 3 as a heater for heating the hot and cold water in the hot water storage tank 2, a hot water tap 4 used in the kitchen, the restroom, and the like, and a heat exchanger 218 for performing, heat exchange of high temperature water fed from the hot water storage tank 2 with a heating terminal 206 including a floor heating system, a bath, and a bathroom dryer. Further, in the hot water storage tank 2, a cylindrical intermediate temperature water passing pipe 238 is provided so as to be extended in the upper and lower direction (substantially vertical direction). Note that, in the case of using the floor heating system or the like the heating terminal 206 itself may function as the heat exchanger 218.

A heat pump refrigerant circuit 215 of the heat pump unit 3 includes a compressor 211, a refrigerant-water heat exchanger 212 as a condenser, an electronic expansion valve 213, and an evaporator 214 of forced air-cooled type.

An operation of one cycle is performed in which carbon dioxide as a natural refrigerant compressed in the compressor 211 is subjected to heat radiation in the refrigerant-water heat exchanger 212 so as to be liquidized, subjected to decompressive expansion in the electronic expansion valve 213, vaporized in the evaporator 214 owing to atmospheric heat, and then flows into the compressor 211 again.

In the operation of one cycle, low temperature water (5°C, for example) is heated to obtain high temperature water (90°C, for example) through an intermediation of the refrigerant-water heat exchanger 212 in the heat pump refrigerant circuit 215. In this case, carbon dioxide as a natural refrigerant is compressed in the supercritical state with use of the refrigerant-water heat exchanger 212, and hence the hot and cold water can be efficiently heated to have high temperature.

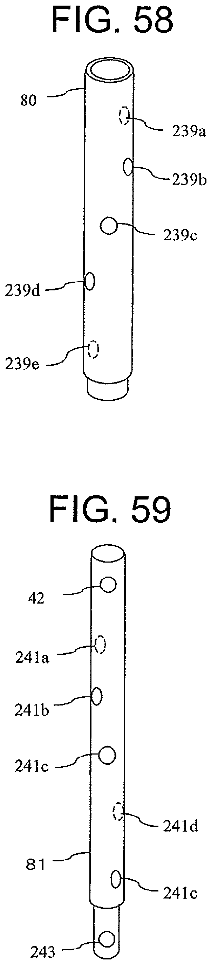

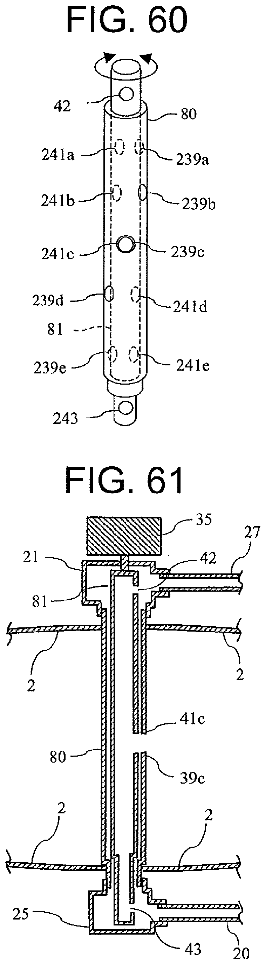

FIG. 58 is a perspective view of an outer cylinder 80 of the intermediate temperature water passing pipe 238 illustrated in FIG. 57, and FIG. 59 is a perspective view of an inner cylinder 81 of the intermediate temperature water passing pipe 238 illustrated in FIG. 57. Further, FIG. 60 is a perspective view illustrating the intermediate temperature water passing pipe 238 as a whole of FIG. 57, and FIG. 61 is a sectional view of the intermediate temperature water passing pipe 238.

The intermediate temperature water passing pipe 238 as a pipe body includes the outer cylinder 80 and the inner cylinder 81 provided inside the outer cylinder 80 and slidably in the circumferential direction. The outer cylinder 80 is provided with outer cylinder holes 239a, 239b, 239c, 239d, and 239e as opening portions having the same diameter and formed at intervals in the upper and lower direction and the circumferential direction, that is, at different positions in the upper and lower direction and the circumferential direction. The inner cylinder 81 is provided with inner cylinder holes 241a, 241b, 241c, 241d, and 241e as opening positions having the same diameter and formed at intervals in the upper and lower direction and the circumferential direction, that is, at different positions in the upper and lower direction and the circumferential direction.

The upper portion of the inner cylinder 81 is provided with the upper communication hole 42. Further, the upper portion of the inner cylinder 81 is covered with the upper communication portion 21. The leading end portion of an upper intermediate-temperature-water passing pipe 227 is passed through the side surface of the upper communication portion 21. Further, the drive motor 35 is mounted to the top portion of the inner cylinder 81. The inner cylinder 81 is rotated in the circumferential direction through driving of the drive motor 35.

A small diameter portion at the lower portion of the inner cylinder 81 is provided with a lower communication hole 243. Further, the small diameter portion is covered with a lower communication portion 225. The leading end portion of a lower intermediate-temperature-water passing pipe 220 is passed through the side surface of the lower communication portion 225.

Owing to the inner cylinder 81 rotated through driving of the drive motor 35, it is possible to form at least one communication portion with use of the outer cylinder holes 239a, 239b, 239c, 239d, and 239e formed in the outer cylinder 80 and the inner cylinder holes 241a, 241b, 241c, 241d, and 241e formed in the inner cylinder 81 respectively overlapped with each other. Thus, the height (position in the vertical direction) of the communication portion can be immediately changed though which hot and cold water flows. In FIG. 60, the outer cylinder hole 239c formed in the outer cylinder 80 and the inner cylinder hole 241c formed in the inner cylinder 81 are overlapped with each other at the height corresponding to the outer cylinder hole 239c of the outer cylinder 80, to thereby form the communication portion.

The inner cylinder 81 and the outer cylinder 80 function, at a boiling-up operation, as a pipe body for heating through which the hot and cold water heated in the heat pump unit 3 flows thereinto from the upper portion and flows out from the communication portion, and at a heating operation, as a pipe body for space heating through which the hot and cold water subjected to heat exchange in the heat exchanger 218 flows thereinto from the lower portion and flows out from the communication portion.

Further, the inner cylinder 81 and the outer cylinder 80 function, at a hot water supply operation, as a pipe body through which the hot and cold water flows thereinto from the communication portion and flows out from the upper portion.

In this manner, at the boiling-up operation or the heating operation, the intermediate temperature water passing pipe 238 may be used as a pipe body for heating or a pipe body for space heating so as to allow the hot and cold water to flow into the hot water storage tank at an arbitrary height therein. Further, at the hot water supply operation, the intermediate temperature water passing pipe 238 may be used as a pipe body for hot water supply so as to take out the hot and cold water at the arbitrary height in the hot water storage tank 2.

To the outer peripheral surface of the hot water storage tank 2, the hot water temperature sensor 34 is provided for detecting the temperature of hot and cold water in the hot water storage tank 2. In this embodiment, five hot water temperature sensors 34a, 34b, 34c, 34d, and 34e are attached at predetermined intervals in the upper and lower direction.

Further, the hot water supply temperature sensor 33 for detecting the temperature of the hot and cold water is attached to a pipe 232 provided downstream of the valve for mixing hot water to be supplied, the hot and cold water flowing from the hot water storage tank 2 to the hot water tap 4 through the upper intermediate-temperature-water passing pipe 227, a pipe 48 provided downstream of the valve for mixing intermediate temperature water, and the pipe 232 provided downstream of the valve for mixing hot water to be supplied.

Further, a heating temperature sensor 23 for detecting the boiling-up temperature of the hot and cold water heated in the heat pump unit 3 is attached to the high temperature water returning pipe 10.

Still further, a space-heating temperature sensor 240 for detecting the temperature of the hot and cold water subjected to heat exchange in the heat exchanger 218 is attached to the lower intermediate-temperature-water passing pipe 220.

Next, an operation of the storage type hot water supply system having the above-mentioned structure is described.

The operation in the storage type hot water supply system includes the hot water supply operation for supplying hot water from the hot water tap 4, the boiling-up operation for boiling hot water with use of the heat pump unit 3, and the heating operation for performing floor heating and additional heating of the bath with use of the heating terminal 206.

In the following, there are sequentially described the cases where the hot water supply operation, the boiling-up operation, and the heating operation are independently performed and are performed in combination.

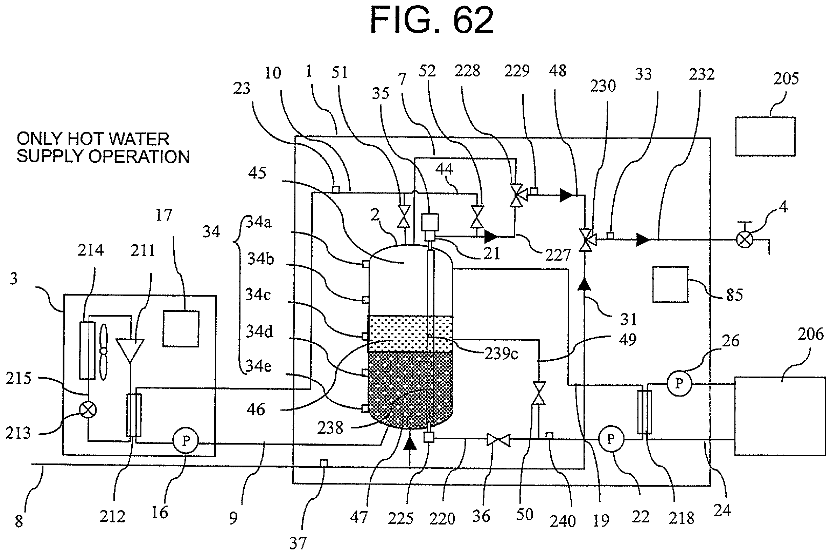

FIG. 62 is an operational view illustrating a case where the storage type hot water supply system performs only the hot water supply operation.

In the hot water storage tank 2, the hot and cold water is stored in the temperature distribution having a temperature gradient in the upper and lower direction. In the hot water storage tank 2, high temperature water 45, intermediate temperature water 46, and low temperature water 47 are filled in the stated order from the top. For example, the temperature of the high temperature water 45 is 90°C, and the temperature of the low temperature water 47 is 5°C. The temperature of the intermediate temperature water 46 has a temperature gradient between the high temperature water and the low temperature water.

In this case, the intermediate temperature water 46 cannot be used as a heat source for the heating operation because of low temperature therefor. Further, the intermediate temperature water 46 has a little temperature difference and low energy consumption efficiency even when being heated in the heat pump unit 3, and hence it is required that the intermediate temperature water 46 be used for hot water supply with priority.

When a user of hot water supply set a hot water supply temperature (required hot water supply temperature) with use of a setting panel 205, the height at which the intermediate temperature water 46 exists can be observed based on the temperature detected with use of the hot water temperature sensors 34a, 34b, 34c, 34d, and 34e provided on the side surface of the hot water storage tank 2. Simultaneously, the temperature of the intermediate temperature water 46 and the required hot water supply temperature are compared with each other.

In this case, in Embodiment 10, there is described the case where the five hot water temperature sensors 34a, 34b, 34c, 34d, and 34e are provided. However, with the provision of more hot water temperature sensors 34a, 34b, 34c, 34d, and 34e, the height at which the intermediate temperature water 46 exists and temperature thereof can be more accurately detected.

For example, the hot water temperature sensors 34a, 34b, 34c, 34d, and 34e are mounted in the central portion of the hot water storage tank 2, where the intermediate temperature water is likely to be distributed, at intervals each of which is equal to or smaller than 100 mm, the length of interval being determined with reference to the layer thickness of approximately 100 mm of the main intermediate temperature water. As a result, the detection accuracy for the height at which the intermediate temperature water 46 exists and temperature thereof is increased.

Further, in Embodiment 10, while provided on the outer peripheral surface of the hot water storage tank 2, the hot water temperature sensor 34 may be provided on the inner peripheral surface of the hot water storage tank 2 so as to directly detect the temperature of the hot and cold water in the hot water storage tank 2.

For example, when the hot water temperature sensors 34b, 34c, and 34d detect 90°C, 40°C, and 5°C, respectively, it can be determined that the intermediate temperature water exists near the height of the hot water temperature sensor 34c because the temperature detected by the hot water temperature sensor 34c is higher than 5°C and lower than 90°C. Further, when the multiple hot water temperature sensors 34 detect the temperature higher than 5°C and lower than 90°C, it may be determined that the intermediate temperature water exists at the position of one of the hot water temperature sensors 34, which indicates a temperature approximate to the required hot water supply temperature. Still further, when the hot water temperature sensors 34c and 34d detect 90°C and 5°C, respectively, and when none of the other hot water temperature sensors 34 detects the temperature higher than 5°C and lower than 90°C, it may be determined that the intermediate temperature water exists at a midpoint of the hot water temperature sensors 34c and 34d between which the temperature difference is largest.

When it is determined that the intermediate temperature water 46 exists at the height of the hot water temperature sensor 34c, the drive motor 35 is driven for rotating the inner cylinder 81 so as to communicate each other a hole 239c of the outer cylinder 80 of the intermediate temperature water passing pipe 238 and a hole 241c of the inner cylinder 81, which are at substantially the same height of the hot water temperature sensor 34c, to thereby form the communication portion. With this structure, the intermediate temperature water 46 is fed to the upper communication portion 21 through the intermediate temperature water passing pipe 238, and supplied to the hot water tap 4 through the upper intermediate-temperature-water passing pipe 227, the pipe 48 provided downstream of the valve for mixing intermediate temperature water, and the pipe 232 provided downstream of the valve for mixing hot water to be supplied.

Further, when the temperature at the hot water temperature sensor 34c is higher than the required hot water supply temperature, an intermediate temperature water mixing valve 228 as a three-way valve is activated for taking out only the intermediate temperature water 46 from the upper intermediate-temperature-water passing pipe 227, whereby it is confirmed that the temperature at the hot water temperature sensor 34c is higher than the required hot water supply temperature with use of a temperature sensor 229 for mixed intermediate temperature water, which is attached to the pipe 48 provided downstream of the valve for mixing intermediate temperature water.

After that, a hot water supply mixing valve 230 as a three-way valve is activated so as to mix each other the intermediate temperature water from the pipe 48 provided downstream of the valve for mixing intermediate temperature water and the low temperature water from the hot water supply pipe 31, and the temperature of the hot and cold water after mixing is detected with use of the hot water supply temperature sensor 33 attached to the pipe 232 provided downstream of the valve for mixing hot water to be supplied. Owing to the hot water supply mixing valve 230 activated as described above, the temperature of the hot and cold water after mixing is controlled to be equal to the required hot water supply temperature, the mixed water of the controlled temperature is supplied as hot water from the hot water tap 4.

The hot water supply pipe 31 is connected to a water supply pipe 8, and the low temperature water is pumped into the hot water storage tank 2 with the driving of a pressure pump (not shown) mounted to the water supply pipe 8, and also flows through the hot water supply pipe 31. The temperature of the low temperature water is detected with use of a supplied water temperature sensor 37 attached to the water supply pipe 8.

Further, simultaneously with hot water supply, the low temperature water is supplied through the water supply pipe 8 into the hot water storage tank 2 from the bottom portion thereof in a pressurized manner, and hence the temperature of the intermediate temperature water 46 is decreased. When the temperature at the temperature sensor 229 for mixed intermediate temperature water becomes lower than the required hot water supply temperature, the opening degree of the intermediate temperature water mixing valve 228 is changed for taking out the high temperature water 45 in the hot water storage tank 2 through the hot water outlet pipe 7, and the detected temperature of the temperature sensor 229 for mixed intermediate temperature water is controlled to be equal to the required hot water supply temperature.

Note that, at the hot water supply operation, while the intermediate temperature water 46 is fed also to the lower communication portion 225, a heating return valve 36 which is attached to the lower intermediate-temperature-water passing pipe 220 is closed, and hence the intermediate temperature water 46 does not flow into the lower intermediate-temperature-water passing pipe 220 via the lower communication portion 225.

As described above, with simultaneous use of the intermediate temperature water passing pipe 238 and one of the hot water outlet pipe 7 and the hot water supply pipe 31, the intermediate temperature water of a desired temperature can be supplied to the hot water tap 4 even when the temperature of the intermediate temperature water 46 is lower or higher than the required hot water supply temperature.

As described above, the intermediate temperature water 46 can be taken out with priority and use of the intermediate temperature water passing pipe 238, and hence the intermediate temperature water 46 can be effectively used for hot water supply. As a result, it is possible to decrease the intermediate temperature water 46 occupying the hot water storage tank 2 so as to store the high temperature water 45 more, whereby the lack of high temperature water in the hot water storage tank 2 can be overcome.

Further, the intermediate temperature water 46 is removed, whereby a high COP can be secured.

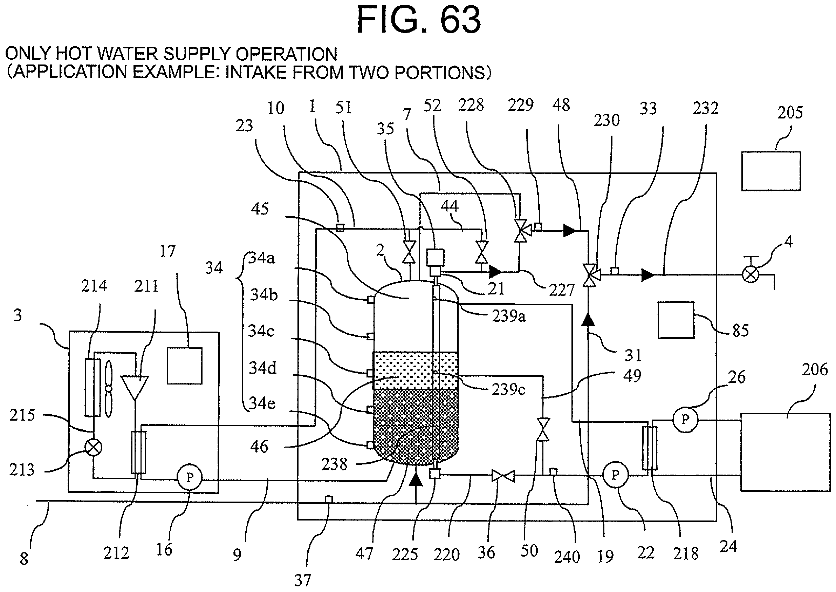

FIG. 63 illustrates an application example of the case where the storage type hot water supply system performs only the hot water supply operation.

In this application example, there is illustrated the example in which the intermediate temperature water 46 and the high temperature water 45 are simultaneously taken out, through the intermediate temperature water passing pipe 238, from the region of the intermediate temperature water 46 and region of the high temperature water 45 in the hot water storage tank 2, respectively.

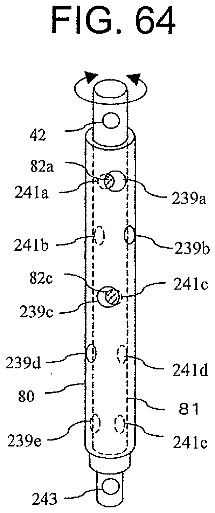

In this case, as illustrated in FIG. 64, the communication hole 239c of the outer cylinder 80 and the hole 241c of the inner cylinder 81 which corresponds to the position of the intermediate temperature water 46 are communicated with each other so as to form a communication portion, and the communication hole 239a of the outer cylinder 80 and the hole 241a of the inner cylinder 81 which corresponds to the position of the high temperature water 45 are communicated with each other so as to form a communication portion. With this structure, it is unnecessary to mix the intermediate temperature water 46 and the high temperature water 45 with use of the intermediate temperature water mixing valve 228, whereby the control of the hot water supply is facilitated.

Further, even when the temperature of the intermediate temperature water 46 becomes lower than the required hot water supply temperature, the intermediate temperature water can be obtained and taken out from the hot water storage tank 2 through taking out of the high temperature water 45 from the hot water storage tank 2 via hot water outlet pipe 7 so as to be mixed in the intermediate temperature water mixing valve 228.

Note that, through fine control of the rotational angle of the drive motor 35, there may be changed opening areas 82a and 82c which are formed of the outer cylinder holes 239a and 239c of the outer cylinder 80 and the inner cylinder holes 241a and 241c of the inner cylinder 81 overlapped with each other, respectively.

As described above, through continuous control of respective overlapping degrees between the inner cylinder holes 241a and 241b and the outer cylinder holes 239a and 239c, it is possible to control the flow rate of the high temperature water 45 or the intermediate temperature water 46 and the ratio therebetween, to thereby achieve more accurate temperature control.

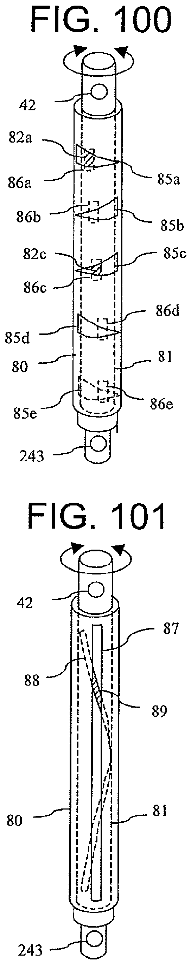

Further, as illustrated in FIG. 100, the outer cylinder holes of the outer cylinder 80 are defined as outer cylinder holes 85a, 85b, 85c, 85d, and 85e whose heights are varied in the circumferential direction, and the inner cylinder holes of the inner cylinder 81 are defined as rectangular inner cylinder holes 86a, 86b, 86c, 86d, and 86e whose heights are the same in the circumferential direction. In this context, through fine control of the rotational angle of the drive motor 35, there may be changed the opening areas 82a and 82c which are formed of the outer cylinder holes 85a and 85c of the outer cylinder 80 and the inner cylinder holes 86a and 86c of the inner cylinder 81 overlapped with each other, respectively.

As described above, the opening areas 82a and 82c are changed with high accuracy, which are respectively formed of the outer cylinder holes 85a and 85c and the inner cylinder holes 86a and 86c overlapped with each other, whereby it is possible to more accurately control the flow rate of the high temperature water 45 or the intermediate temperature water 46 and the ratio therebetween, to thereby achieve further more accurate temperature control.

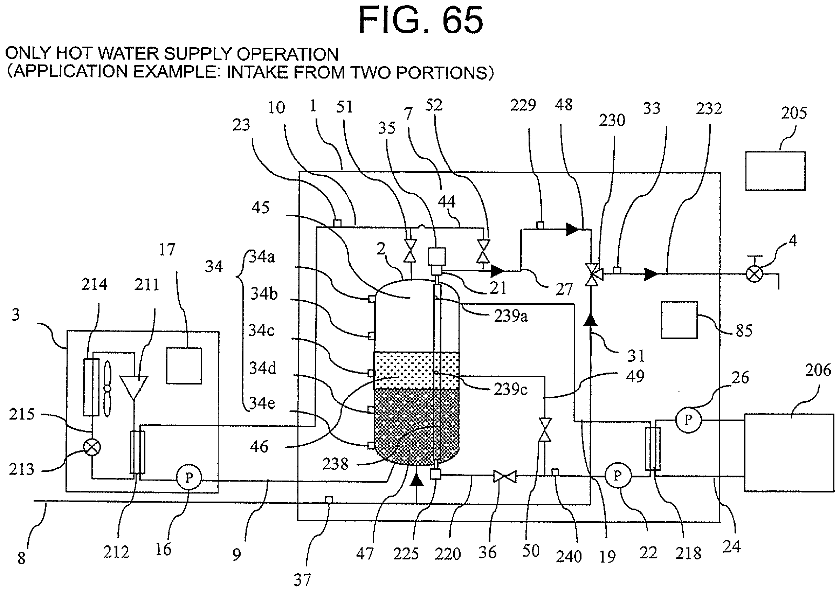

FIG. 65 illustrates another application example of the case of performing only the hot water supply operation.

In this application example, the flow rate of the intermediate temperature water 46 or the high temperature water 45 and the ratio therebetween can be controlled with use of the intermediate temperature water passing pipe 238.

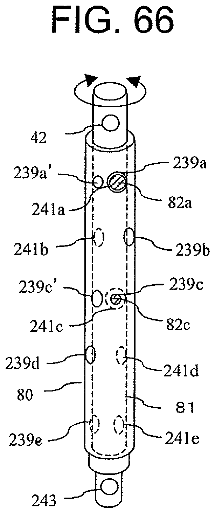

In this case, as illustrated in FIG. 66, the outer cylinder holes 239a and 239a' and the outer cylinder holes 239c and 239c' respectively having different diameters are formed in the region of the outer cylinder 80 at the same height. The drive motor 35 is rotated for changing the opening areas 82a and 82c of the communication portions corresponding to the positions of the high temperature water 45 and the intermediate temperature water 46, thereby controlling the flow rate of the intermediate temperature water 46 or the high temperature water 45 and the ratio therebetween.

With this structure, the necessity of the above-mentioned fine control of the rotational angle of the drive motor 35 is eliminated, which is performed for controlling the respective overlapping amounts between the outer cylinder holes 239a, 239a', 239c, and 239c' of the outer cylinder 80 and the inner cylinder holes 241a and 241c of the inner cylinder 81. As a result, the flow rate of the high temperature water 45 or the intermediate temperature water 46 and the ratio therebetween is easily controlled.

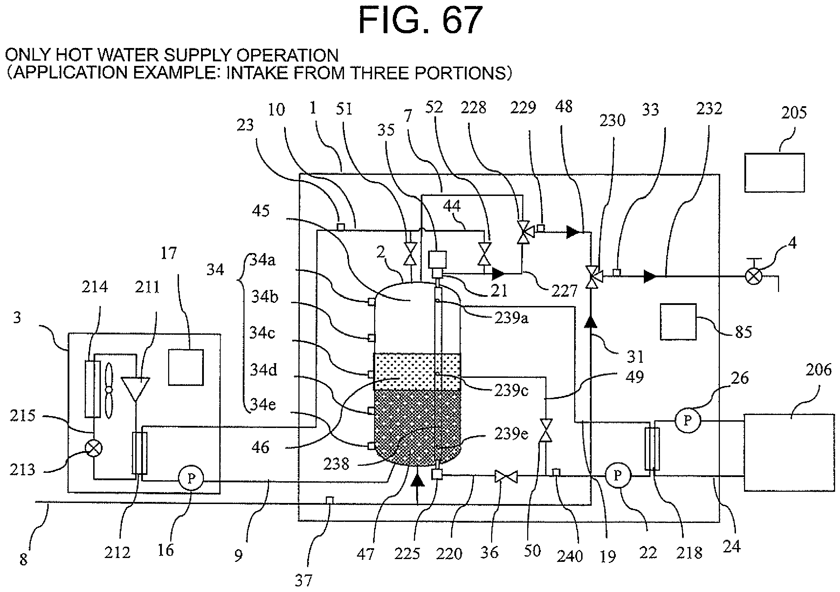

Further, as illustrated in FIG. 67, at the heights of the intermediate temperature water 46, the high temperature water 45, and the low temperature water 47 in the hot water storage tank 2, the intermediate temperature water 46, the high temperature water 45, and the low temperature water 47 may be respectively and simultaneously taken out through the intermediate temperature water passing pipe 238.

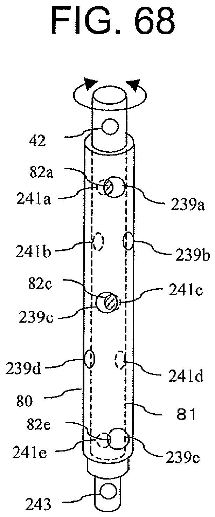

In this case, as illustrated in FIG. 68, the rotational angle of the drive motor 35 is finely controlled for changing the opening area 82a of the communication portion through which the high temperature water 45 is passed and the opening area 82c of the communication portion through which the intermediate temperature water 46 is passed. Simultaneously, it is also possible to change an opening area 82e of the communication portion corresponding to the position of the low temperature water and formed of the outer cylinder hole 239e of the outer cylinder 80 and the inner cylinder hole 241e of the inner cylinder 81 overlapped with each other. As a result, the flow rate of the intermediate temperature water 46, the high temperature water 45, or the low temperature water 47, and the ratio therebetween can be controlled.

As described above, the intermediate temperature water of a temperature approximate to the required hot water supply temperature can be taken out from the hot water storage tank 2 with use of the intermediate temperature water passing pipe 238. As a result, the hot water supply temperature control is facilitated in the intermediate temperature water mixing valve 228 or the pipe 48 provided downstream of the valve for mixing intermediate temperature water.

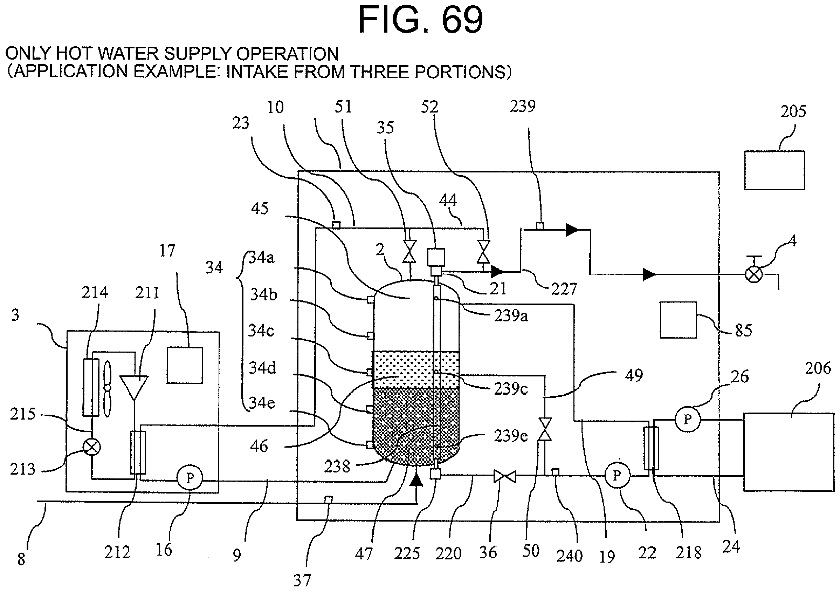

Further, in the case of using the intermediate temperature water passing pipe 238 in the manner illustrated in FIG. 68, it is possible to omit in the pipe structure the intermediate temperature water mixing valve 228, the hot water outlet pipe 7, the hot water supply mixing valve 230, and the hot water supply pipe 31 as illustrated in FIG. 69.

With this structure, it is possible to achieve further simplification of the storage type hot water supply system and cost reduction thereof.

Further, the number of communication portions corresponding to the intermediate temperature water 46, the high temperature water 45, and the low temperature water 47 may be varied in the height direction so as to control the flow rate of the waters each having a different temperature and the ratio therebetween.

For example, in FIG. 69, the five outer cylinder holes 239a, 239b, 239c, 239d, and 239e of the outer cylinder 80 and the five inner cylinder holes 241a, 241b, 241c, 241d, and 241e of the inner cylinder 81 are respectively communicated such that the opening areas of the respective communication portions are equal to each other. In this case, the outer cylinder holes 239a and 239b and the inner cylinder holes 241a and 241b are positioned at the height of the high temperature water 45, the outer cylinder hole 239c and the inner cylinder hole 241c are positioned at the height of the intermediate temperature water 46, and the outer cylinder holes 239d and 239e and the inner cylinder holes 241d and 241e are positioned at the height of the low temperature water 47. Even under the influence of the density ratio and flux resistance, the flow rate ratio therebetween is approximately 2:1:2.

With this structure, the flow rate ratio is easily changed between the high temperature water 45, the intermediate temperature water 46, and the low temperature water 47.

Note that FIGS. 64, 66, and 68 each illustrate an example in which each of the outer cylinder 80 and the inner cylinder 81 is provided with the five holes in the height direction. In those examples, along with the increase in the numbers of the holes of the outer cylinder 80 and the inner cylinder 81 in the height direction of the intermediate temperature water passing pipe 238, the flow rate of the waters each having a different temperature and the ratio therebetween can be controlled with high accuracy.

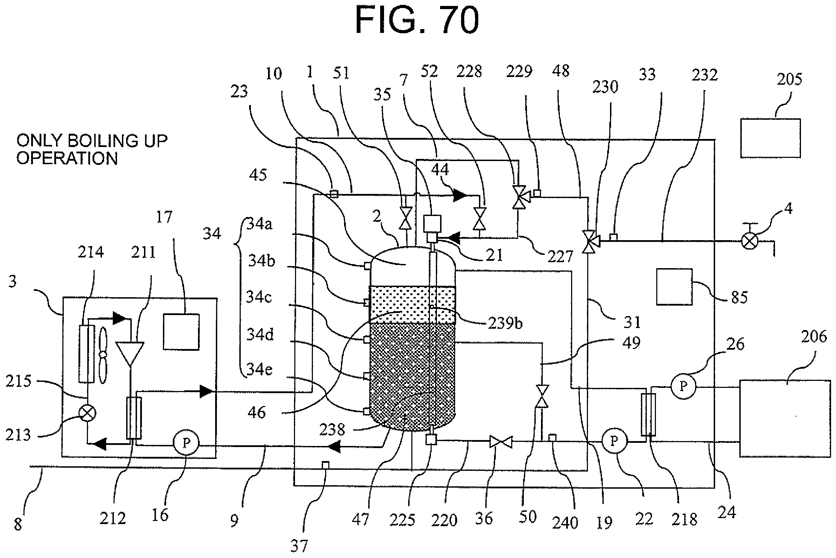

Next, with reference to FIG. 70, an operation in the case where the storage type hot water supply system performs only the boiling-up operation is described. In the boiling-up operation, the heat pump unit 3 as a heater is used as a heat source.

Immediately after the activation of the heat pump unit 3, a heat pump refrigerant circuit 215 requires a long period of time before being stabilized, and the temperature of low temperature water cannot be raised to the temperature (90°C, for example) of high temperature water, but up to the temperature of intermediate temperature water. When returned to the hot water storage tank 2, the intermediate temperature water is mixed with the high temperature water 45 in the hot water storage tank 2 so as to reduce the temperature of the high temperature water 45, and mixed with the low temperature water 47 so as to increase the temperature of the low temperature water 47.

Therefore, it is necessary to allow the intermediate temperature water generated at the activation of the heat pump unit 3 to flow into the hot water storage tank 2 at the height of the intermediate temperature water 46, while avoiding mixing with the high temperature water 45 and the low temperature water 47 in the hot water storage tank 2.

When a user inputs an instruction for performing the boiling-up operation with use of the setting panel 205, or when the temperature at a predetermined hot water temperature sensor 34 (hot water temperature sensor 34b, for example) is lower than 90°C and the amount of the high temperature water 45 is decreased in the hot water storage tank 2, the boiling-up operation is started.

First, the hot water temperature sensor 34 is used for detecting the height of the intermediate temperature water 46 as in the case of the hot water supply operation, and the drive motor 35 is driven for communicating the outer cylinder hole 239b of the outer cylinder 80 and the inner cylinder hole 241b of the inner cylinder 81, which correspond to the height of the intermediate temperature water 46, so as to form the communication portion, whereby the intermediate temperature water 46 is fed to the upper communication portion 21 through the intermediate temperature water passing pipe 238.

Next, a boil-up return valve 52 attached to the high temperature water returning pipe 10 is opened for driving the heat pump refrigerant circuit 215 and a heat pump circulating pump 216. The driving of the heat pump refrigerant circuit 215 and the heat pump circulating pump 216 is controlled with use of a heat pump control circuit 217.

From the lower side of the hot water storage tank 2, the low temperature water 47 is taken out through the low temperature water take-out pipe 9 so as to be heated in the refrigerant-water heat exchanger 212. However, at the activation of the heat pump unit 3, the temperature of the low temperature water 47 is heated up to the temperature of the intermediate temperature water. The intermediate temperature water flows through the high temperature water returning pipe 10, an intermediate temperature water bypass pipe 244, and the boil-up return valve 52 in the stated order so as to reach the upper communication portion 21.

The upper communication portion 21 is communicated with the intermediate temperature water 46 via the intermediate temperature water passing pipe 238, and hence the intermediate temperature water generated by the boiling-up operation can be allowed to flow into the hot water storage tank 2 at the height of the intermediate temperature water 46 in the state where the high temperature water 45 and the low temperature water 47 are somewhat mixed with each other.

As a result, even when the intermediate temperature water generated through the boiling-up operation flows into the hot water storage tank 2, the temperature decrease of the high temperature water 45 can be prevented, whereby the lack of amount of the high temperature water can be overcome in the hot water storage tank 2. Further, the temperature increase of the low temperature water 47 can also be prevented, whereby a high COP is secured.

Further, while the temperature detected with use of the heating temperature sensor 23 and the temperature detected with use of the hot water temperature sensor 34 are compared with each other, the communication hole of the intermediate temperature water passing pipe 238 is moved to the height in the hot water storage tank 2 at which both the temperatures are substantially equal to each other. As a result, the intermediate temperature water generated by the boiling-up operation can be precisely poured into the hot water storage tank 2 at the height of the intermediate temperature water 46.

After the heat pump refrigerant circuit 215 is stabilized, the intermediate temperature water is heated to have a temperature of the high temperature water with use of the heat pump unit 3. In this context, the drive motor 54 is driven for rotating the inner cylinder 81 in the circumferential direction so as to form the communication portion in the region of the high temperature water 45 while the outer cylinder hole 239a of the outer cylinder 80 and the inner cylinder hole 241a of the inner cylinder 81 are communicated with each other. As a result, the high temperature water obtained through heating can be allowed to flow into the hot water storage tank 2 at the height of the high temperature water 45.

In this case, the high temperature water obtained through heating is allowed to flow in the lateral direction from the outer cylinder hole 239a of the outer cylinder 80 into the hot water storage tank 2. Therefore, the velocity component is reduced in the vertical direction when compared with that in the case where the high temperature water is allowed to flow into the hot water storage tank 2 from the upper side thereof via a high temperature water passing valve 51. As a result, it is possible to suppress the mixing of the high temperature water returned to the hot water storage tank 2 with the intermediate temperature water 46 already existing in the hot water storage tank 2, to thereby prevent the temperature decrease of the high temperature water 45.

Note that, a determination as to whether the heat pump is stabilized may be made when the temperature detected with use of the heating temperature sensor 23 is stabilized, or when the temperature detected therewith becomes equal to or higher than a certain temperature (90°C, for example). Alternatively, a time period required for stabilizing the heat pump may be set in advance (10 minutes, for example).

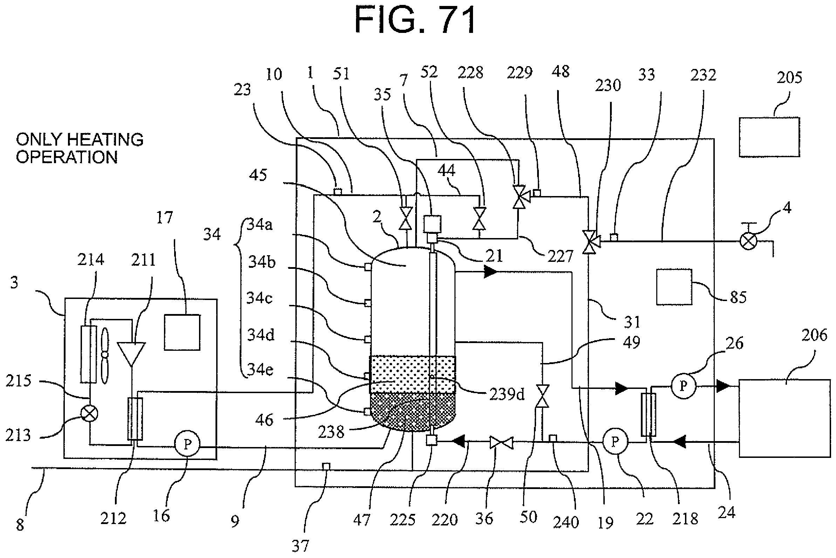

Next, with reference to FIG. 71, an operation in the case of performing only the heating operation is described.

In the heating operation, when the case of using the heating terminal 206 as a floor heating system is exemplified, a heating terminal circulation pump 226 attached to a heating circuit 24 is driven for feeding the hot and cold water of a low temperature, which is used for the floor heating system, to the heat exchanger 218 so as to perform heat exchange, in the heat exchanger 218, between the hot and cold water and the high temperature water fed from the hot water storage tank 2. Then, the hot and cold water heated to have a high temperature is refed to the heating terminal 206, to thereby perform the floor heating.

The heating terminal 206 includes a bath, a bathroom dryer, a bathroom heater, and a hot-water heater for a room.

Meanwhile, the high temperature water fed from the hot water storage tank 2 through a high temperature water take-out pipe 219 is subjected to heat exchange in the heat exchanger 218 with the hot and cold water used for the heating operation so as to become the intermediate temperature water. When directly returned to the hot water storage tank 2, the intermediate temperature water thus obtained is mixed with the high temperature water 45 existing in the hot water storage tank 2 so as to reduce the temperature of the high temperature water 45, and mixed with the low temperature water 47 so as to increase the temperature of the low temperature water 47. Therefore, it is necessary to allow the intermediate temperature water generated through heat exchange in the heating operation to flow into the hot water storage tank 2 at the height of the intermediate temperature water 46, while avoiding mixing with the high temperature water 45 and the low temperature water 47 in the hot water storage tank 2.

In the storage type hot water supply system, when a user inputs an instruction for starting the heating operation with use of the setting panel 205, the hot water temperature sensor 34 is used for detecting the height of the intermediate temperature water 46 as in the case of the hot water supply operation, and the drive motor 35 is driven for communicating the outer cylinder hole 239d of the outer cylinder 80 and the inner cylinder hole 241d of the inner cylinder 81, which correspond to the region of the intermediate temperature water 46, so as to form the communication portion, whereby the intermediate temperature water 46 is fed to the lower communication portion 225 through the intermediate temperature water passing pipe 238.

Next, the heating return valve 36 attached to the lower intermediate-temperature-water passing pipe 220 is opened for activating a heating circulation pump 22 attached to the lower intermediate-temperature-water passing pipe 220 and the heating terminal circulation pump 226 attached to the heating circuit 24. From the top of the hot water storage tank 2, the high temperature water 45 is taken out through the high temperature water take-out pipe 219, the high temperature water 45 being subjected to heat exchange with the water flowing in the heating circuit 24 through an intermediation of the heat exchanger 218 so as to become the intermediate temperature water.

The intermediate temperature water passes the lower intermediate-temperature-water passing pipe 220 so as to reach the lower communication portion 225. The lower communication portion 225 is communicated with the communication portion positioned at the height of the intermediate temperature water 46 through an intermediation of the intermediate temperature water passing pipe 238, and hence the intermediate temperature water can successively flow into the hot water storage tank 2 at the height of the intermediate temperature water 46 without being mixed with the high temperature water 45 and the low temperature water 47 therein.

As described above, even when the intermediate temperature water generated through heating flows into the hot water storage tank 2, the temperature decrease of the high temperature water 45 can be prevented, whereby the lack of amount of the high temperature water 45 can be overcome in the hot water storage tank 2. Further, the temperature increase of the low temperature water 47 can also be prevented, whereby a high COP is secured in the heat pump unit 3.

Further, in the storage type hot water supply system or the like, the comparison is made between the temperature detected with use of the space-heating temperature sensor 240 attached to the lower intermediate-temperature-water passing pipe 220 and the temperature detected with use of the hot water temperature sensor 34 so that the communication portion of the intermediate temperature water passing pipe 238 is moved to the height at which both the temperatures are proximate to each other in the hot water storage tank 2. As a result, the intermediate temperature water generated through heat exchange can be poured into the intermediate temperature water 46 of the temperature proximate thereto in the hot water storage tank 2.

When the heating operation is continued, the amount of the intermediate temperature water 46 is increased in the hot water storage tank 2. As a result, the dispersion of the intermediate temperature water 46 can be suppressed in the hot water storage tank 2, whereby the more high temperature water 45 can be stored in the hot water storage tank 2.

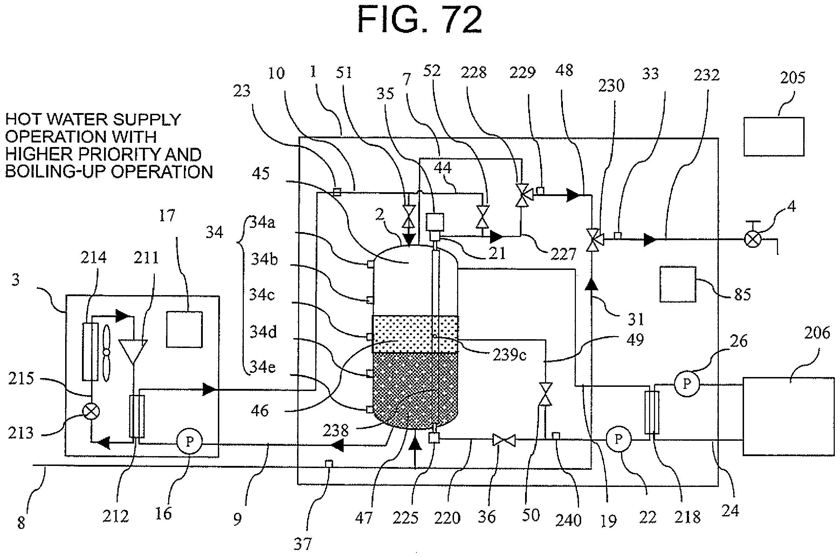

Next, with reference to FIG. 72, an operation in the case of performing a hot water supply operation with higher priority and an additional boiling-up operation is described.

In this case, the hot water supply operation is performed as in the above-mentioned case of performing only the hot water supply operation.

In the boiling-up operation, the intermediate temperature water passing pipe 238 is used with higher priority for hot water supply. Thus, it is necessary to close the boil-up return valve 52 and open the high temperature water passing valve 51 so that the high temperature water generated through the boiling-up operation is allowed to flow into the hot water storage tank 2. In this case, when the heat pump refrigerant circuit 215 is sufficiently stabilized, the high temperature water generated through the boiling-up operation flows into the region of the high temperature water 45 in the hot water storage tank 2, thereby preventing the temperature decrease of the high temperature water 45.

In this manner, the boiling-up operation can be performed while performing the hot water supply operation in which the intermediate temperature water 46 is taken out with higher priority.

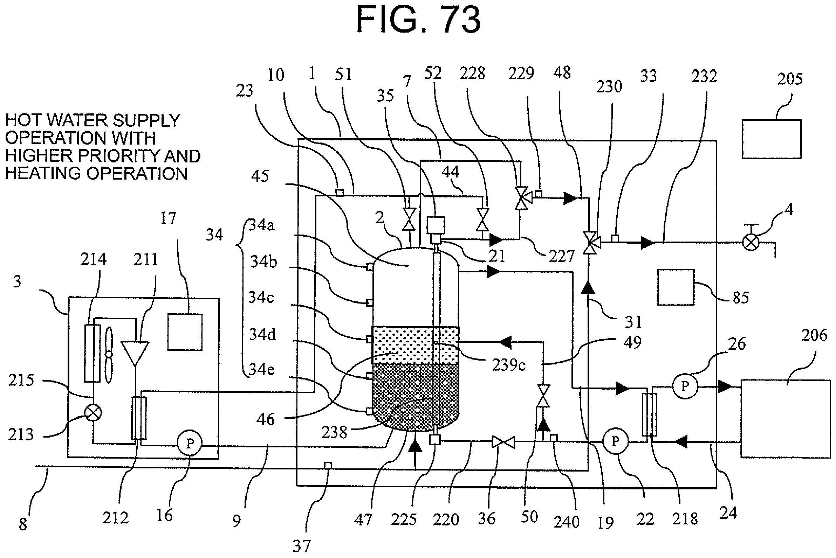

Next, with reference to FIG. 73, an operation in the case of performing a hot water supply operation with higher priority and an additional heating operation is described.

In this case, the hot water supply operation is performed as in the above-mentioned case of performing only the hot water supply operation.

In the heating operation, the intermediate temperature water passing pipe 238 is used with higher priority for hot water supply. Thus, it is necessary to close the heating return valve 36 and open the intermediate temperature water passing valve 50 so that the intermediate temperature water generated through the heating operation is allowed to flow into the hot water storage tank 2 through an intermediate temperature water returning pipe 49 provided around the hot water storage tank 2.

In this manner, the heating operation can be performed while performing the hot water supply operation in which the intermediate temperature water 46 is taken out with higher priority.

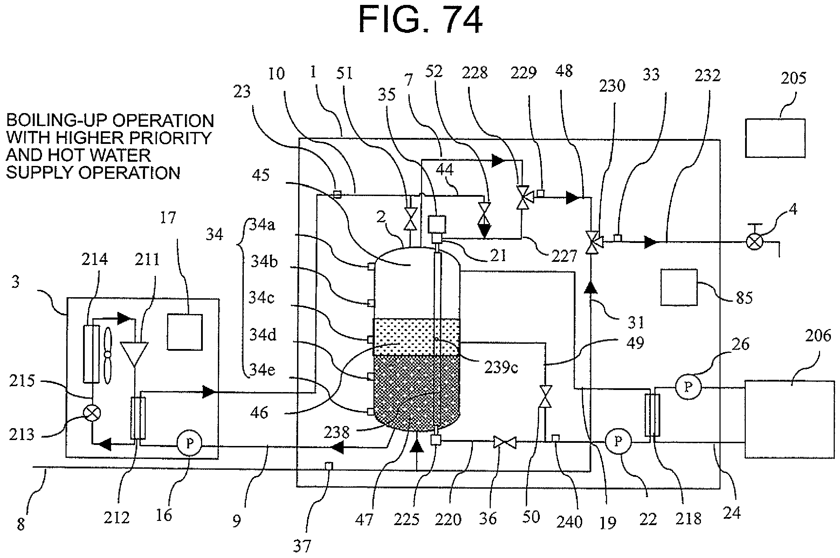

Next, with reference to FIG. 74, an operation in the case of performing the boiling-up operation with higher priority and the additional hot water supply operation is described.

In this case, the boiling-up operation is performed as in the above-mentioned case of performing only the boiling-up operation.

In the hot water supply operation, the intermediate temperature water passing pipe 238 is used with higher priority for the boiling-up operation. Thus, it is necessary for the high temperature water 45 to flow out, through the intermediate temperature water mixing valve 228 and the hot water outlet pipe 7, from the hot water storage tank 2 so as to be supplied as hot water of a required hot water supply temperature after being mixed with the low temperature water in the hot water supply mixing valve 230.

In this manner, the hot water supply operation can be performed while returning the intermediate temperature water generated at the activation of the boiling-up operation with higher priority into the intermediate temperature water 46 in the hot water storage tank 2.

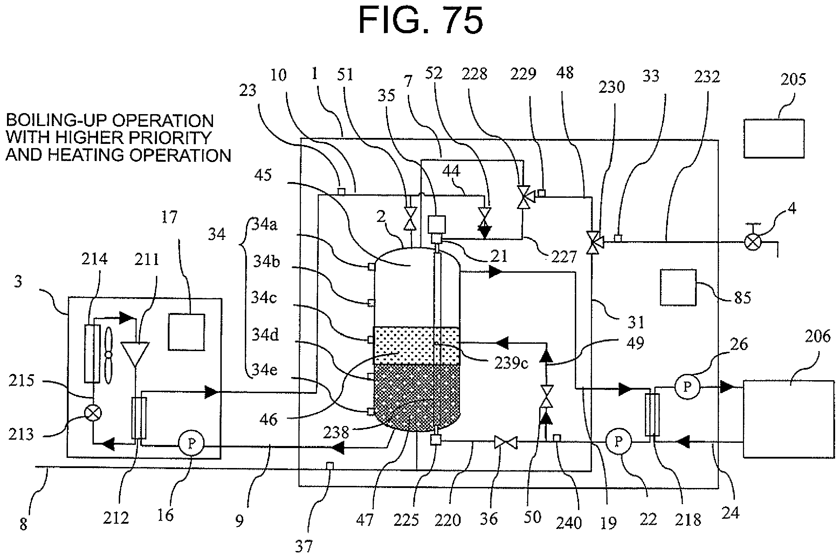

Next, with reference to FIG. 75, an operation in the case of performing the boiling-up operation with higher priority and the additional heating operation is described.

In this case, the boiling-up operation is performed as in the above-mentioned case of performing only the boiling-up operation.

In the heating operation, the intermediate temperature water passing pipe 238 is used with higher priority for the boiling-up operation. Thus, it is necessary to close the heating return valve 36 and open the intermediate temperature water return valve 50 so that the intermediate temperature water generated at the activation of the boiling-up operation is allowed to flow into the hot water storage tank 2 through the intermediate temperature water returning pipe 49.

In this manner, the heating operation can be performed while returning the intermediate temperature water generated at the activation of the boiling-up operation with higher priority into the intermediate temperature water 46 in the hot water storage tank 2.

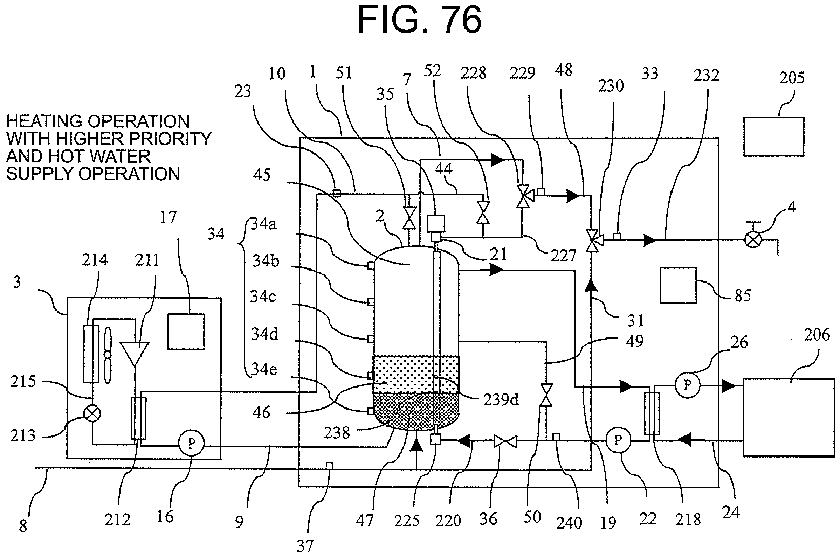

Next, with reference to FIG. 76, an operation in the case of performing the heating operation with higher priority and the additional hot water supply operation is described.

In this case, the heating operation is performed as in the above-mentioned case of performing only the heating operation.

In the hot water supply operation, the intermediate temperature water passing pipe 238 is used with higher priority for the boiling-up operation. Thus, it is necessary for the high temperature water 45 to flow out, through the intermediate temperature water mixing valve 228 and the hot water outlet pipe 7, from the hot water storage tank 2 so as to be supplied as hot water of a required hot water supply temperature after being mixed with the low temperature water in the hot water supply mixing valve 230.

In this manner, the hot water supply operation can be performed while returning the intermediate temperature water generated through the heating operation with higher priority into the intermediate temperature water 46 in the hot water storage tank 2.

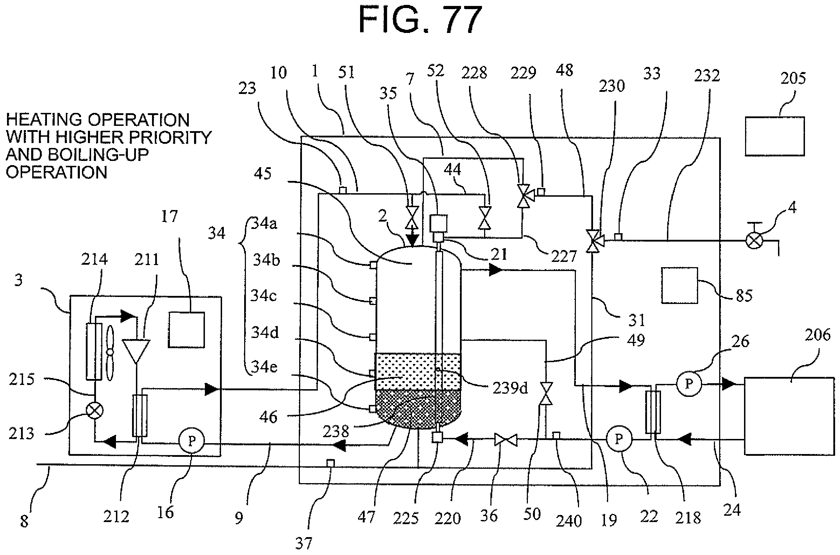

Next, with reference to FIG. 77, an operation in the case of performing the heating operation with higher priority and the additional boiling-up operation is described.

In this case, the heating operation is performed as in the above-mentioned case of performing only the heating operation.

In the boiling-up operation, the intermediate temperature water passing pipe 238 is used with higher priority for the heating operation. Thus, it is necessary to close the boil-up return valve 52 and open the high temperature water passing valve 51 so that the high temperature water generated through the boiling-up operation is allowed to flow into the hot water storage tank 2.

In this case, when the heat pump refrigerant circuit 215 is sufficiently stabilized, the high temperature water generated through the boiling-up operation flows into the region of the high temperature water 45 in the hot water storage tank 2, thereby preventing the temperature decrease of the high temperature water 45.

In this manner, the boiling-up operation can be performed while returning the intermediate temperature water generated through the heating operation with higher priority into the intermediate temperature water 46 in the hot water storage tank 2.

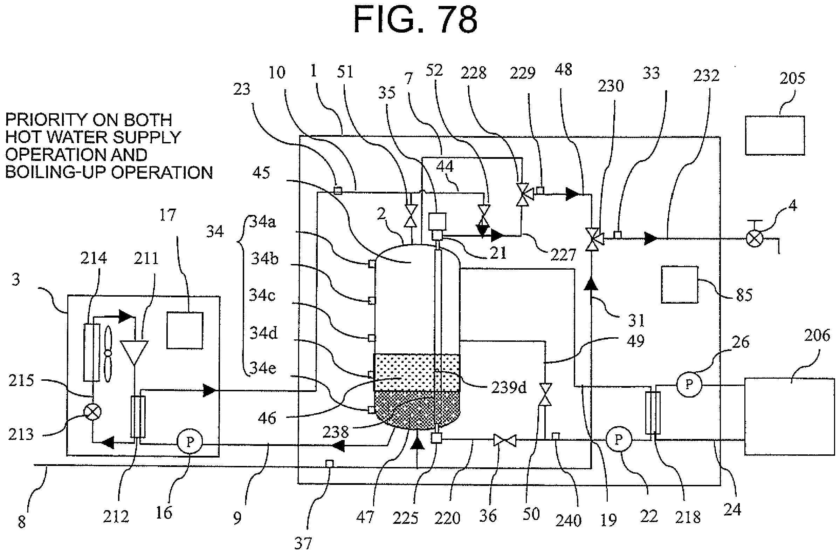

Next, with reference to FIG. 78, an operation in the case of performing with priority on both the hot water supply operation and the boiling-up operation is described.

The intermediate temperature water is allowed to flow into the hot water storage tank 2 at the activation of the boiling-up operation while taken out from the hot water storage tank 2 in the hot water supply operation. Thus, both the operations can be simultaneously performed.

In this case, both the above-mentioned operations in the respective cases of performing only the hot water supply operation and performing only the boiling-up operation are simultaneously performed. The intermediate temperature water generated through the boiling-up operation joins the intermediate temperature water in the hot water storage tank 2, which flows out from the intermediate temperature water passing pipe 238, through an intermediation of the boil-up return valve 52. Then, the intermediate temperature water is mixed in the intermediate temperature water mixing valve 228 with the high temperature water 45 flowing out from the upper side of the hot water storage tank 2, and then mixed in the hot water supply mixing valve 230 with the low temperature water so as to have a required hot water supply temperature.

In this manner, both the hot water supply operation and the boiling-up operation can be performed while using, for hot water supply, the intermediate temperature water 46 in the hot water storage tank 2 and the intermediate temperature water generated through the boiling-up operation.

Note that, when the excessive amount of intermediate temperature water is generated through the boiling-up operation, the excessive intermediate temperature water can be returned through the intermediate temperature water passing pipe 238 into the region of the intermediate temperature water 46 in the hot water storage tank 2. In this case, the amount of the intermediate temperature water is decreased, which is generated through the boiling-up operation and flows into the hot water storage tank 2 through the intermediate temperature water mixing valve 228. Thus, the temperature dispersion is suppressed when the intermediate temperature water flows into the hot water storage tank 2, thereby further preventing the temperature decrease of the high temperature water 45 existing in the hot water storage tank 2.

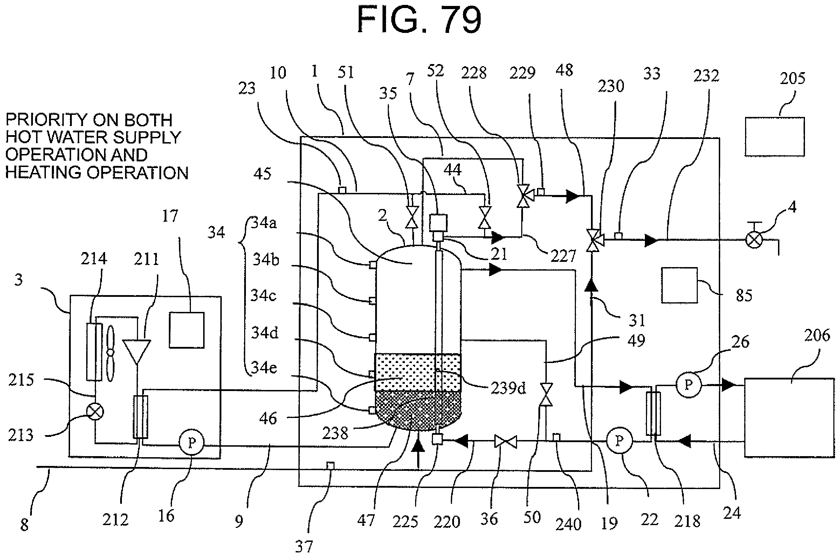

Next, with reference to FIG. 79, an operation in the case of performing with priority on both the hot water supply operation and the heating operation is described.

The intermediate temperature water 46 is allowed to flow into the hot water storage tank 2 at the activation of the heating operation while taken out from the hot water storage tank 2 in the hot water supply operation. Thus, both the operations can be simultaneously performed.

In this case, both the above-mentioned operations in the respective cases of performing only the hot water supply operation and performing only the heating operation are simultaneously performed. The intermediate temperature water generated through the heating operation joins the intermediate temperature water 46 which flows out from the hot water storage tank 2, at the midpoint of the intermediate temperature water passing pipe 238. Then, the intermediate temperature water is mixed in the intermediate temperature water mixing valve 228 with the high temperature water 45 flowing out from the upper side of the hot water storage tank 2, and then mixed in the hot water supply mixing valve 230 with the low temperature water so as to have a required hot water supply temperature.

In this manner, both the hot water supply operation and the heating operation can be performed while using, for hot water supply, the intermediate temperature water 46 in the hot water storage tank 2 and the intermediate temperature water generated through the heating operation.

Note that, when the excessive amount of intermediate temperature water is generated through the heating operation, the excessive intermediate temperature water can be returned through the intermediate temperature water passing pipe 238 into the region of the intermediate temperature water 46 in the hot water storage tank 2. In this case, the amount of the intermediate temperature water is decreased, which is generated through the heating operation and flows into the hot water storage tank 2 through the intermediate temperature water mixing valve 228. Thus, the temperature dispersion is suppressed when the intermediate temperature water flows into the hot water storage tank 2, thereby further preventing the temperature decrease of the high temperature water 45 existing in the hot water storage tank 2.

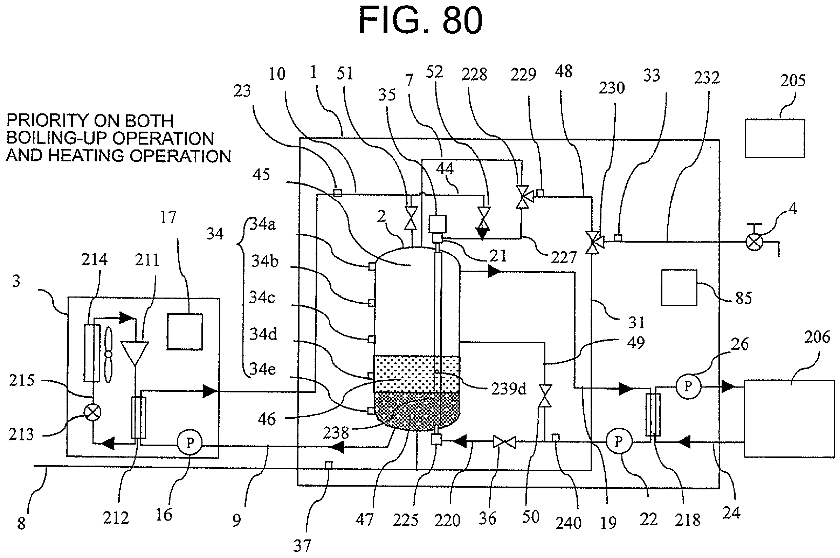

Next, with reference to FIG. 80, an operation in the case of performing with priority on both the boiling-up operation and the heating operation is described.

In order to allow the intermediate temperature water to flow into the hot water storage tank 2, both the activation of the boiling-up operation and the heating operation may be simultaneously performed.

In this case, it suffices that both the above-mentioned operations in the respective cases of performing only the boiling-up operation and performing only heating operation are simultaneously performed for comparing at least one of the space-heating temperature sensor 240 and the heating temperature sensor 23 with the hot water temperature sensor so as to determine the region of the communication hole of the intermediate temperature water flowing out pipe.

In this manner, the boiling-up operation and the heating operation can be performed while returning the intermediate temperature water generated through the heating operation and the intermediate temperature water generated at the activation of the boiling-up operation into the intermediate temperature water 46 in the hot water storage tank 2.

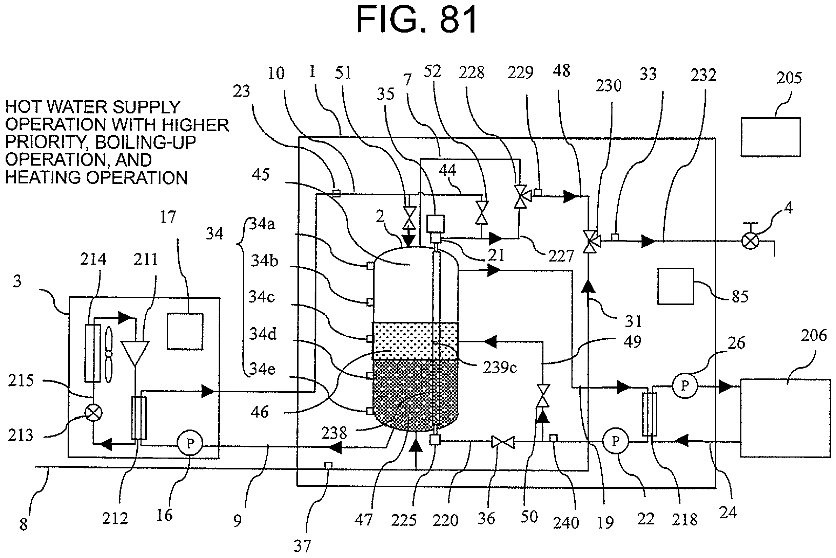

Next, with reference to FIG. 81, an operation in the case of performing the hot water supply operation with higher priority and the additional boiling-up operation and the heating operation is described.

In this case, the hot water supply operation and the boiling-up operation are performed as in the above-mentioned case of performing the hot water supply operation with higher priority and the additional boiling-up operation.

In the heating operation, the intermediate temperature water passing pipe 238 is used with higher priority for hot water supply. Thus, it is necessary to close the heating return valve 36 and open an intermediate temperature water return valve 50 so that the intermediate temperature water generated through the heating operation is allowed to flow into the hot water storage tank 2 through an intermediate temperature water returning pipe 49 provided around the hot water storage tank 2. In this manner, the boiling-up operation and the heating operation can be performed while performing the hot water supply operation in which the intermediate temperature water 46 is taken out with higher priority.

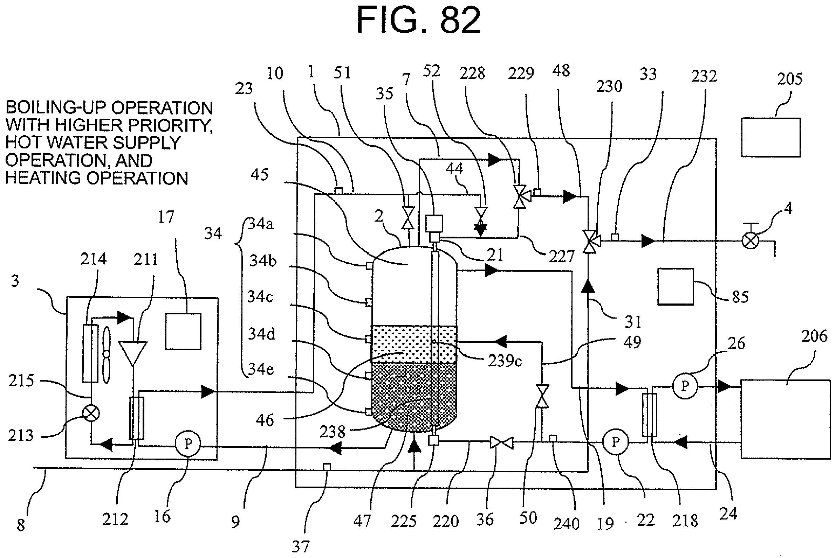

Next, with reference to FIG. 82, an operation in the case of performing the boiling-up operation with higher priority and the additional hot water supply operation and the heating operation is described.

In this case, the boiling-up operation and the hot water supply operation are performed as in the above-mentioned case of performing the boiling-up operation with higher priority and the additional hot water supply operation.

In the heating operation, the intermediate temperature water passing pipe 238 is used with higher priority for hot water supply. Thus, it is necessary to close the heating return valve 36 and open an intermediate temperature water return valve 50 so that the intermediate temperature water generated through the heating operation is allowed to flow into the hot water storage tank 2 through an intermediate temperature water returning pipe 49 provided around the hot water storage tank 2. In this manner, the hot water supply operation and the heating operation can be performed while returning with higher priority the intermediate temperature water generated at the activation of the boiling-up operation to the intermediate temperature water 46 in the hot water storage tank 2.

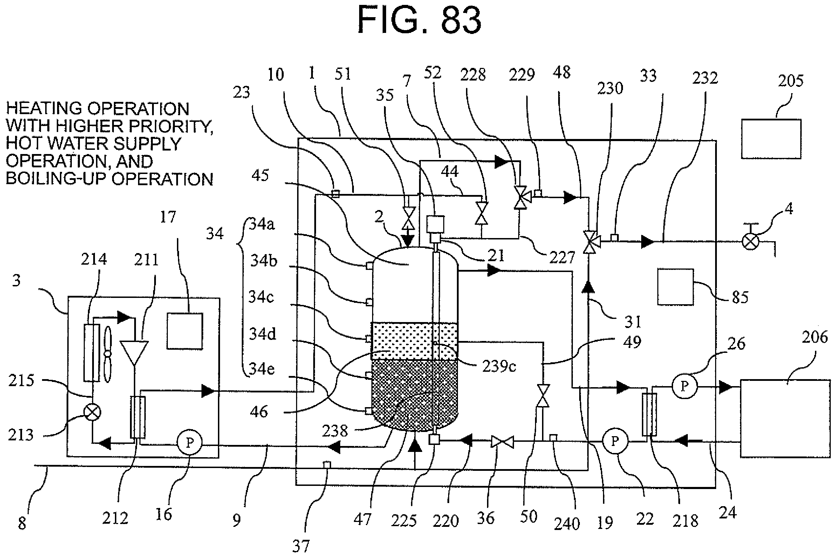

Next, with reference to FIG. 83, an operation in the case of performing the heating operation with higher priority and the additional hot water supply operation and the boiling-up operation is described.

In this case, the heating operation and the hot water supply operation are performed as in the above-mentioned case of performing the heating operation with higher priority and the additional hot water supply operation.

In the boiling-up operation, the intermediate temperature water passing pipe 238 is used with higher priority for the heating operation. Thus, it is necessary to close the boil-up return valve 52 and open a high temperature water passing valve 51 so that the high temperature water generated through the boiling-up operation is allowed to flow into the hot water storage tank 2.

In this case, when the heat pump refrigerant circuit 215 is sufficiently stabilized, the high temperature water generated through boiling-up flows into the hot water storage tank 2 at the height of the high temperature water 45, thereby preventing the temperature decrease of the high temperature water 45.

In this manner, the hot water supply operation and the boiling-up operation can be performed while returning with higher priority the intermediate temperature water 46 generated through the heating operation to the height of the intermediate temperature water 46 in the hot water storage tank 2.

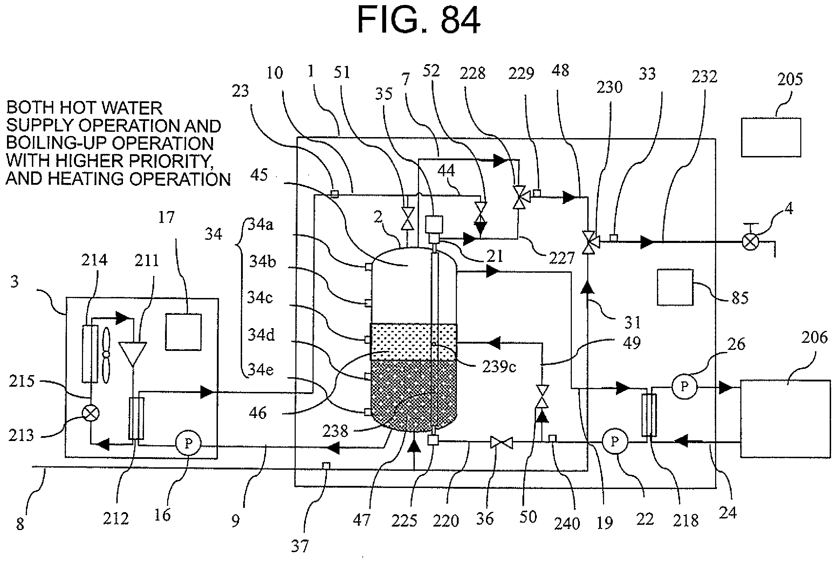

Next, with reference to FIG. 84, an operation in the case of performing with priority on both the hot water supply operation and the boiling-up operation and the additional heating operation is described.

In this case, the hot water supply operation and the boiling-up operation are performed as in the above-mentioned case of performing with priority on both the hot water supply operation and the boiling-up operation.

In the heating operation, the intermediate temperature water passing pipe 238 is used with higher priority for the hot water supply and boiling-up operations. Thus, it is necessary to close the heating return valve 36 and open the intermediate temperature water return valve 50 so that the intermediate temperature water generated through the heating operation is allowed to flow into the hot water storage tank 2 through the intermediate temperature water returning pipe 49 provided around the hot water storage tank 2.

In this manner, the hot water supply operation, the boiling-up operation, and the heating operation can be performed while using, for hot water supply, the intermediate temperature water 46 in the hot water storage tank 2 and the intermediate temperature water generated through the boiling-up operation.

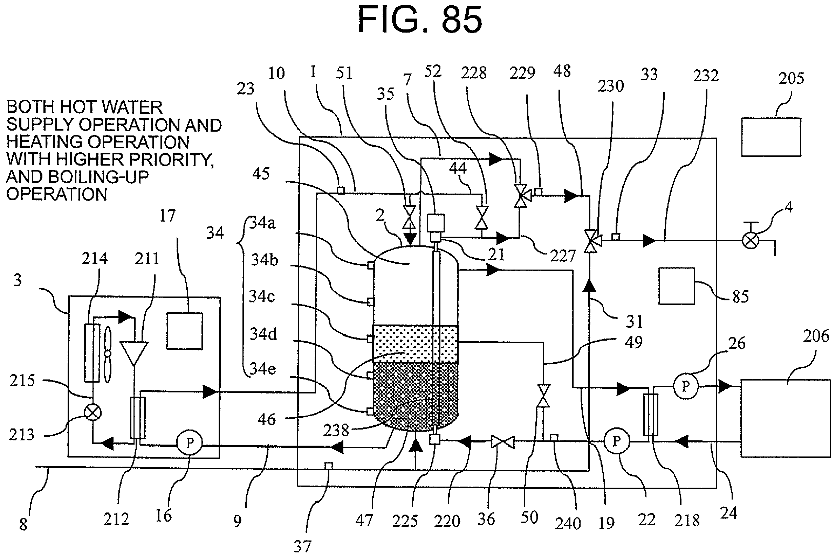

Next, with reference to FIG. 85, an operation in the case of performing with priority on both the hot water supply operation and the heating operation and the additional boiling-up operation is described.

In this case, the hot water supply operation and the boiling-up operation are performed as in the above-mentioned case of performing with priority on both the hot water supply operation and the heating operation.

In the boiling-up operation, the intermediate temperature water passing pipe 238 is used with higher priority for the hot water supply operation and the heating operation. Thus, it is necessary to close the boil-up return valve 52 and open the high temperature water return valve 51 so that the high temperature water generated through the boiling-up operation is allowed to flow into the hot water storage tank 2.

In this case, when the heat pump refrigerant circuit 215 is sufficiently stabilized, the high temperature water generated through boiling-up flows into the hot water storage tank 2 at the height of the high temperature water 45, thereby preventing the temperature decrease of the high temperature water 45.

In this manner, the hot water supply operation, the heating operation, and the boiling-up operation can be performed while using, for hot water supply, the intermediate temperature water 46 in the hot water storage tank 2 and the intermediate temperature water generated through the heating operation.

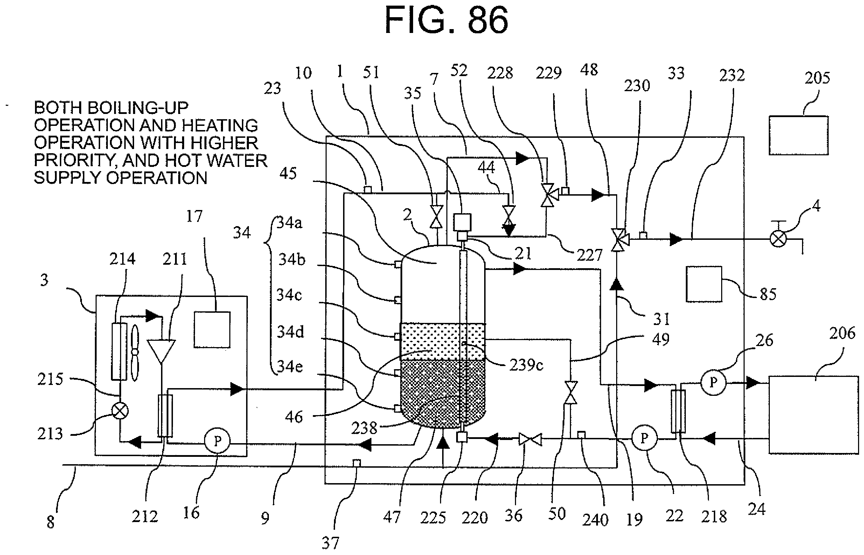

Next, with reference to FIG. 86, an operation in the case of performing with priority on both the boiling-up operation and the heating operation and the additional hot water supply operation is described.

In this case, the boiling-up operation and the heating operation are performed as in the above-mentioned case of performing with priority on both the boiling-up operation and the heating operation.

In the hot water supply operation, the intermediate temperature water passing pipe 238 is used with higher priority for the boiling-up operation and the heating operation. Thus, it is necessary for the high temperature water 45 to flow out, through the intermediate temperature water mixing valve 228 and the hot water outlet pipe 7, from the hot water storage tank 2 so as to be supplied as hot water of a required hot water supply temperature after being mixed with the low temperature water in the hot water supply mixing valve 230.

In this manner, the hot water supply operation, the boiling-up operation, and the heating operation can be performed while returning the intermediate temperature water generated through the heating operation and the intermediate temperature water generated at the activation of the boiling-up operation into the hot water storage tank 2 at the height of the intermediate temperature water 46.

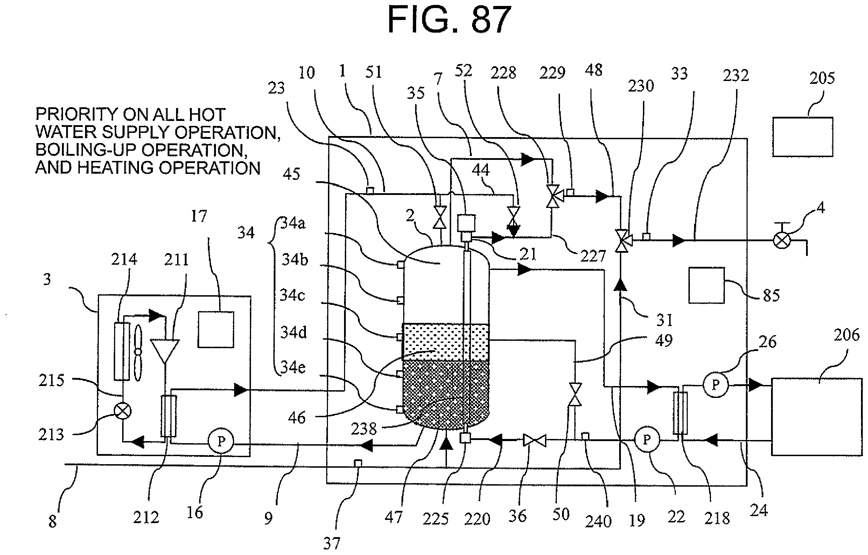

Next, with reference to FIG. 87, an operation in the case of performing with priority on all the hot water supply operation, the boiling-up operation, and the heating operation is described.

In this case, both the above-mentioned operations in the respective cases of performing with priority on both the hot water supply operation and the boiling-up operation and performing with priority on both the hot water supply operation and the heating operation are simultaneously performed.

In this manner, the hot water supply operation, the boiling-up operation, and the heating operation can be performed while using, for hot water supply, the intermediate temperature water 46 in the hot water storage tank 2 and the intermediate temperature water generated through the boiling-up operation and the heating operation.

Note that, when the excessive amount of intermediate temperature water is generated through the boiling-up operation and the heating operation, the excessive intermediate temperature water can be returned through the intermediate temperature water passing pipe 238 into the hot water storage tank 2 at the height of the intermediate temperature water 46. In this case, the amount of the intermediate temperature water which is generated through the boiling-up operation and the heating operation and flows into the hot water storage tank 2 through the intermediate temperature water mixing valve 228 is decreased. Thus, the temperature dispersion when the intermediate temperature water flows into the hot water storage tank 2 is suppressed, thereby preventing the temperature decrease of the high temperature water 45 existing in the hot water storage tank 2.

As described above, in the storage type hot water supply system according to Embodiment 10, it is possible to independently perform the hot water supply operation, the boiling-up operation, or the heating operation, which are main operating modes, and to perform simultaneously therewith a preferential operation selected therefrom.

With this configuration, the intermediate temperature water 46 in the hot water storage tank 2 can be effectively used, and it is possible to suppress the temperature dispersion which is generated upon mixing the intermediate temperature water generated through the boiling-up operation and the heating operation and flowing into the hot water storage tank 2 with the high temperature water and the low temperature water each other, whereby a larger amount of the high temperature water 45 can be stored. Thus, it is possible to overcome the lack of high temperature water in the hot water storage tank 2. Further, the intermediate temperature water 46 can be omitted so as to secure a high COP in the heat pump.

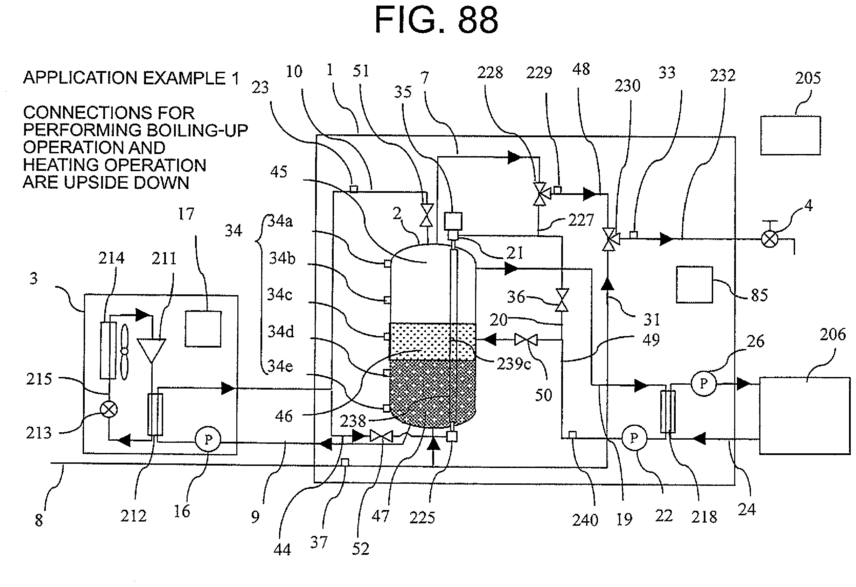

Note that, as illustrated in FIG. 88, the intermediate temperature water bypass pipe 244 and the lower communication portion 225, and the lower intermediate-temperature-water passing pipe 220 and the upper communication portion 21 may be connected to each other.

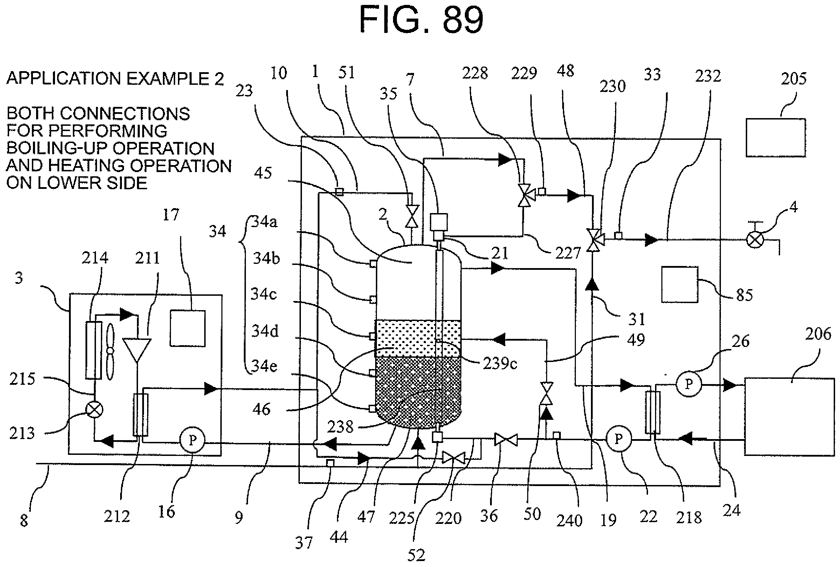

Note that, as illustrated in FIG. 89, both the intermediate temperature water bypass pipe 244 and the lower intermediate-temperature-water passing pipe 220 may be connected to the lower intermediate-temperature-water passing pipe 225.

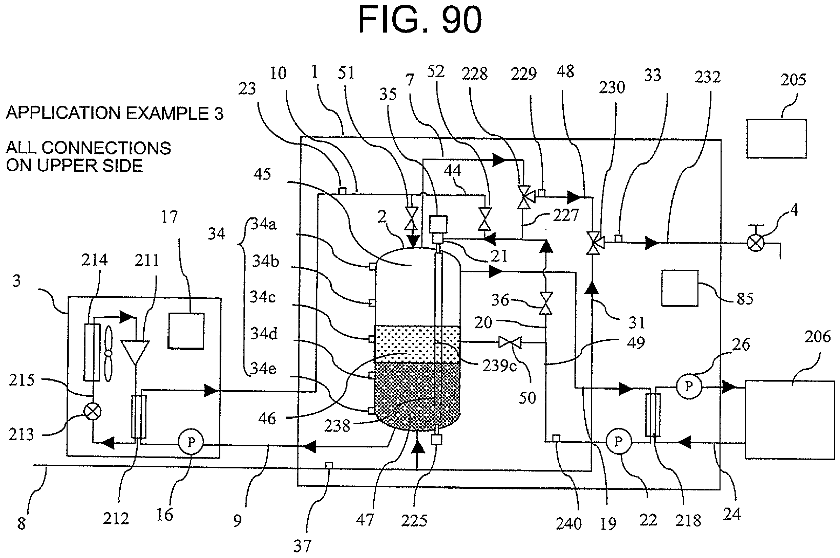

Further, as illustrated in FIG. 90, all of the upper intermediate-temperature-water passing pipe 227, the intermediate temperature water bypass pipe 244, and the lower intermediate-temperature-water passing pipe 220 may be connected to the upper communication portion 21. In this case, the pipes to be connected to the intermediate temperature water passing pipe 238 can be converged only on the upper side of the hot water storage tank 2. Further, in this case, the end portion of the lower communication portion 225 is closed.

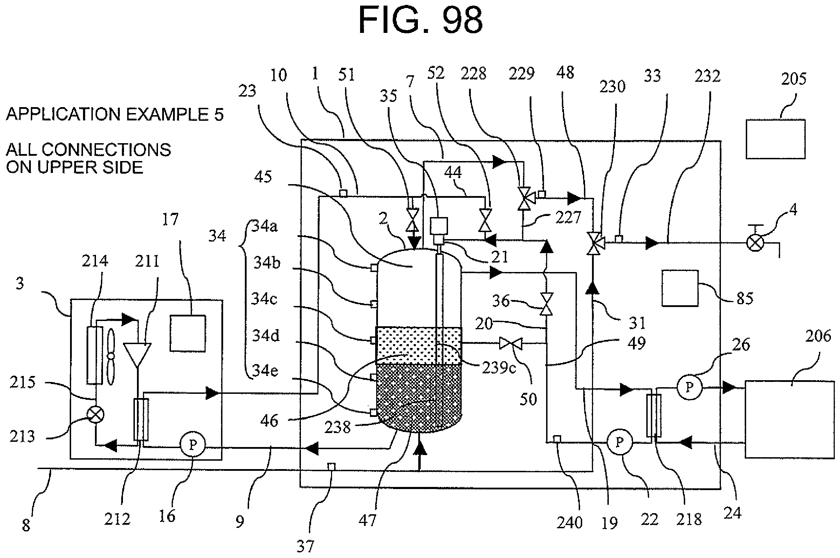

Still further, in this case, as illustrated in FIG. 98, it is unnecessary to allow the intermediate temperature water passing pipe 238 to pass through the bottom portion of the hot water storage tank 2, and the intermediate temperature water passing pipe 238 may be provided so as to pass through only the upper portion of the hot water storage tank 2. In this case, the hole provided in the bottom portion of the hot water storage tank 2 is omitted through which an intermediate temperature water passing pipe 20 is passed, and hence it is possible to reduce the risk of water leakage due to attachment failure and the like.

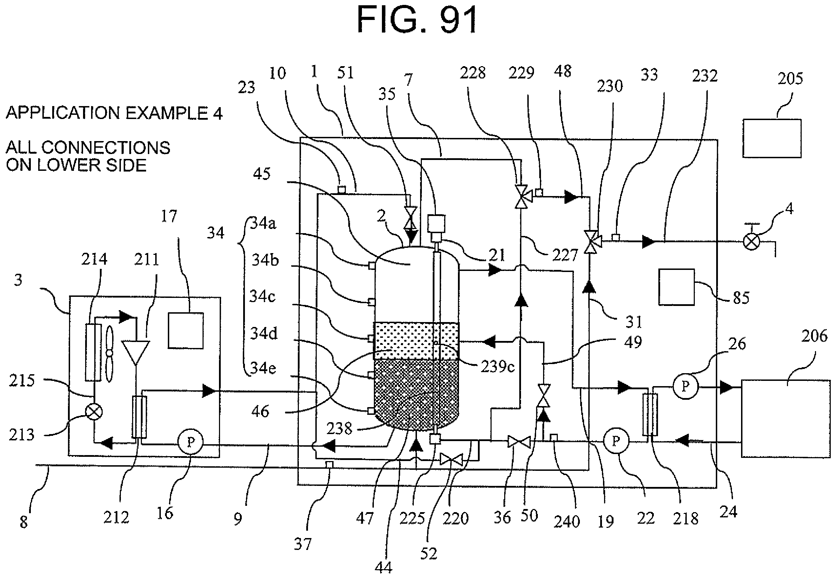

Further, as illustrated in FIG. 91, all of the upper intermediate-temperature-water passing pipe 227, the intermediate temperature water bypass pipe 244, and the lower intermediate-temperature-water passing pipe 220 may be connected to the lower communication portion 225. In this case, the pipes to be connected to the intermediate temperature water passing pipe 238 can be converged only on the lower side of the hot water storage tank 2. In this case, the end portion of the upper communication portion 21 is closed.

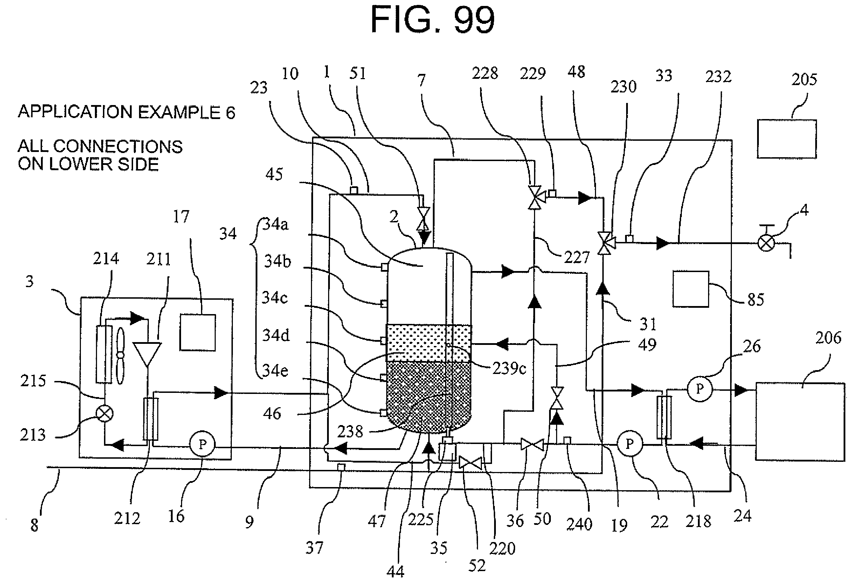

Still further, in this case, as illustrated in FIG. 99, it is unnecessary to allow the intermediate temperature water passing pipe 238 to pass through the upper portion of the hot water storage tank 2, and the intermediate temperature water passing pipe 238 may be provided so as to pass through only the bottom portion of the hot water storage tank 2, with the drive motor 35 being attached to the bottom portion. In this case, the hole provided in the upper portion of the hot water storage tank 2 is omitted through which the intermediate temperature water passing pipe 238 is passed, and hence it is possible to reduce the risk of water leakage due to attachment failure and the like.

Further, in Embodiments described above, the outer cylinder 80, which constitutes the intermediate temperature water passing pipe 238, is fixed and the inner cylinder 81 is rotated so as to be relatively moved to each other. Alternatively, the outer cylinder 80 is rotated and the inner cylinder 81 is fixed so as to be relatively moved to each other.

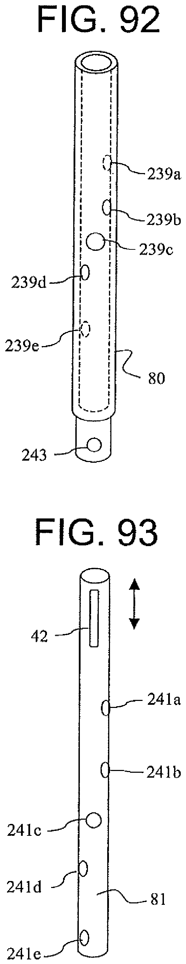

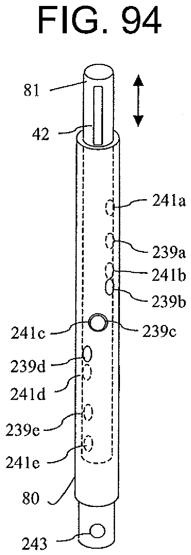

Further, as illustrated in FIGS. 92 to 94, it is possible to slide the outer cylinder 80 or the inner cylinder 81 in the upper and lower direction (axial direction) so as to form communication portions for selectively communicating the outer cylinder holes 239a, 239b, 239c, 239d, and 239e of the outer cylinder 80 and the inner cylinder holes 241a, 241b, 241c, 241d, and 241e of the inner cylinder 81, respectively with each other.

Further, the outer cylinder 80 and the inner cylinder 81 may be relatively moved to each other by combination of sliding and rotation. In this case, the intermediate temperature water 46 can be taken out and flow in various patterns, and hence it is possible to perform the passing control of the intermediate temperature water 46 with higher accuracy.

Further, as illustrated in FIG. 101, it is possible to use the outer cylinder hole of the outer cylinder 80 as an opening portion 87 extended in the height direction (substantially vertical direction), and use the inner cylinder hole of the inner cylinder 81 as a spiral opening portion 88 extended in the height direction (substantially vertical direction) while forming an angle smaller than 360 degrees in the circumferential direction. Through fine control of the rotational angle of the drive motor 35, it is possible to change the height of a communication portion 89 formed of the opening portion 87 of the outer cylinder 80 and the opening portion 88 of the inner cylinder 81 overlapped with each other. In this case, the communication portion 89 formed of the opening portion 87 and the opening portion 88 overlapped with each other can be continuously changed in the height direction (substantially vertical direction), and hence it is possible to accurately take out the intermediate temperature water existing in the hot water storage tank 2 with use of the intermediate temperature water passing pipe 238.

Note that, it is possible to use the outer cylinder hole of the outer cylinder 80 as the spiral opening portion 87 extended in the height direction (substantially vertical direction) while forming an angle smaller than 360 degrees in the circumferential direction, and the inner cylinder hole of the inner cylinder 81 as the opening portion 88 extended in the height direction (substantially vertical direction). Any configuration may be adopted as long as the height of the communication portion 89 formed of the opening portion 87 and the opening portion 88 overlapped with each other can be continuously changed.

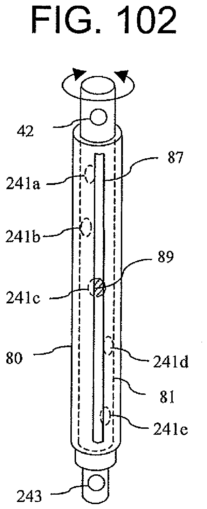

Further, as illustrated in FIG. 102, it is possible to form the multiple inner cylinder holes 241a, 241b, 241c, 241d, and 241e provided at different heights in the inner cylinder 81, and form the rectangular opening portion 87 extended in the height direction (substantially vertical direction) of the outer cylinder 80.

Further, the intermediate temperature water passing pipe 238 may be formed of a material having low thermal conductivity, such as a resin material instead of a material having high thermal conductivity, such as a metal. In this case, heat does not move between the regions of the high temperature water 45, the intermediate temperature water 46, and the low temperature water 47 in the hot water storage tank 2 through the intermediate temperature water passing pipe 238 as a thermal conductor. Thus, the temperature decrease of the high temperature water 45 is prevented, with the result that the lack of high temperature water can be overcome in the hot water storage tank 2. Further, the temperature increase of the low temperature water 47 is prevented, whereby a high COP is secured.

### Embodiment 11

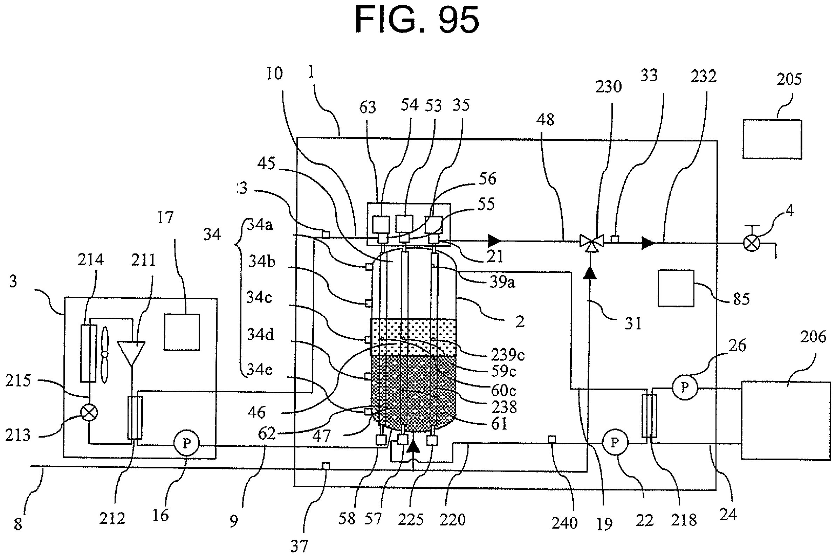

FIG. 95 is a structural diagram of a storage type hot water supply system according to Embodiment 11 of the present invention.

In this embodiment, intermediate temperature water passing pipes 261 and 262 each having the same structure as that of the intermediate temperature water passing pipe 238 of Embodiment 10 are further provided in the hot water storage tank 2.

The pipe 48 provided downstream of the valve for mixing intermediate temperature water is attached to the upper communication portion 21 of the intermediate temperature water passing pipe 238, and the lower intermediate-temperature-water passing pipe 220 is attached to a lower communication portion 257 of the intermediate temperature water passing pipe 261. Further, the high temperature water returning pipe 10 is attached to an upper communication portion 56 of the intermediate temperature water passing pipe 262. Drive motors 35, 53, and 54 are connected to the inner cylinder 81 of each of the intermediate temperature water passing pipes 238, 261, and 262, respectively. The driving of those drive motors 35, 53, and 54 is controlled in response to the signal from an intermediate temperature water passing pipe control device 63.

In the storage type hot water supply system, as illustrated in FIGS. 65 and 69 according to Embodiment 10, high temperature water, intermediate temperature water, and low temperature water can be taken out or allow to flow-in from the intermediate temperature water passing pipes 238, 261, and 262 via at least one communication hole.

In the storage type hot water supply system according to Embodiment 11, the intermediate temperature water passing pipes 238, 261, and 262 are respectively provided for the operating modes including the hot water supply operation, the boiling-up operation, and the heating operation, for example. Therefore, the positions of the communication holes of the intermediate temperature water passing pipes 238, 261, and 262 can be independently changed in accordance with the temperature of the intermediate temperature water generated in each of the operating modes.

Accordingly, even when the hot water supply operation, the boiling-up operation, and the heating operation are simultaneously performed, the intermediate temperature water 46 of a temperature approximate to a required hot water supply temperature in the hot water supply operation can be taken out from the hot water storage tank 2. Further, the intermediate temperature water generated through the boiling-up operation and the intermediate temperature water generated through the heating operation are allowed to flow into the hot water storage tank 2 at the positions of the intermediate temperature water 46, at which the temperatures of the intermediate temperature water 46 are proximate to the temperatures of the intermediate temperature water thus generated, respectively.

Note that, two intermediate temperature water passing pipes may be provided so that one of the intermediate temperature water passing pipes is used for any one of the hot water supply operation, the boiling-up operation, and the heating operation, and the other intermediate temperature water passing pipe is commonly used for rest two of the hot water supply operation, the boiling-up operation, the heating operation.

### Embodiment 12

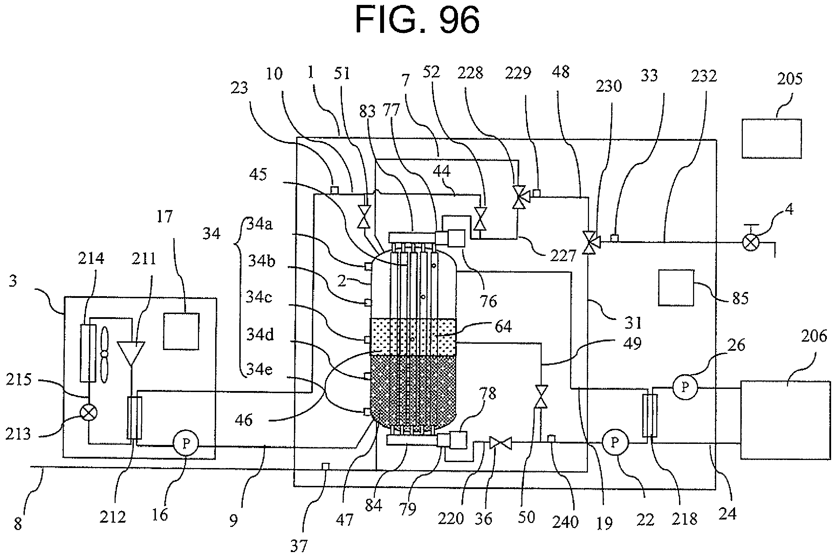

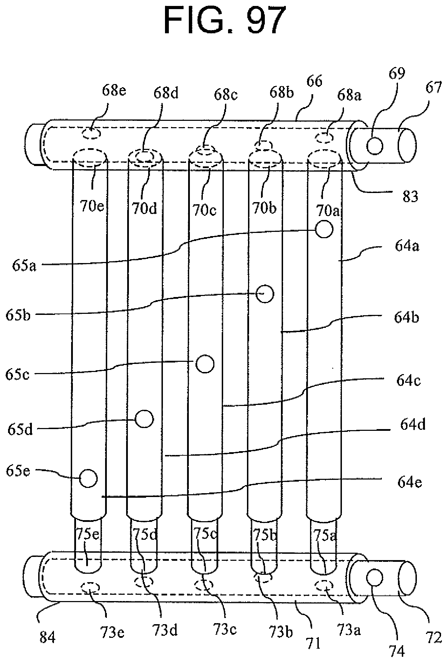

FIGS. 96 and 97 are structural diagrams of a storage type hot water supply system according to Embodiment 12 of the present invention.

In Embodiment 12, multiple parallel cylinders 64a, 64b, 64c, 64d, and 64e are provided with holes (opening portions) 65a, 65b, 65c, 65d, and 65e positioned differently in the height direction (vertical direction) such that the communication portion existing at the position of the intermediate temperature water 46 in the hot water storage tank 2 may be selected so as to change the height of the communication portion.

The parallel cylinders 64a, 64b, 64c, 64d, and 64e are coupled to an upper coupling pipe 83 and a lower coupling pipe 84, and communicated with the upper intermediate-temperature-water passing pipe 227 and the lower intermediate-temperature-water passing pipe 220 via an upper communication portion 77 and a lower communication portion 279.

The upper coupling pipe 83 has a structure obtained by an outer cylinder portion 66 and an inner cylinder portion 67 overlapped with each other. Through rotation of a drive motor 76, it is possible to respectively communicate at least one of outer cylinder holes 70a, 70b, 70c, 70d, and 70e formed in the outer cylinder portion 66 and at least one of inner cylinder holes 68a, 68b, 68c, 68d, and 68e formed in the inner cylinder portion 67 with each other, and possible to block all the respective communications.

The lower coupling pipe 84 has a structure obtained by an outer cylinder portion 71 and an inner cylinder portion 72 overlapped with each other. Through rotation of a drive motor 78, it is possible to respectively communicate at least one of outer cylinder holes 75a, 75b, 75c, 75d, and 75e formed in the outer cylinder portion 71 and at least one of inner cylinder holes 73a, 73b, 73c, 73d, and 73e formed in the inner cylinder portion 72 with each other, and possible to block all the respective communications.

Note that, the pipe body is constituted by the parallel cylinders 64a, 64b, 64c, 64d, and 64e provided in parallel at equal intervals.

Further, a hole selector for selecting a hole through which hot and cold water flows is constituted by the upper coupling pipe 83, the lower coupling pipe 84, and drive motors 76 and 78.

For example, when the intermediate temperature water 46 is taken out from the hot water storage tank 2 in the hot water supply operation, the inner cylinder portion 67 is rotated with use of the drive motor 76 so that the outer cylinder hole 70c and the inner cylinder hole 68c are communicated with each other, and the intermediate temperature water 46 can be taken out through the hole 65c of the cylinder 64c, which is positioned at the height of the intermediate temperature water 46, and an upper communication hole 69.

Further, for example, when the intermediate temperature water generated through the heating operation is allowed to flow into the intermediate temperature water 46 in the hot water storage tank 2, the inner cylinder portion 72 is rotated with use of the drive motor 78 so that the outer cylinder hole 75c and the inner cylinder hole 73c are communicated with each other, and the intermediate temperature water 46 can be taken out through the hole 65c of the cylinder 64c, which is positioned at the height of the intermediate temperature water 46, and an lower communication hole 74.

The intermediate temperature water 46 can be taken out in the same manner, when the intermediate temperature water generated at the activation of the boiling-up operation is allowed to flow into the intermediate temperature water 46 in the hot water storage tank 2.

In the storage type hot water supply system according to Embodiment 12, it is possible to change the height of the communication portion in the height direction in accordance with the height of the intermediate temperature water 46 existing in the hot water storage tank 2, to thereby take out the intermediate temperature water 46 and allow the same to flow thereinto with accuracy.

Further, the lengths of the inner cylinder portions 67 and 72 subjected to rotational operation can be reduced. As a result, it is possible to reduce the rotational friction and the power consumption of the drive motors 76 and 78, and to increase the accuracy of defining the region of the rotational angle.

Note that, while the five parallel cylinders 64a, 64b, 64c, 64d, and 64e are exemplarily illustrated, the number of cylinders is arbitrary.

Further, while the respective inner cylinder portions 67 and 72 of the upper coupling pipe 83 and the lower coupling pipe 84 are rotated, the inner cylinder portions 67 and 72 may be slid so as to communicate the outer cylinder holes 70a, 70b, 70c, 70d, and 70e with the inner cylinder holes 68a, 68b, 68c, 68d, and 68e each other.

Still further, the intermediate temperature water may be simultaneously passed through the coupling pipes 83 and 84 and the parallel cylinders 64a, 64b, 64c, 64d, and 64e with use of two or more parallel cylinders 64a, 64b, 64c, 64d, and 64e.

The pipe body according to Embodiment 12, which is constituted by the multiple parallel cylinders 64a, 64b, 64c, 64d, and 64e provided in parallel, also has the same functions as those of the inner cylinder 81 and the outer cylinder 80 of Embodiments 10 and 11.

As described above, the parallel cylinders 64a, 64b, 64c, 64d, and 64e are compatible with each other so as to be used in any cases of the boiling-up operation, the heating operation, and the hot water supply operation.

Note that, in Embodiments described above, there is described the case where the heat pump unit 3 is used as a heater. However, the heater is not limited to the heat pump unit 3, and gas or an electric heater may be used.

Further, there is described the case where carbon dioxide is used as a refrigerant used in the heat pump unit 3. However, the refrigerant is not limited to carbon dioxide, and hydrocarbon or chlorofluorocarbon as other natural refrigerants may be used.

Further, the water intake tube 38 may be formed of a material having low thermal conductivity, such as a resin material instead of a material having high thermal conductivity, such as a metal. When the resin material is used to form the water intake tube 38, heat is not likely to move between the regions of the high temperature water 45, the intermediate temperature water 46, and the low temperature water 47 in the hot water storage tank 2 through the water intake tube 38. Thus, the temperature decrease of the high temperature water 45 is prevented, with the result that the lack of high temperature water can be reduced in the hot water storage tank 2. Further, the temperature increase of the low temperature water 47 is prevented, whereby a high COP is secured.

## Claims

1. A storage type hot water supply system, comprising:
a hot water storage tank (2) for storing hot and cold water;
a heating means for heating the hot and cold water fed from the hot water storage tank (2);
a hot water tap (4) to which the hot and cold water taken out to the exterior of the hot water storage tank (2) is guided;
a hot water supply temperature sensor (33) for detecting a temperature of the hot and cold water fed to the hot water tap (4); and
a hot water outlet pipe (7) which is connected at one end thereof to the top of the hot water storage tank (2) and through which a high temperature water flows out;
**characterised by** further comprising:
a water intake tube body (38) is provided in the hot water storage tank (2) while extended in an upper and lower direction, for guiding the hot and cold water to an exterior;
wherein the water intake tube body is provided with at least an upper water-intake hole (40) formed near a top of the hot water storage tank (2) and an intermediate water-intake hole (43) formed lower than the upper water-intake hole (40),
wherein high temperature water (15) can be taken out from the upper water-intake hole (40), and intermediate temperature water (16) can be taken from the intermediate water-intake hole (43) simultaneously
therewith,
a water flow pipe (27) which is connected at one end thereof to the water intake tube body and through which the hot and cold water taken out to the exterior of the hot water storage tank (2) flows;
wherein the high temperature water flowing through the hot water outlet pipe (7) and the hot and cold water flowing through the water flow pipe (27) are mixed with each other so as to control the temperature of the hot and cold water fed to the hot water tap (4) based on the temperature detected by means of the hot water supply temperature sensor (33).

2. A storage type hot water supply system according to claim 1, further comprising a hot water supply pipe (31) which is connected at one end thereof to a bottom of the hot water storage tank (2) and bisected from a water supply pipe (8) for feeding low temperature water to the bottom of the hot water storage tank (2), and through which the low temperature water flows,
**characterized in that**
the hot and cold water taken out to the exterior of the hot water storage tank (2) through the water flow pipe (27) and the low temperature water flowing through the hot water supply pipe (31) are mixed with each other so as to control the temperature of the hot and cold water fed to the hot water tap (4) based on the temperature detected by means of the hot water supply temperature sensor (33).

3. A storage type hot water supply system according to any one of claims 1 to 2, **characterized in that**
the upper water-intake hole (40) and the intermediate water-intake hole (43) are different in opening area from each other.

4. A storage type hot water supply system according to any one of claims 1 to 3, **characterized in that**
the upper water-intake hole (40) and the intermediate water-intake hole (43) are different in number from each other.

5. A storage type hot water supply system according to any one of claims 1 to 2, **characterized in that**:
the water intake tube body comprises:
an outer cylinder (25) provided with an upper hole portion (39a) and an intermediate hole portion (39b), and
an inner cylinder (26) provided inside the outer cylinder (25) while being overlapped therewith and provided with an upper hole portion (41a) and an intermediate hole portion (41b);
the upper water-intake hole (40) comprises the upper hole portion (39a) of the outer cylinder (25), and the upper hole portion (41a) of the inner cylinder (26);
the intermediate water-intake hole (43) comprises:
the intermediate hole portion (39b) of the outer cylinder (25), and the intermediate hole portion (41b) of the inner cylinder (26); and
opening areas of the upper water-intake hole (40) and the intermediate water-intake hole (43) are adjusted owing to at least one of the outer cylinder (25) and the inner cylinder (26) which is relatively moved in at least one of a circumferential direction or an axial direction so as to change degrees of overlapping of the upper hole portion (39a) of the outer cylinder (25) and the upper hole portion (41a) of the inner cylinder (26), and of the intermediate hole portion (39b) of the outer cylinder (25) and the intermediate hole portion (41b) of the inner cylinder (26).

6. A storage type hot water supply system according to claim 5,
**characterized in that**:
each of the outer cylinder (25) and the inner cylinder (26) is provided with a lower hole portion constituting a lower water-intake hole (12c) formed at a position corresponding to a lower side of the hot water storage tank (2); and
opening areas of an upper water-intake hole (12a), an intermediate water-intake hole (12b), and the lower water-intake hole (12c) are adjusted owing to the outer cylinder (25) and the inner cylinder (26) which are relatively moved to each other so as to change degrees of overlapping of the upper hole portion (39a) of the outer cylinder (25) with the upper hole portion (41a) of the inner cylinder (26), of the intermediate hole portion (39b) of the outer cylinder (25) with the intermediate hole portion (41b) of the inner cylinder (26), and of a lower hole portion (39c) of the outer cylinder (25) with a lower hole portion (41c) of the inner cylinder (26).

7. A storage type hot water supply system according to claim 5 or 6,
**characterized in that**:
the outer cylinder (25) and the inner cylinder (26) are provided with multiple intermediate hole portions (39b, 39d) and multiple intermediate hole portions (41b, 41d) in an upper and lower direction thereof, respectively; and
the intermediate water-intake hole (12b) is displaced in the upper and lower direction in accordance with the relative movement of the outer cylinder (25) and the inner cylinder (26).

8. A storage type hot water supply system according to any one of claims 1 to 2, **characterized in that**:
the water intake tube body comprises multiple cylinders (11e, 11d, 11c, 11b, 11a) provided in parallel and with water intake holes (12a, 12b, 12c, 12d, 12e) at different heights, respectively; and
the water intake holes (12a, 12b, 12c, 12d, 12e) of the water intake tube body are selected in accordance with a movement of at least one of inner cylinder portions (14) slidably and respectively provided inside outer cylinder portions (13) to which both end portions of the cylinders (11e, 11d, 11c, 11b, 11a) are coupled, and having communication holes (18a, 18b, 18c, 18d, 18e) formed correspondingly to the cylinders (11e, 11d, 11c, 11b, 11a).

9. A storage type hot water supply system according to any one of claims 1 to 2, **characterized in that**
the water intake tube body comprises:
an outer cylinder (25) provided with an opening portion in a side surface thereof; and
an inner cylinder (26) provided inside the outer cylinder (25) and provided with an opening portion in a side surface thereof, one of the opening portion of each of the outer cylinder (25) and the inner cylinder (26) being opened while vertically extended, another opening portion of each of the outer cylinder (25) and the inner cylinder (26) being spirally opened, and one of the outer cylinder (25) and the inner cylinder (26) being rotated about an axis thereof.

10. A storage type hot water supply system according to any one of claims 1 to 2, **characterized in that**
the water intake tube body comprises:
an outer cylinder (25) provided with an opening portion in a side surface thereof; and
an inner cylinder (26) provided inside the outer cylinder (25) and provided with an opening portion in a side surface thereof, both the opening portions of the outer cylinder (25) and the inner cylinder (26) being spirally opened, and one of the outer cylinder (25) and the inner cylinder (26) being rotated about an axis thereof.

11. A storage type hot water supply system according to claim 1, further comprising:
hot water temperature sensors (34a, 34b, 34c, 34d, 34e) attached to the hot water storage tank (2), for detecting a temperature of the hot and cold water stored in the hot water storage tank (2); and
a pipe body which is provided while vertically extended in the hot water storage tank (2) and through which the hot and cold water flows from a communication portion into the hot water storage tank (2) so as to regulate a vertical position of the communication portion based on a temperature detected by means of each of the hot water temperature sensors (34a, 34b, 34c, 34d, 34e),
**characterized in that**:
the pipe body comprises an outer cylinder (80) provided with an opening portion in a side surface thereof and an inner cylinder (81) provided inside the outer cylinder (80) and provided with an opening portion in a side surface thereof; and
the communication portion is formed owing to at least one of the outer cylinder (80) and the inner cylinder (81) which is relatively moved in at least one of a circumferential direction and an axial direction so as to be overlapped the opening portion of the inner cylinder (81) and the opening portion of the outer cylinder (80) with each other.

12. A storage type hot water supply system according to claim 11,
**characterized in that**:
multiple ones of the opening portion of each of the outer cylinder (80) and the inner cylinder (81) are provided at positions vertically different from each other; and
at least one another opening portion of each of the outer cylinder (80) and the inner cylinder (81) is provided.

13. A storage type hot water supply system according to claim 11,
**characterized in that**:
one of the opening portion (87) of each of the outer cylinder (80) and the inner cylinder (81) is opened while vertically extended; and
multiple another opening portions of each of the outer cylinder (80) and the inner cylinder (81) are provided at positions vertically different from each other.

14. A storage type hot water supply system according to claim 11,
**characterized in that**:
one of the opening portion (87) of each of the outer cylinder (80) and the inner cylinder (81) is opened while vertically extended; and
another opening portion of each of the outer cylinder (80) and the inner cylinder (81) is spirally opened.

15. A storage type hot water supply system according to claim 11,
**characterized in that**
an opening area of the communication portion is adjusted through adjustment of degrees of overlapping of the opening portion of the outer cylinder (80) and the opening portion of the inner cylinder (81).

16. A storage type hot water supply system according to any one of claims 11 to 15, **characterized in that**
the water intake tube body and the pipe body are formed of the same component and compatible with each other.

17. A storage type hot water supply system according to any one of claims 1 to 16, **characterized in that**
the heating means comprises a heat pump unit (3) using carbon dioxide.

## Patentansprüche

1. Speicherartiges Heißwasser-Versorgungssystem, umfassend:
einen Heißwasser-Speichertank (2) zum Speichern von heißem und kaltem Wasser;
ein Erwärmungselement zum Erwärmen des von dem Heißwasser-Speichertank (2) zugeführten heißen und kalten Wassers;
einen Heißwasser-Abflusshahn (4), an welchen das aus dem Heißwasser-Speichertank (2) nach Außen entnommene heiße und kalte Wasser geleitet wird;
einen Heißwasser-Versorgung-Temperatursensor (33) zum Erfassen einer Temperatur von dem an den Heißwasser-Abflusshahn (4) geleiteten heißen und kalten Wasser; und
ein Heißwasser-Auslassrohr (7), welches mit einem Ende mit der Oberseite des Heißwasser-Speichertanks (2) verbunden ist, und durch welches Wasser mit hoher Temperatur herausfließt;
ferner **gekennzeichnet durch**:
einen Wassereinlass-Röhrenkörper (38), welcher im Heißwasser-Speichertank (2) bereitgestellt ist, wobei er sich in eine Richtung nach oben und unten erstreckt, zum Leiten des heißen und kalten Wassers an die Außenseite;
wobei der Wassereinlass-Röhrenkörper mit zumindest einem oberen Wassereinlassloch (40), welches in der Nähe einer Oberseite von dem Heißwasser-Speichertank (2) ausgebildet ist, und einem mittleren Wassereinlassloch (43), welches tiefer als das obere Wassereinlassloch (40) ausgebildet ist, vorgesehen ist,
wobei Wasser mit einer hohen Temperatur (15) aus dem oberen Wassereinlassloch (40) entnehmbar ist, und gleichzeitig hierzu Wasser mit einer mittleren Temperatur (16) aus dem mittleren Wassereinlassloch (43) entnehmbar ist,
ein Wasserleitungsrohr (27), welches mit einem Ende mit dem Wassereinlass-Röhrenkörper verbunden ist, und durch welches das aus dem Heißwasser-Speichertank (2) nach Außen entnommene heiße und kalte Wasser fließt;
wobei das Wasser mit hoher Temperatur, welches durch das Heißwasser-Auslassrohr (7) fließt, und das heiße und kalte Wasser, welches durch das Wasserleitungsrohr (27) fließt, derart miteinander gemischt werden, dass die Temperatur des heißen und kalten Wassers, welches an den Abflusshahn (4) geleitet wird, basierend auf der Temperatur geregelt wird, welche mittels des Heißwasser-Versorgung-Temperatursensors (33) erfasst wird.

2. Speicherartiges Heißwasser-Versorgungssystem nach Anspruch 1, ferner umfassend ein Heißwasser-Versorgungsrohr (31), welches mit einem Ende mit einer Unterseite von dem Heißwasser-Speichertank (2) verbunden ist und von einem Wasserversorgungsrohr (8) zum Zuführen von Wasser mit niedriger Temperatur an die Unterseite des Heißwasser-Speichertanks (2) abzweigt, und durch welches das Wasser mit niedriger Temperatur fließt,
**dadurch gekennzeichnet, dass**
das heiße und kalte Wasser, welches durch das Wasserleitungsrohr (27) aus dem Heißwasser-Speichertank (2) nach Außen entnommen ist, und das Wasser mit niedriger Temperatur, welches durch das Heißwasser-Versorgungsrohr (31) fließt, derart miteinander gemischt werden, dass die Temperatur des heißen und kalten Wassers, welches an den Abflusshahn (4) geleitet wird, basierend auf der Temperatur geregelt wird, welche mittels des Heißwasser-Versorgung-Temperatursensors (33) erfasst wird.

3. Speicherartiges Heißwasser-Versorgungssystem nach einem der Ansprüche 1 bis 2,
**dadurch gekennzeichnet, dass**
das obere Wassereinlassloch (40) und das mittlere Wassereinlassloch (43) einen zueinander unterschiedlichen Öffnungsbereich haben.

4. Speicherartiges Heißwasser-Versorgungssystem nach einem der Ansprüche 1 bis 3,
**dadurch gekennzeichnet, dass**
das obere Wassereinlassloch (40) und das mittlere Wassereinlassloch (43) mit unterschiedlicher Anzahl vorgesehen sind.

5. Speicherartiges Heißwasser-Versorgungssystem nach einem der Ansprüche 1 bis 2,
**dadurch gekennzeichnet, dass**:
der Wassereinlass-Röhrenkörper enthält:
einen Außenzylinder (25), welcher mit einem oberen Lochabschnitt (39a) und einem mittleren Lochabschnitt (39b) versehen ist, und
einen Innenzylinder (26), welcher innerhalb des Außenzylinders (25) bereitgestellt ist, wobei er sich hiermit überlappt und mit einem oberen Lochabschnitt (41a) und einem mittleren Lochabschnitt (41b) versehen ist;
wobei das obere Wassereinlassloch (40) den oberen Lochabschnitt (39a) von dem Außenzylinder (25) und den oberen Lochabschnitt (41a) von dem Innenzylinder (26) enthält; wobei das mittlere Wassereinlassloch (43) enthält:
den mittleren Lochabschnitt (39b) von dem Außenzylinder (25) und den mittleren Lochabschnitt (41b) von dem Innenzylinder (26); und
wobei Öffnungsbereiche von dem oberen Wassereinlassloch (40) und dem mittleren Wassereinlassloch (43) basierend auf zumindest einem von dem Außenzylinder (25) und dem Innenzylinder (26) eingestellt werden, welcher in zumindest einer von einer Umfangsrichtung oder einer Axialrichtung derart in Relation bewegt wird, dass Überlappungsgrade von dem oberen Lochabschnitt (39a) von dem Außenzylinder (25) und dem oberen Lochabschnitt (41a) von dem Innenzylinder (26), und von dem mittleren Lochabschnitt (39b) von dem Außenzylinder (25) und dem mittleren Lochabschnitt (41b) von dem Innenzylinder (26) geändert werden.

6. Speicherartiges Heißwasser-Versorgungssystem nach Anspruch 5, **dadurch gekennzeichnet, dass**:
jeder von dem Außenzylinder (25) und dem Innenzylinder (26) mit einem unteren Lochabschnitt versehen ist, welcher ein unteres Wassereinlassloch (12c) bildet, welches an einer Position ausgebildet ist, welche einer unteren Seite von dem Heißwasser-Speichertank (2) entspricht; und
Öffnungsbereiche von einem oberen Wassereinlassloch (12a), einem mittleren Wassereinlassloch (12b) und dem unteren Wassereinlassloch (12c) basierend auf dem Außenzylinder (25) und dem Innenzylinder (26) eingestellt werden, welche derart in Relation zueinander bewegt werden, dass Überlappungsgrade zwischen dem oberen Lochabschnitt (39a) von dem Außenzylinder (25) und dem oberen Lochabschnitt (41a) von dem Innenzylinder (26), zwischen dem mittleren Lochabschnitt (39b) von dem Außenzylinder (25) und dem mittleren Lochabschnitt (41b) von dem Innenzylinder (26), und zwischen einem unteren Lochabschnitt (39c) von dem Außenzylinder (25) und einem unteren Lochabschnitt (41c) von dem Innenzylinder (26) geändert werden.

7. Speicherartiges Heißwasser-Versorgungssystem nach Anspruch 5 oder 6, **dadurch gekennzeichnet, dass**:
der Außenzylinder (25) und der Innenzylinder (26) jeweils mit mehreren mittleren Lochabschnitten (39b, 39d) und mehreren mittleren Lochabschnitten (41b, 41d) in einer Richtung von oben nach unten versehen sind; und
das mittlere Wassereinlassloch (12b) in Übereinstimmung mit der relativen Bewegung zwischen dem Außenzylinder (25) und dem Innenzylinder (26) in der Richtung von oben nach unten versetzt wird.

8. Speicherartiges Heißwasser-Versorgungssystem nach einem der Ansprüche 1 bis 2,
**dadurch gekennzeichnet, dass**:
der Wassereinlass-Röhrenkörper mehrere Zylinder (11e, 11d, 11c, 11b, 11a) enthält, welche jeweils parallel bereitgestellt sind und mit Wassereinlasslöchern (12a, 12b, 12c, 12d, 12e) auf unterschiedlichen Höhen versehen sind; und
die Wassereinlasslöcher (12a, 12b, 12c, 12d, 12e) von dem Wassereinlass-Röhrerikörper in Übereinstimmung mit einer Bewegung von zumindest einem von den Innenzylinder-Abschnitten (14) ausgewählt werden, welche verschiebbar sind und jeweils innerhalb von Außenzylinder-Abschnitten (13) bereitgestellt sind, mit welchen beide Endabschnitte von den Zylindern (11e, 11d, 11c, 11b, 11a) gekoppelt sind, und Verbindungslöcher (18a, 18b, 18c, 18d, 18e) enthalten, welche in Übereinstimmung mit den Zylindern (11e, 11d, 11c, 11b, 11a) ausgebildet sind.

9. Speicherartiges Heißwasser-Versorgungssystem nach einem der Ansprüche 1 bis 2,
**dadurch gekennzeichnet, dass**:
der Wassereinlass-Röhrerikörper enthält:
einen Außenzylinder (25), welcher an seiner Seitenfläche mit einem Öffnungsabschnitt versehen ist; und
einen Innenzylinder (26), welcher innerhalb des Außenzylinders (25) bereitgestellt ist und an seiner Seitenfläche mit einem Öffnungsabschnitt versehen ist, wobei einer der Öffnungsabschnitte von jeweils dem Außenzylinder (25) und dem Innenzylinder (26) sich vertikal erstreckend geöffnet ist, wobei ein weiterer Öffnungsabschnitt von jeweils dem Außenzylinder (25) und dem Innenzylinder (26) spiralförmig geöffnet ist, und wobei einer von dem Außenzylinder (25) und dem Innenzylinder (26) um seine Achse umdreht wird.

10. Speicherartiges Heißwasser-Versorgungssystem nach einem der Ansprüche 1 bis 2,
**dadurch gekennzeichnet, dass**:
der Wassereinlass-Röhrenkörper enthält:
einen Außenzylirider (25), welcher an seiner Seitenfläche mit einem Öffnungsabschnitt versehen ist; und
einen Innenzylinder (26), welcher innerhalb des Außenzylinders (25) bereitgestellt ist und an seiner Seitenfläche mit einem Öffnungsabschnitt versehen ist, wobei beide Öffnungsabschnitte von dem Außenzylinder (25) und dem Innenzylinder (26) spiralförmig geöffnet sind, und wobei einer von dem Außenzylinder (25) und dem Innenzylinder (26) um seine Achse umdreht wird.

11. Speicherartiges Heißwasser-Versorgungssystem nach Anspruch 1, ferner umfassend:
Heißwasser-Temperatursensoren (34a, 34b, 34c, 34d, 34e), welche am Heißwasser-Speichertank (2) angebracht sind, zum Erfassen einer Temperatur des im Heißwasser-Speichertank (2) gespeicherten heißen und kalten Wassers; und
einen Rohrkörper, welcher sich vertikal im Heißwasser-Speichertank (2) erstreckend bereitgestellt ist, und durch welchen das heiße und kalte Wasser von einem Verbindungsabschnitt in den Heißwasser-Speichertank (2) fließt, um somit eine vertikale Position von dem Verbindungsabschnitt basierend auf einer Temperatur zu regeln, welche von jedem von den Heißwasser-Temperatursensoren (34a, 34b, 34c, 34d, 34e) erfasst wird,
**dadurch gekennzeichnet, dass**:
der Rohrkörper einen Außenzylinder (80), welcher an seiner Seitenfläche mit einem Öffnungsabschnitt versehen ist, und einen Innenzylinder (81), welcher innerhalb des Außenzylinders (80) bereitgestellt ist und an seiner Seitenfläche mit einem Öffnungsabschnitt versehen ist, enthält; und
der Verbindungsabschnitt basierend auf zumindest einem von dem Außenzylinder (80) und dem Innenzylinder (81) ausgebildet ist, welcher in zumindest einer von einer Umfangsrichtung und einer Axialrichtung derart in Relation bewegt wird, dass er sich in Relation zum Öffnungsabschnitt von dem Innenzylinder (81) und dem Öffnungsabschnitt von dem Außenzylinder (80) überlappt.

12. Speicherartiges Heißwasser-Versorgungssystem nach Anspruch 11, **dadurch gekennzeichnet, dass**:
mehrere der Öffnungsabschnitte von jeweils dem Außenzylinder (80) und dem Innenzylinder (81) an Positionen bereitgestellt sind, welche sich in vertikaler Richtung zueinander unterscheiden; und
zumindest ein weiterer Öffnungsabschnitt von jeweils dem Außenzylinder (80) und dem Innenzylinder (81) bereitgestellt ist.

13. Speicherartiges Heißwasser-Versorgungssystem nach Anspruch 11, **dadurch gekennzeichnet, dass**:
einer der Öffnungsabschnitte (87) von jeweils dem Außenzylinder (80) und dem Innenzylinder (81) sich vertikal erstreckend geöffnet ist; und
mehrere weitere Öffnungsabschnitte von jeweils dem Außenzylinder (80) und dem Innenzylinder (81) an Positionen bereitgestellt sind, welche in vertikaler Richtung zueinander unterschiedlich sind.

14. Speicherartiges Heißwasser-Versorgungssystem nach Anspruch 11, **dadurch gekennzeichnet, dass**:
einer der Öffnungsabschnitte (87) von jeweils dem Außenzylinder (80) und dem Innenzylinder (81) sich vertikal erstreckend geöffnet ist; und
ein weiterer Öffnungsabschnitt von jeweils dem Außenzylinder (80) und dem Innenzylinder (81) spiralförmig geöffnet ist.

15. Speicherartiges Heißwasser-Versorgungssystem nach Anspruch 11, **dadurch gekennzeichnet, dass**:
ein Öffnungsbereich von dem Verbindungsabschnitt über eine Einstellung von Überlappungsgraden zwischen dem Öffnungsabschnitt von dem Außenzylinder (80) und dem Öffnungsabschnitt von dem Innenzylinder (81) eingestellt wird.

16. Speicherartiges Heißwasser-Versorgungssystem nach einem der Ansprüche 11 bis 15,
**dadurch gekennzeichnet, dass**:
der Wassereinlass-Röhrenkörper und der Rohrkörper aus dem gleichen Bauteil ausgebildet sind und zueinander kompatibel sind.

17. Speicherartiges Heißwasser-Versorgungssystem nach einem der Ansprüche 1 bis 16,
**dadurch gekennzeichnet, dass**:
das Erwärmungselement eine Wärmepumpeneinheit (3) unter Verwendung von Kohlendioxid enthält.

## Revendications

1. Système d'alimentation d'eau chaude du type à stockage, comprenant :
un réservoir de stockage d'eau chaude (2) pour stocker de l'eau chaude et froide ;
un moyen de chauffage pour chauffer l'eau chaude et froide alimentée depuis le réservoir de stockage d'eau chaude (2) ;
un robinet d'eau chaude (4) auquel l'eau chaude et froide sortie vers l'extérieur du réservoir d'eau chaude (2) est guidée ;
un capteur de température d'alimentation d'eau chaude (33) pour détecter une température de l'eau chaude et froide alimentée au robinet d'eau chaude (4) ; et
un tube de sortie d'eau chaude (7) qui est connecté à l'une de ses extrémités au sommet du réservoir de stockage d'eau chaude (2) et via lequel s'écoule de l'eau à haute température ;
**caractérisé en ce qu'**il comprend en outre :
un corps de tube d'admission d'eau (38) est prévu dans le réservoir de stockage d'eau chaude (2) tout en s'étendant dans une direction montante et descendante, pour guider l'eau chaude et froide vers l'extérieur ;
dans lequel le corps de tube d'admission d'eau est doté d'au moins un trou d'admission d'eau supérieur (40) formé au voisinage d'un sommet du réservoir de stockage d'eau chaude (2) et d'un trou d'admission d'intermédiaire (43) formé plus bas que le trou d'admission d'eau supérieur (40),
dans lequel de l'eau à haute température (15) peut être sortie depuis le trou d'admission d'eau supérieur (40), et de l'eau à température intermédiaire (16) peut être sorti depuis le trou d'admission d'eau intermédiaire (43) simultanément avec celle-ci,
un tube d'écoulement d'eau (27) qui est connecté à l'une de ses extrémités au corps de tube d'admission d'eau et à travers lequel l'eau chaude et froide sortie vers l'extérieur du réservoir de stockage d'eau (2) s'écoule ;
dans lequel l'eau à haute température qui s'écoule à travers le tube de sortie d'eau chaude (7) et l'eau chaude et froide qui s'écoule à travers le tube d'écoulement d'eau (27) sont mélangées ensemble de manière à contrôler la température de l'eau chaude et froide alimentée au robinet d'eau chaude (4) sur la base de la température détectée au moyen du détecteur de température d'alimentation d'eau chaude (33).

2. Système d'alimentation d'eau chaude du type à stockage selon la revendication 1, comprenant en outre un tube d'alimentation d'eau chaude (31) qui est connecté à l'une de ses extrémités à un fond du réservoir de stockage d'eau chaude (2) et qui est recoupé par un tube d'alimentation d'eau (8) pour alimenter de l'eau à basse température vers le fond du réservoir de stockage d'eau chaude (2), et à travers lequel l'eau à basse température s'écoule,
**caractérisé en ce que**
l'eau chaude et froide sortie vers l'extérieur du réservoir de stockage d'eau chaude (2) via le tube d'écoulement d'eau (27) et l'eau à basse température qui s'écoule à travers le tube d'alimentation d'eau chaude (31) sont mélangées l'une avec l'autre de manière à contrôler la température de l'eau chaude et froide alimentée au robinet d'eau chaude (4) sur la base de la température détectée au moyen du détecteur de température d'alimentation d'eau chaude (33).

3. Système d'alimentation d'eau chaude du type à stockage selon l'une quelconque des revendications 1 et 2, **caractérisé en ce que** le trou d'admission d'eau supérieur (40) et le trou d'admission d'eau intermédiaire (43) sont différents l'un de l'autre quant à leur superficie d'ouverture.

4. Système d'alimentation d'eau chaude du type à stockage selon l'une quelconque des revendications 1 à 3, **caractérisé en ce que** le trou d'admission d'eau supérieur (40) et le trou d'admission d'intermédiaire (43) sont différents l'un de l'autre quant à leur nombre.

5. Système d'alimentation d'eau chaude du type à stockage selon l'une quelconque des revendications 1 et 2, **caractérisé en ce que** :
le corps de tube d'admission d'eau comprend :
un cylindre extérieur (25) pourvu d'une portion de trou supérieur (39a) et d'une portion de trou intermédiaire (39b), et
un cylindre intérieur (26) prévu à l'intérieur du cylindre extérieur (25) tout en étant en chevauchement avec celui-ci et pourvu d'une portion de trou supérieur (41a) et d'une portion de trou intermédiaire (41b) ;
le trou d'admission d'eau supérieur (40) comprend la portion de trou supérieur (39a) du cylindre extérieur (25), et la portion de trou supérieur (41a) du cylindre intérieur (26) ;
le trou d'admission d'intermédiaire (43) comprend :
la portion de trou intermédiaire (39b) du cylindre extérieur (25), et la portion de trou intermédiaire (41b) du cylindre intérieur (26) ; et
les superficies d'ouverture du trou d'admission d'eau supérieur (40) et du trou d'admission d'intermédiaire (43) sont ajustées du fait que l'un au moins du cylindre extérieur (25) et du cylindre intérieur (26) est déplacé relativement dans au moins une direction parmi une direction circonférentielle et une direction axiale de manière à changer les degrés de chevauchement de la portion de trou supérieur (39a) du cylindre extérieur (25) et de la portion de trou supérieur (41a) du cylindre intérieur (26), et de la portion de trou intermédiaire (39b) du cylindre extérieur (25) et de la portion de trou intermédiaire (41b) du cylindre intérieur (26).

6. Système d'alimentation d'eau chaude du type à stockage selon la revendication 5,
**caractérisé en ce que** :
chacun du cylindre extérieur (25) et du cylindre intérieur (26) est pourvu d'une portion de trou inférieur constituant un trou d'admission d'eau inférieur (12c) formé à une position correspondant à un côté inférieur du réservoir de stockage d'eau chaude (2) ; et
des superficies d'ouverture du trou d'admission d'eau supérieur (12a), d'un trou d'admission d'intermédiaire (12b), et du trou d'admission d'eau inférieur (12c) sont ajustées du fait que le cylindre extérieur (25) et le cylindre intérieur (26) sont déplacés relativement l'un par rapport à l'autre de manière à changer les degrés de chevauchement de la portion de trou supérieur (39a) du cylindre extérieur (25) avec la portion de trou supérieur (41a) du cylindre intérieur (26), ou de la portion de trou intermédiaire (39b) du cylindre extérieur (25) avec la portion de trou intermédiaire (41b) du cylindre intérieur (26), et une portion de trou inférieur (39c) du cylindre extérieur (25) avec une portion de trou inférieur (41c) du cylindre intérieur (26).

7. Système d'alimentation d'eau chaude du type à stockage selon la revendication 5 ou 6, **caractérisé en ce que**
le cylindre extérieur (25) et le cylindre intérieur (26) sont pourvus respectivement d'une multiplicité de portions de trous intermédiaires (39b, 39d) et d'une multiplicité de portions de trous intermédiaires (41b, 41d) dans une direction montante et descendante d'eux-mêmes ; et
le trou d'admission d'intermédiaire (12b) est déplacé dans la direction montante et descendante en accord avec le mouvement relatif du cylindre extérieur (25) et du cylindre intérieur (26).

8. Système d'alimentation d'eau chaude du type à stockage selon l'une quelconque des revendications 1 et 2, **caractérisé en ce que** :
le corps de tube d'admission d'eau comprend une multiplicité de cylindres (11e, 11d, 11c, 11b, 11a) prévus en parallèle et avec des trous d'admission d'eau (12a, 12b, 12c, 12d, 12e) à différentes hauteurs, respectivement ; et
les trous d'admission d'eau (12a, 12b, 12c, 12d, 12e) du corps de tube d'admission d'eau sont sélectionnés en accord avec un mouvement d'au moins une des portions de cylindre intérieur (14) en coulissement et prévues respectivement à l'intérieur de portions de cylindre extérieur (13) auxquelles sont couplées les deux portions d'extrémité des cylindres (11e, 11d, 11c, 11b, 11a), et ayant des trous de communication (18a, 18b, 18c, 18d, 18e) formés en correspondance des cylindres (11e, 11b, 11c, 11b, 11a).

9. Système d'alimentation d'eau chaude du type à stockage selon l'une quelconque des revendications 1 et 2, **caractérisé en ce que** le corps de tube d'admission d'eau comprend :
un cylindre extérieur (25) pourvu d'une portion ouverte dans une surface latérale de lui-même ; et
un cylindre intérieur (26) prévu à l'intérieur du cylindre extérieur (25) et pourvu d'une portion ouverte dans une surface latérale de lui-même, l'une des portions ouvertes de chacun du cylindre extérieur (25) et du cylindre intérieur (26) étant ouverte tout en s'étendant verticalement, une autre portion ouverte de chacun du cylindre extérieur (25) et du cylindre intérieur (26) étant ouverte en spirale, et un cylindre parmi le cylindre extérieur (25) et le cylindre intérieur (26) est tourné autour de son axe.

10. Système d'alimentation d'eau chaude du type à stockage selon l'une quelconque des revendications 1 et 2, **caractérisé en ce que** le corps de tube d'admission d'eau comprend :
un cylindre extérieur (25) pourvu d'une portion ouverte dans une surface latérale de lui-même ; et
un cylindre intérieur (26) prévu à l'intérieur du cylindre extérieur (25) et pourvu d'une portion ouverte dans une surface latérale de lui-même, la portion ouverte du cylindre extérieur (25) et la portion ouverte du cylindre intérieur (26) étant toutes deux ouvertes en spirale, et un cylindre parmi le cylindre extérieur (25) et le cylindre intérieur (26) est tourné autour de son axe.

11. Système d'alimentation d'eau chaude du type à stockage selon la revendication 1, comprenant en outre :
des capteurs de température d'eau chaude (34a, 34b, 34c, 34d, 34e) attachés au réservoir de stockage d'eau chaude (2) pour détecter une température de l'eau chaude et froide stockée dans le réservoir de stockage d'eau chaude (2) ; et
un corps de tube qui est prévu de manière à s'étendre verticalement dans le réservoir de stockage d'eau chaude (2) et à travers lequel l'eau chaude et froide s'écoule depuis une portion de communication jusque dans le réservoir de stockage d'eau chaude (2) de manière à réguler une position verticale de la portion de communication sur la base d'une température détectée au moyen de chacun des capteurs de température d'eau chaude (34a, 34b, 34c, 34e),
**caractérisé en ce que**
le corps de tube comprend un cylindre extérieur (80) pourvu d'une portion ouverte dans une surface latérale de lui-même, et un cylindre intérieur (81) prévu à l'intérieur du cylindre extérieur (80) et pourvu d'une portion ouverte dans une surface latérale de lui-même ; et
la portion de communication est formée du fait que l'un au moins du cylindre extérieur (80) et du cylindre intérieur (81) est déplacé relativement dans au moins une direction parmi une direction circonférentielle et une direction axiale de manière à faire chevaucher la portion ouverte du cylindre intérieur (81) et la portion ouverte du cylindre extérieur (80) l'une avec l'autre.

12. Système d'alimentation d'eau chaude du type à stockage selon la revendication 11, **caractérisé en ce que** :
une multiplicité de portions ouvertes de chacun du cylindre extérieur (80) et du cylindre intérieur (81) sont prévues à des positions verticalement différentes les unes des autres ; et
il est prévu au moins une autre portion ouverte dans chacun du cylindre extérieur (80) et du cylindre intérieur (81).

13. Système d'alimentation d'eau chaude du type à stockage selon la revendication 11, **caractérisé en ce que** :
l'une des portions ouvertes (87) de chacun du cylindre extérieur (80) et du cylindre intérieur (81) est ouverte tout en s'étendant verticalement ; et
une multiplicité d'autres portions ouvertes de chacun du cylindre extérieur (80) et du cylindre intérieur (81) sont prévues à des positions verticalement différentes les unes des autres.

14. Système d'alimentation d'eau chaude du type à stockage selon la revendication 11, **caractérisé en ce que** :
l'une des portions ouvertes (87) de chacun du cylindre extérieur (80) et du cylindre intérieur (81) est ouverte tout en s'étendant verticalement ; et
une autre portion ouverte de chacun du cylindre extérieur (80) et du cylindre intérieur (81) est ouverte en spirale.

15. Système d'alimentation d'eau chaude du type à stockage selon la revendication 11, **caractérisé en ce que**
une superficie d'ouverture de la portion de communication est ajustée par ajustement des degrés de chevauchement de la portion ouverte du cylindre extérieur (80) et de la portion ouverte du cylindre intérieur (81).

16. Système d'alimentation d'eau chaude du type à stockage selon l'une quelconque des revendications 11 à 15, **caractérisé en ce que**
le corps de tube d'admission d'eau et le corps de tube sont formés des mêmes composants et sont compatibles l'un avec l'autre.

17. Système d'alimentation d'eau chaude du type à stockage selon l'une quelconque des revendications 1 à 16, **caractérisé en ce que**
le moyen de chauffage comprend une unité de pompe à chaleur (3) utilisant du dioxyde de carbone.
